# EUROPEAN PATENT SPECIFICATION

(11) **EP 0 700 827 B1**
(45) Date of publication and mention of the grant of the patent: **02.11.2005**
(21) Application number: 95116921.8
(22) Date of filing: 18.03.1992
(51) Int. Cl.: B62M 25/04, B62K 23/04, B62M 9/12

(54) **Hand-operated shift actuator for multiple-gear bicycles**
Handbetriebene Schaltvorrichtung für Fahrräder mit mehrgängigem Getriebe
Dispositif de changement de vitesse à commande manuelle pour des bicyclettes à multiples vitesses

(30) Priority: 20.03.1991 US 672431
(43) Date of publication of application: 13.03.1996
(62) Divisional of application: 92910851.2
(73) Proprietor: SRAM CORPORATION, Chicago, IL 60612 (US)
(72) Inventor: Patterson, Sam H., Agoura Hills, CA 91301 (US); Shupe, Jeffery M., Chicago, Illinois 60614 (US); Cheever, John D., Chicago, Illinois 60614 (US)
(74) Representative: Naismith, Robert Stewart

(56) References cited:
- DE-A- 3 012 034
- DE-A- 3 013 008
- DE-A- 3 215 427
- DE-U- 8 536 537
- FR-A- 2 563 174
- GB-A- 2 187 050
- JP-U- 6 213 911
- JP-U- 49 012 643
- JP-U- 57 117 738
- US-A- 3 442 148
- US-A- 3 633 437
- US-A- 4 270 481

## Description

### BACKGROUND OF THE INVENTION

### 1. Field of the Invention

The present invention relates in general to derailleur-type bicycle shifting systems, and more particularly to such a system wherein front and rear derailleur mechanisms are precisely controlled by respective rotatable handgrip shift actuators.

### 2. Description of the Prior Art

There has been a long-felt but previously unfulfilled need in the art for a bicycle derailleur shifting system which does not require that a hand, or least a thumb, be removed from the handlebar during shifting. Many derailleur shifting devices are actuated by levers mounted on the down tube of the frame, while some are mounted on the top tube and others on the handlebar. Such levers mounted on the down tube or the top tube all require that a hand be completely removed from the handlebar during shifting. Some derailleur shifting levers mounted on the handlebar can be actuated by taking a thumb off the handlebar and pushing the lever with the thumb, but this also diminishes control of the bicycle, and is awkward, so most riders simply take their hand off the handlebar to move the shift lever. For both safety and convenience, it is desirable to be able to shift derailleur mechanisms with both hands right on the handlebars. Despite a long-felt need for such a derailleur shifting system, applicant is not aware of any prior art derailleur shifting system where the shifting events can be accomplished with both hands on the handlebar.

Typical prior art derailleur shifting mechanisms which require removal of the hand, or at least the thumb, from the handlebar are disclosed in the following U.S. patents: Ross 4,055,093; Hedrich 4,194,408; Cirami 4,201,095; Bonnard 4,384,864; and Strong 4,548,092.

There has also been a long-felt but previously unfulfilled need in the art for a bicycle derailleur shifting system which is capable of "overshifting," yet which is relatively uncomplicated and inexpensive. Overshifting is movement of the chain beyond the destination sprocket, and then back into alignment with the destination sprocket. It has long been known in the art that such overshifting is desirable during down-shifting events for earlier and smoother shifts. Most derailleur shifting systems do not have any built-in mechanism for accomplishing such overshifting, and require that the rider deliberately move the shifting lever beyond the location of the destination sprocket and then back to the destination sprocket. This requires two rider inputs, one being a determination of the desired extent of overshift, and the other being the time duration of the overshift. Satisfactory overshifting by this means requires considerable skill.

Applicant Patterson is the patentee in two prior U.S. patents, Nos. 4,900,291 and 4,938,733, and is a co-inventor in said related application Serial No. 07/672,431, all three of which disclose bicycle derailleur shifting apparatus having a built-in, automatic overshift feature. The present invention accomplishes the same automatic overshifting function with a simple and economical construction.

Applicants are aware of two additional prior art patents which disclose bicycle derailleur shifting apparatus having a built-in overshift feature. These are Yamasaki U.S. Patent 4,267,744 and Bonnard U.S. Patent 4,384,864. Both of these are very complicated mechanisms. Each of these devices has a built-in determination of the amount of overshift travel, yet neither of them determines the timing of the overshift. This is left up to the rider, who must first move a lever to the overshift position, and then move the lever back to the normal shift position.

Another problem with the Yamasaki and Bonnard overshift mechanisms is that they each provide the same amount of overshift travel for each one of the sprockets of a rear derailleur freewheel. The problem with this is that in many derailleur systems, the most advantageous extent of overshift travel varies for different freewheel sprockets. Another problem with the built-in overshift features in both Yamasaki and Bonnard is that an optimum amount of overshift for the other freewheel sprockets is generally too much for the #1, lowest gear sprocket closest to the wheel. An optimum amount of overshift travel for the other freewheel sprockets is likely to cause derailling from the #1 sprocket, which could seriously damage the bicycle. Thus, since the overshift amount is the same for all sprockets, it is inherent that neither of the Yamasaki or Bonnard overshift mechanisms produces sufficient overshift travel for optimum down-shifting through most of the freewheel sprockets.

Another long-noted problem in the art is the provision of an accurate front derailleur system capable of handling not only "parallel riding" but also "cross-over riding." For example, with a two-chain wheel front derailleur system, for parallel riding the larger chain wheel will service the smaller rear freewheel sprockets, and the smaller chain wheel will service the larger freewheel sprockets. With cross-over riding, the chain may be crossed over from the larger chain wheel to relatively large freewheel sprockets, or the chain may be crossed over from the smaller chain wheel to relatively small freewheel sprockets. Such crossed-over chain locations have a propensity for causing undesirable "chain rasp," and the usual prior art solution to this problem was simply to provide a front derailleur chain cage having a relatively wide gap between the cage plates. While this may reduce chain rasp, it causes the further problems of inaccuracy in shifting, and frequent chain derailling. This problem was solved in the apparatus disclosed in applicant Patterson's aforesaid U.S. Patents Nos. 4,900,291 and 4,938,733, and in said related application Serial No. 07/672,431. It is also solved in a simple and economical way in the apparatus of the present invention.

A further problem in the art, which relates primarily to rear bicycle derailleur shifting systems, is that there are numerous points of lost motion in both the derailleur mechanism and its actuating cable which cumulatively add up to a considerable amount of overall lost motion, as for example from about .040 to about .070 inch. Applicants have found that for accurate index shifting, substantially all of this cumulative lost motion must first be taken up at the shift actuator before the overshift and actual shift increments of travel between adjacent sprockets are applied during a down-shifting event. The apparatus of applicant Patterson's aforesaid U.S. Patents Nos. 4,900,291 and 4,938,733, and said related application Serial No. 07/672,431 provide compensation for such cumulative lost motion, and apparatus of the present invention also provides compensation for such cumulative lost motion in a simple and economical way.

It has long been recognized in the art that rotary handgrip devices can be useful for controlling vehicle mechanisms, particularly on motorcycles, but also on bicycles. Several of such devices are disclosed in French Patent 829,283 to Braumandl. Other recently marketed devices are "simple spools" on the outside of the handlebar which have the disadvantages of (1) an undesirably large cable pull rate, (2) a correspondingly undesirably large torque required to be applied to the rotary shifter, and (3) requiring thumb actuation of a lever. The first such devices of which applicants are aware having been employed in cooperation with bicycle derailleur shifting apparatus are the rotating gear shifting devices disclosed in applicant Patterson's aforesaid U.S. Patents Nos. 4,900,291 and 4,938,733, and in said related application Serial No. 07/672,431. DE 32 15 427 A1 represents the prior art upon which the preamble of claim 1 is based.

### SUMMARY OF THE INVENTION

In view of these and other problems in the art, it is a general object of the present invention to solve the problems associated with prior art bicycle derailleur shifting systems.

This is achieved by the characterising portion of claim 1. Preferred features of the invention are defined in claims 2 to 12.

### BRIEF DESCRIPTION OF THE DRAWINGS

The invention will become more apparent in reference to the following description and the accompanying drawings, wherein:
Figure 1 is an fragmentary side elevational view of a bicycle embodying front and rear derailleurs, and front and rear derailleur shifters;
Figure 2 is an enlarged fragmentary elevational view of the rear derailleur system of Figure 1;
Figure 3 is a further enlarged, fragmentary view taken on the line 3-3 in Figure 1;
Figure 4 is a fragmentary view taken on the line 4-4 in Figure 3;
Figure 5 is a fragmentary view, partly in section and partly in elevation, taken on the line 5-5 in Figure 2;
Figure 6 is an elevational view with portions broken away taken on the line 6-6 in Figure 2;
Figure 7 is a cross-sectional view taken on the line 7-7 in Figure 6;
Figure 8 is a fragmentary elevational view, with portions broken away, taken on the line 8-8 in Figure 2;
Figure 9 is an enlarged fragentary elevational view illustrating an adjustment feature of the rear derailleur mechanism of Figure 2;
Figure 10 is a fragmentary sectional view taken on the line 10-10 in Figure 2;
Figure 11 is a perspective view of a portion of the derailleur mechanism shown in Figure 2, indicating various points of lost motion;
Figure 12 is a diagrammatic view illustrating overshift;
Figure 13 is a fragmentary elevational view of a front derailleur mechanism;
Figure 14 is a diagrammatic view illustrating parallel riding;
Figure 15 is a diagrammatic view illustrating cross-over riding;
Figure 16 is a fragmentary plan view illustrating parallel riding;
Figure 17 is a view similar to Figure 16 illustrating cross-over riding;
Figure 18 is a view similar to Figures 16 and 17 illustrating correction of the cross-over of Figure 17 by shifting of the detent spring from one of its inner detented positions to the other;
Figure 19 is a fragmentary elevational view of the handlebar end portion of a mountain bike having a first shovel cam form of front and rear handgrip shifting mechanisms;
Figure 20 is a cross-sectional view taken on the line 20-20 in Figure 19, showing the inner end portion of the rear derailleur shovel cam handgrip shift actuator (relative to the handlebar end), and the rear control cable guide tube which extends therefrom;
Figure 21 is an axial sectional view (relative to the handlebar) taken on the ine 21-21 in Figure 20, illustrating some of the details of construction of the rear handgrip actuator;
Figure 22 is a cross-sectional view taken on the line 22-22 in Figure 21, illustrating a detent system embodied in the first shovel cam form of rear derailleur actuator;
Figure 22A is an elevational view of the detent spring embodied in the form shown in Figure 22;
Figure 23 is a cross-sectional view taken on the line 23-23 in Figure 21, illustrating the shovel cam configuration wherein the cam lobe expands cable during down-shifting cable pulling, and releases cable during up-shifting cable releasing;
Figure 24 is a view similar to Figure 22, illustrating a first increment of down-shifting movement of the rear derailleur handgrip shift actuator in which the detent spring is shifted from a relatively high spring constant to a relatively low spring constant so as to compensate for rear derailleur return spring force during down-shifting events;
Figure 25 is a view similar to Figures 22 and 24 wherein the rear derailleur handgrip shift actuator is proceeding through a series of down-shifting events;
Figure 26 is a view similar to Figures 22, 24 and 25, illustrating the relationship of the parts of the rear derailleur handgrip shift actuator at the completion of a series of down-shifting events;
Figure 27 is a view similar to Figure 23 illustrating the shovel cam and rear derailleur actuating cable relationship with the cable pulled to its fullest extent at the completion of a series of down-shifting events, the shovel cam corresponding in position to the positioning of the parts in Figure 26;
Figure 28 is a view similar to Figures 22 and 24-26 illustrating the initiation of a series of up-shifting events in which the detent spring has been moved to a higher spring rate position to compensate for alleviation of rear derailleur return spring force;
Figure 29 is a view similar to Figure 28 illustrating a progression of up-shifting events;
Figure 30 is an enlarged, fragmentary view taken on the line 30-30 in Figure 21 illustrating the cable end connection within the rear derailleur handgrip shift actuator;
Figure 31 is an enlarged, fragmentary view taken on the line 31-31 in Figure 30;
Figure 32 is a cross-sectional view taken on the line 32-32 in Figure 19, which is similar to Figure 20 but illustrates the front handgrip shift actuator on the left-hand side of the handlebar;
Figure 33 is an axial sectional view taken on line 33-33 in Figure 32, which is similar to Figure 21, but illustrates the front derailleur handgrip actuator;
Figure 34 is a cross-sectional view taken on the line 34-34 in Figure 33, illustrating the cable released position of the parts of the front derailleur actuator, with the rotational arrow indicating the start of a cable pulling actuation;
Figure 35 is a view similar to Figure 34 which illustrates the first increment of movement in a cable pulling actuation of the front derailleur actuator mechanism, in which the detent spring has been shifted to an overshift position;
Figure 36 is a similar view which illustrates continuing cable pulling actuation of the front derailleur during down-shifting;
Figure 37 is a similar view which illustrates completion of a series of front derailleur down-shifting events;
Figure 38 is a similar view which illustrates the commencement of a series of front derailleur up-shifting events;
Figure 39 is a diagrammatic view illustrating sequences of down-shifting and up-shifting events for a three-chain ring front derailleur mechanism;
Figure 40 is a view similar to Figure 21 for a second shovel cam form of rear derailleur actuator;
Figure 41 is a cross-sectional view taken on the line 41-41 in Figure 40 corresponding to Figure 22, illustrating the mechanism of Figure 40 in its fully up-shifted condition;
Figure 42 is a cross-sectional view taken on the line 42-42 in Figure 40, corresponding to Figure 23, illustrating the mechanism of Figures 40 and 41 in the fully up-shifted condition;
Figure 43 is a greatly enlarged fragmentary view illustrating the detenting arrangement in the second,shovel cam form of rear derailleur actuator illustrated in Figures 40-42;
Figure 44 is a laid-out diagrammatical view which illustrates the detenting arrangement, and representative cable pulling extents and corresponding handgrip actuator rotational extents for the first shovel cam form of rear handgrip actuator illustrated in Figures 19-31;
Figure 45 corresponds with Figure 44 with respect to the front derailleur shift actuator illustrated in Figures 32-39;
Figure 46 is a fragmentary elevational view similar to Figure 19 showing the handlebar end portion of a mountain bike embodying a first jack spool form of front and rear handgrip shifting mechanisms of the present invention;
Figure 47 is an enlarged fragmentary perspective view taken in the region generally designated 47 in Figure 46, illustrating and left end portion of the handlebar and the front jack spool handgrip shift actuator mounted thereon;
Figure 48 is a further enlarged fragmentary elevational view taken on the line 48-48 in Figure 46;
Figure 49 is a cross-sectional view taken on the line 49-49 in Figure 48, particularly illustrating a short cable drive connection between the handgrip rotator and the jack spool;
Figure 50 is a fragmentary plan view, with portions broken away, taken on the line 50-50 in Figure 48, further illustrating the short cable drive connection between the handgrip rotator and the jack spool, and illustrating the derailleur control cable output from the jack spool;
Figure 51 is a simplified schematic perspective view illustrating the relationship between the handgrip rotator and the jack spool, with arrows indicating a down-shifting control cable takeup mode of operation;
Figure 52 is another simplified schematic view, this time with the handgrip rotator and jack spool laid out in flat plan, with the short cable-driven portion of the jack spool separated from the control cable drive portion of the jack spool, with the directional arrows again indicating a down-shifting takeup mode of operation;
Figure 53 is a fragmentary axial sectional view taken on the line 53-53 in Figure 46, illustrating some structural details of the fixed and rotational portions of the left hand (front derailleur) handgrip shift actuator;
Figure 54 is a cross-sectional view taken on the line 54-54 in Figure 53;
Figure 55 is another cross-sectional view taken on the line 55-55 in Figure 53;
Figure 56 is a further cross-sectional view taken on the line 56-56 in Figure 53;
Figure 57 is a fragmentary axial sectional view taken on the line 57-57 in Figure 50, illustrating the front derailleur control cable output structure, including an adjustment barrel;
Figure 58 is a further enlarged sectional view taken on the line 58-58 in Figure 48, the section being axial relative to the jack spool and transverse relative to the handlebar, illustrating details of construction of the jack spool and placement of the short drive cable and derailleur control cable thereon;
Figure 59 is a fragmentary sectional view taken on the line 59-59 in Figure 58, with the jack spool itself being shown in elevation, particularly illustrating the relationship between the jack spool and the rotator-driven short cable on the one hand, and the jack spool and the derailleur control cable on the other hand;
Figure 60 is a fragmentary, further enlarged view taken on the line 60-60 in Figure 48, particularly illustrating the detenting relationship between the shifter rotator and the fixed body of the shifter for a three chain ring front derailleur system, with the rotator in its fully up-shifted position so that the chain is placed on the smallest chain ring, the directional arrow indicating commencement of down-shifting rotational movement of the shifter rotator,

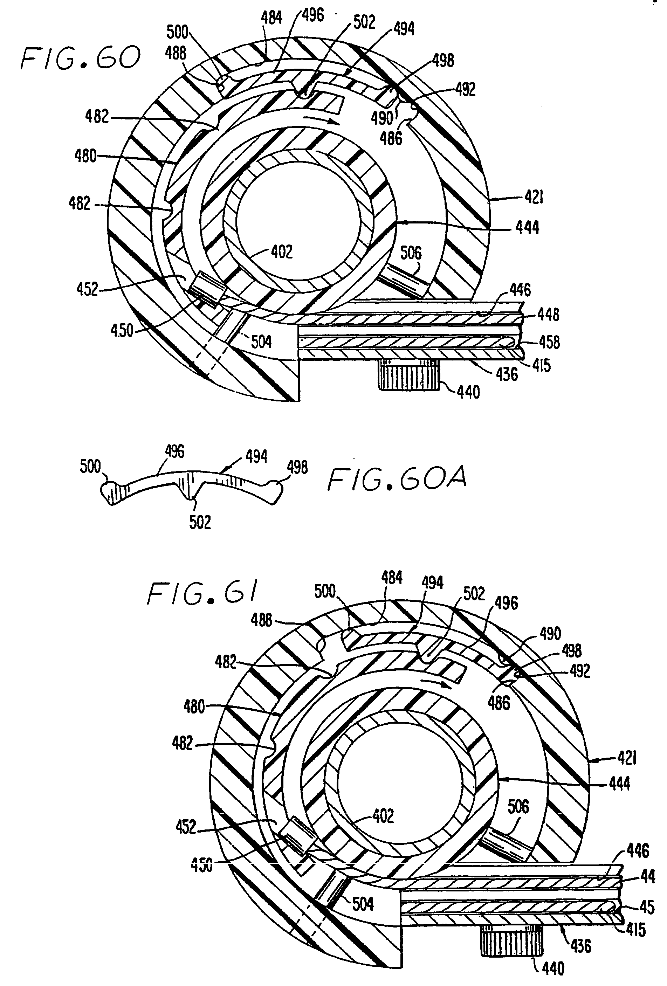

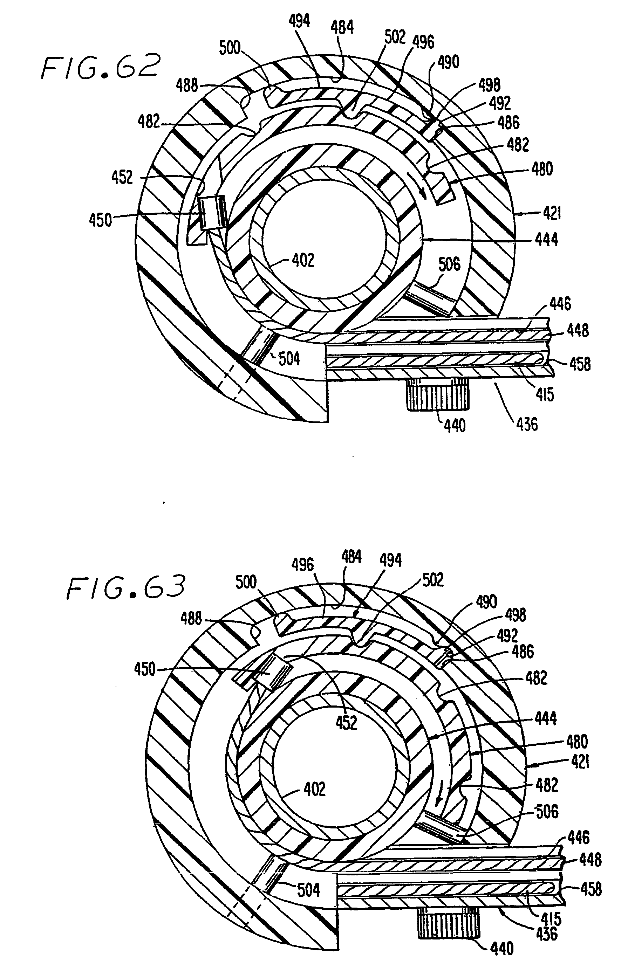

Figures 60-63 illustrative successive down-shifting stages of rotation of the handgrip shift actuator from the fully up-shifted position of Figure 60 to the fully down-shifted position of Figure 63;
Figure 61 is a view similar to Figure 60, with the shifter rotator and detent spring shifted a first clockwise increment from the position of Figure 60 sufficient to take up lost motions in the derailleur and its cable systems and to provide an overshift increment of cable movement, but insufficient to down-shift the chain from the small chain ring to the middle chain ring;
Figure 62 illustrates a second clockwise down-shifting increment of rotation of the shifter rotator in which the front derailleur mechanism has been moved sufficiently to place the chain on the intermediate chain ring;
Figure 63 illustrates a final clockwise down-shifting increment of movement of the shifter rotator and its detent structure to place the chain on the large chain ring, this completing the down-shifting sequence of events;

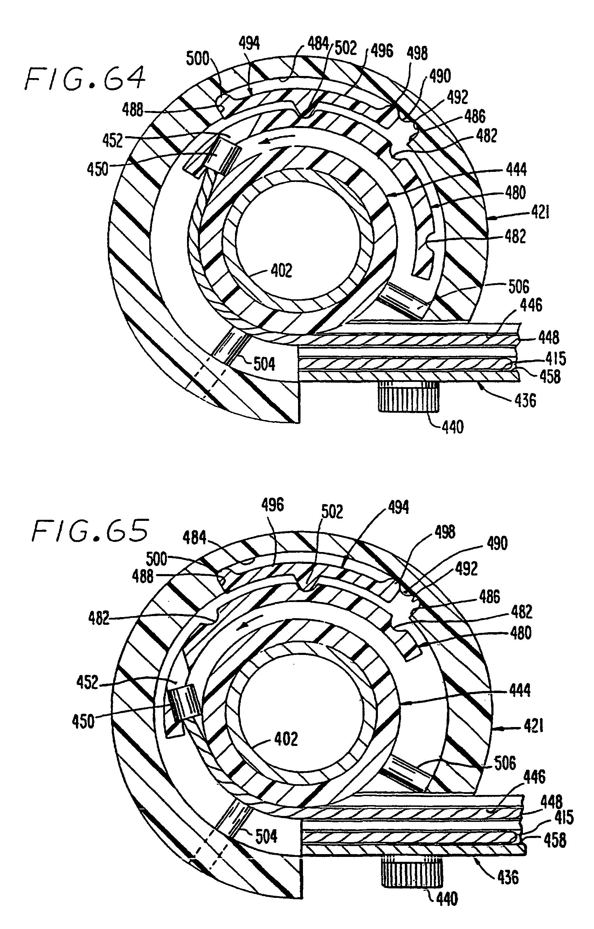

Figure 64 illustrates a first counterclockwise up-shifting increment of rotation of the shifter rotator and its detent structure from the position of Figure 63, in which the detenting spring is shifted counterclockwise to its initial position of Figure 60, with the lost motions being released, but with the chain still remaining on the large chain ring;
Figure 65 illustrates a second counterclockwise up-shifting increment of rotation of the shifter rotator and its detent structure in which the chain is shifted to the intermediate chain ring; a third, final counterclockwise up-shifting increment of movement of the shifter rotator and its detent structure moving the parts back to their fully up-shifted positions of Figure 60 in which the chain is on the small chain ring; fine-tuning rotational shifting of the rotator and its detent structure in which the detenting spring is shifted between its positions of Figures. 60 and 65 without moving the chain from one chain ring to another enabling fine-tuning locating of the chain to avoid chain rasp;

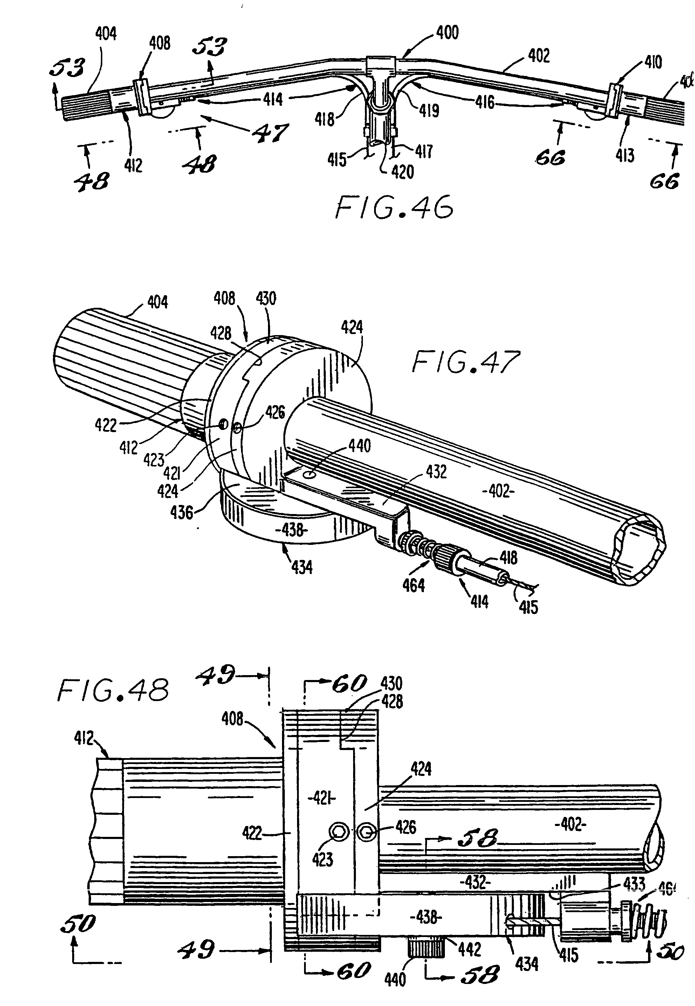

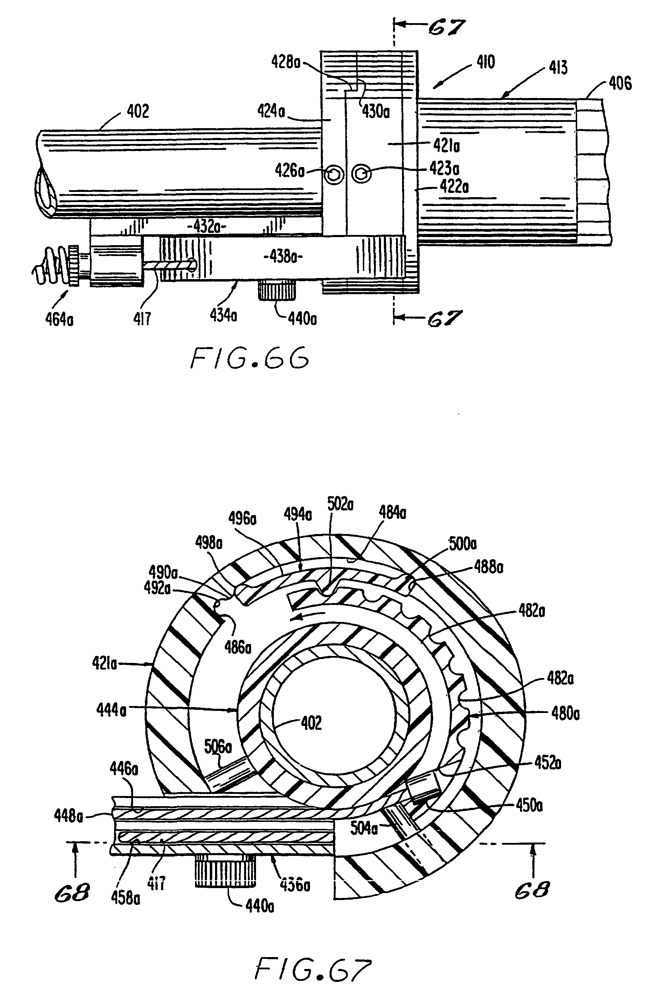

Figure 66 is an enlarged, fragmentary elevational view taken on the line 66-66 in Figure 46 illustrating the rear derailleur handgrip shift actuator proximate the right-hand end portion of the handlebar, this view being similar to but reversed from Figure 48;
Figure 67 is a further enlarged, fragmentary cross-sectional view taken on the line 67-67 in Figure 66, illustrating the rear derailleur shifter rotator and its detent structure and spring in their fully up-shifted, most clockwise locations relative to the fixed body of the shift actuator, preparatory to counterclockwise movement of the rotator and its detent structure as indicated by the directional arrow for takeup of lost motions and an overshift increment, and then a series of down-shifting events in which the chain is shifted from the smallest, highest gear ratio freewheel sprocket to the largest, lowest gear ratio freewheel sprocket;

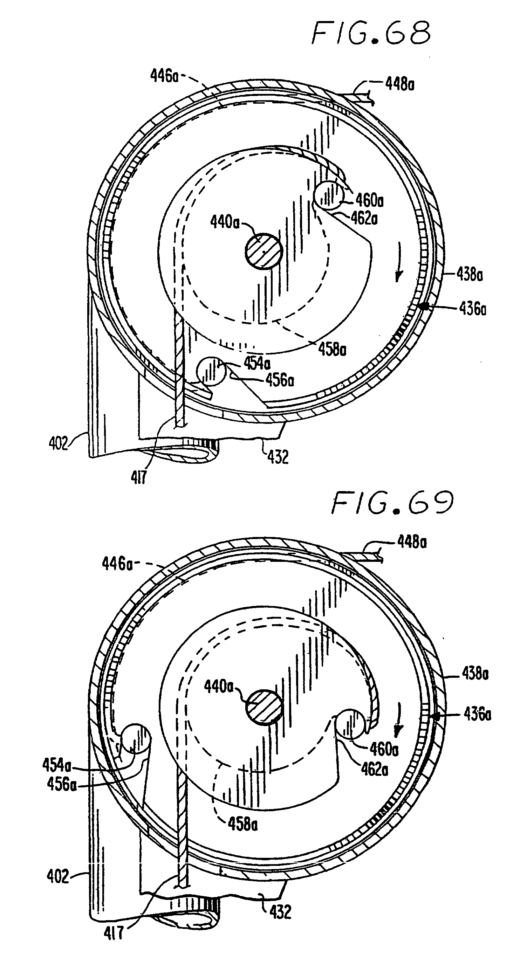

Figure 68 is a fragmentary sectional view taken on the line 68-68 in Figure 67, illustrating the jack spool of the rear derailleur shift actuator in its fully up-shifted position; and
Figure 69 is a view like Figure 68, but with the jack spool in a partially down-shifted position relative to the position of Figure 68, as indicated by the directional arrows in Figures 68 and 69.

### DETAILED DESCRIPTION

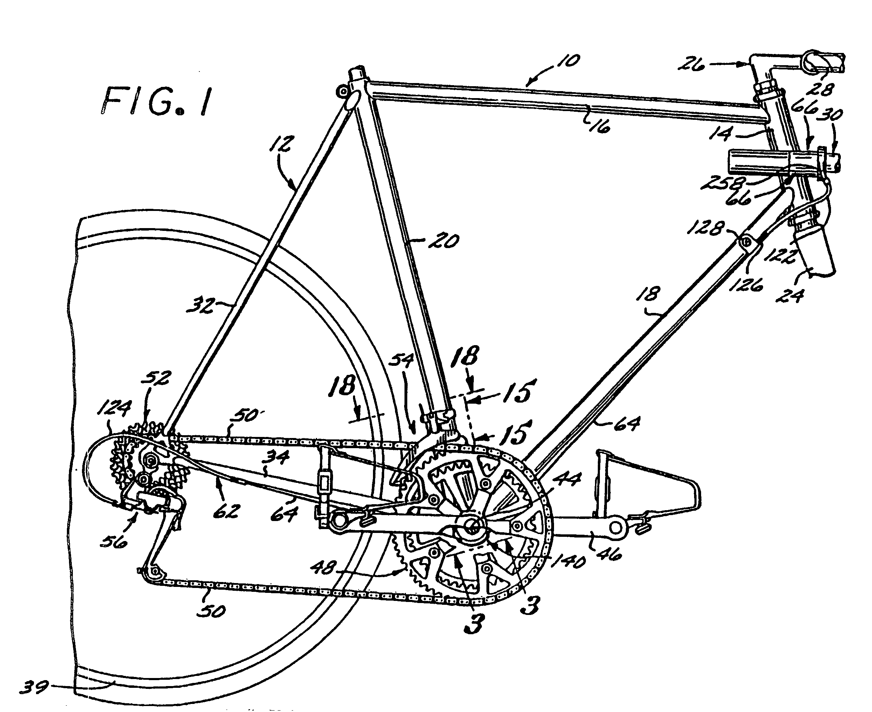

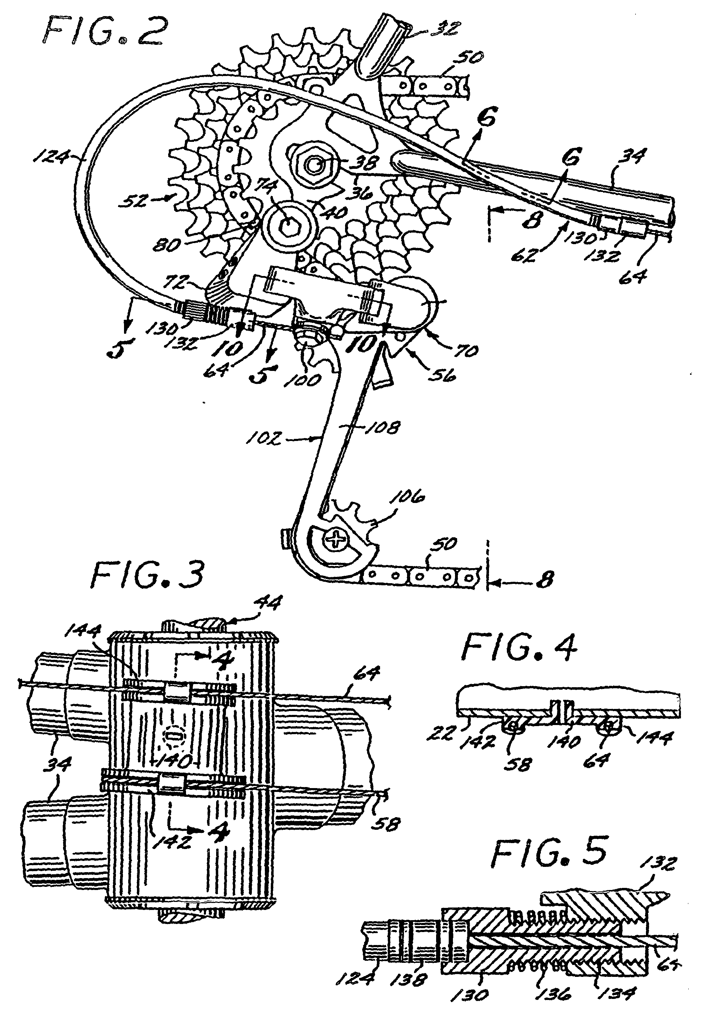

Figures 1-18 illustrate a derailleur-equipped bicycle, generally designated 10, showing details of both the rear and front derailleur apparatus, presently preferred derailleur actuating cable systems, and defining locations in the derailleur and cable systems of lost motion or "slop".

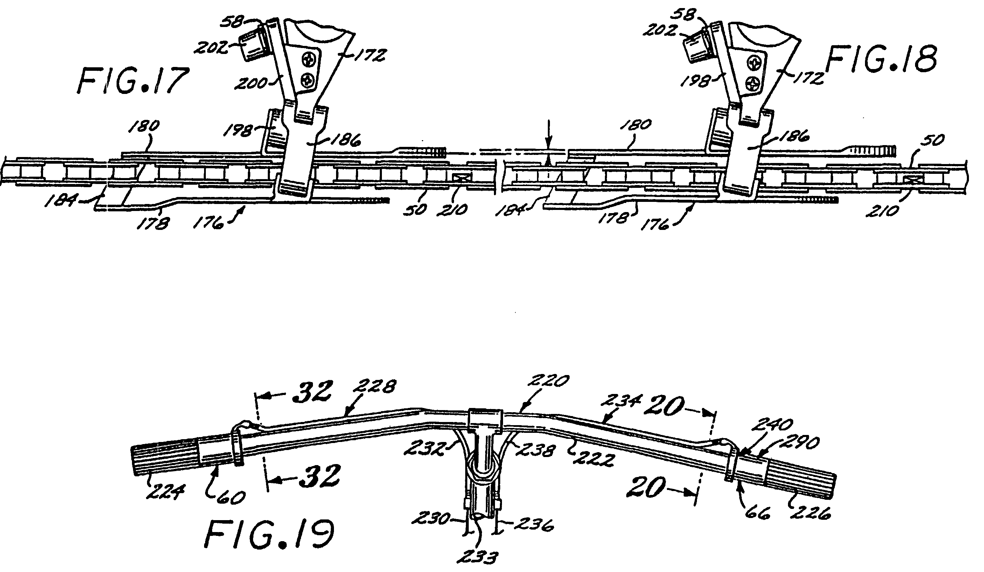

Bicycle 10 has a frame 12 including a head tube 14, top tube 16, main down tube 18, seat tube 20, bottom bracket 22, front fork 24, handlebar stem 26, handlebar 28 with end portions 30, and down fork 32 and bottom fork 34. Handlebar 28 illustrated in Figure 1 is the traditional drop type, although the invention is equally applicable to any type of bicycle handlebar, such as the "mountain bike" type illustrated in Figure 19. The rear ends of down fork 32 and bottom fork 34 are connected to a pair of spaced dropouts 36 within which the rear axle bolt 38 is fixedly mounted for supporting rear wheel 39. The rear wheel hub rotates on ball bearings about axle bolt 38, and a lateral extension of the wheel hub supports the rear derailleur freewheel on its outside, with ratchet means therebetween which engages when chain power is applied to the freewheel, and disengages to allow free rolling of the rear wheel relative to the derailleur freewheel. A derailleur hanger 40 is integrally formed with dropout 36, extending downwardly therefrom.

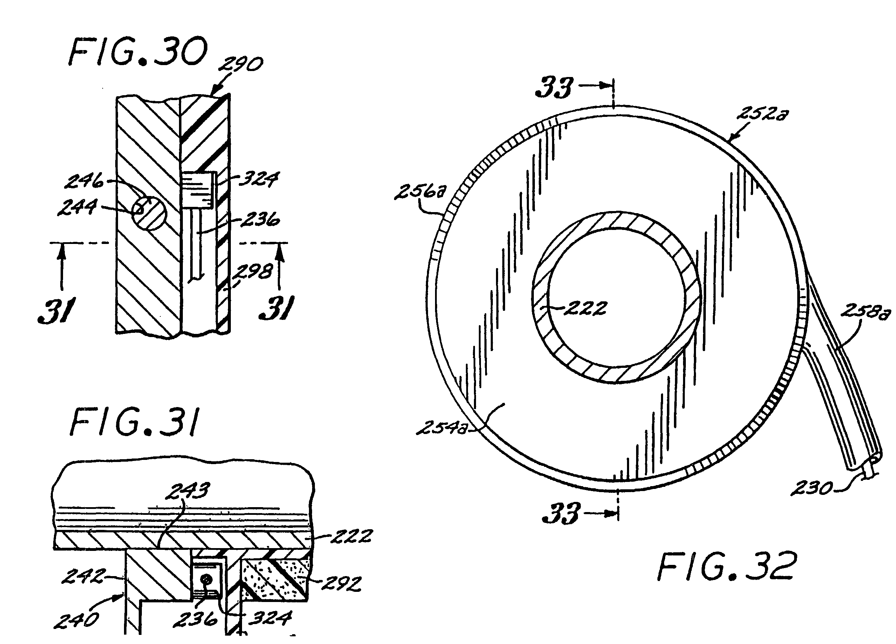

A pedal crank, generally designated 44, is journalled in bottom bracket 22, and includes a pair of pedal arms 46 on opposite sides of frame 12, and front derailleur chain ring cluster 48 on the right-hand side of frame 12 inboard of right-hand pedal crank 44. Chain ring cluster 48 shown in Figures 1 and 14-18 has two chain rings, the operation of which in connection with the present invention will be discussed in detail hereinafter. Actuation of a three-chain ring cluster is described hereinafter in connection with Figures 32-38. In Figure 1, drive chain 50 is shown engaged over the larger of the two chain rings, and extends rearwardly therefrom into engagement with derailleur multiple freewheel 52 for applying power to rear wheel 39. The multiple freewheel 52 shown has a six-sprocket cluster.

The front derailleur mechanism is generally designated 54, and the rear derailleur mechanism is generally designated 56. Front control cable 58 connects front derailleur mechanism 54 to a front handgrip shift actuator 60 as shown in Figure 19, connecting in the same manner that rear control cable 64 connects to the rear handgrip shift actuator 66 as shown in detail in Figures 19-31.

The rear derailleur cable system is generally designated 62, and includes rear control cable 64 which extends from rear derailleur mechanism 56 to rear handgrip shift actuator 66 that is mounted on right-hand handlebar end portion 30. The connection of rear control cable 64 to rear derailleur shift actuator 66 is described in detail in connection with Figures 19-31.

### The Rear Derailleur Mechanism

The apparatus of rear derailleur mechanism 56 is best illustrated in Figures 1, 2, and 8-11.

At the heart of rear derailleur mechanism 56 is a parallelogram generally designated 70 which has a rear support body pivotally but laterally fixedly connected to hanger 40, a pair of parallel links extending forwardly from the support body, and a shifter body attached to the forward ends of the links that is shiftable laterally inwardly toward the bicycle frame 12 under the influence of cable tension, and shiftable laterally outwardly away from frame 12 under the influence of a derailleur return spring contained in the parallelogram.

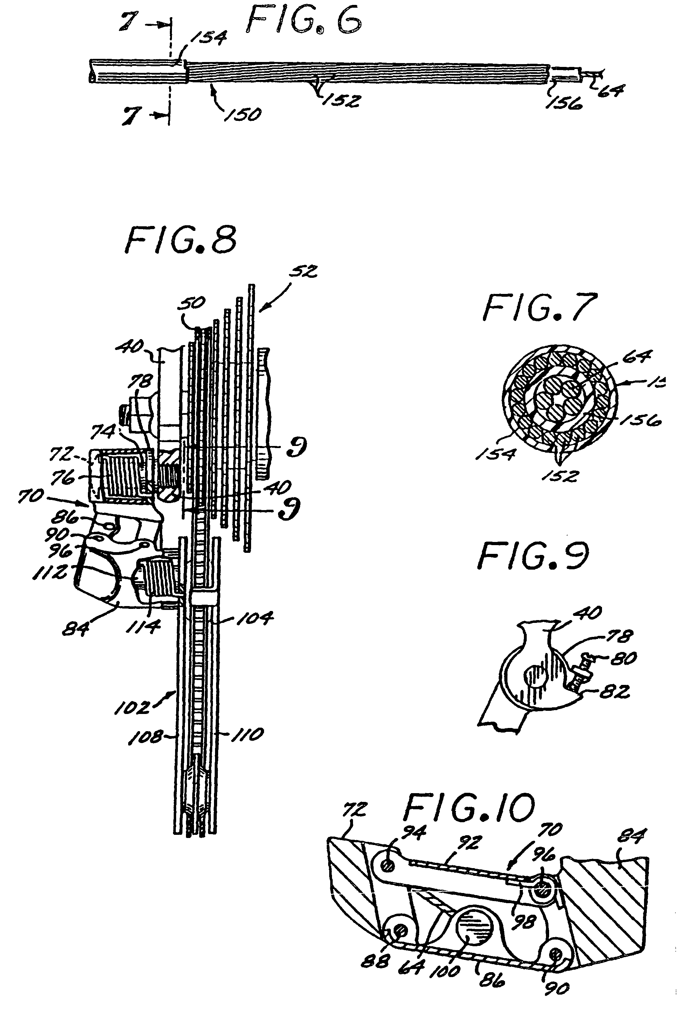

The rear support or mounting body is designated 72, and is pivotally mounted on a mounting bolt 74 which is threadedly connected to hanger 40 as best seen in Figure 8. A helical pivot spring 76 around pivot bolt 74 is housed in support body 72 and biases support body 72 clockwise or forwardly about bolt 74. One end of spring 76 bears against body 72, while the other bears against a plate 78 as best seen in Figures 8 and 9. A support body angle adjust screw 80 on plate 78 bears against a shoulder 82 on hanger 40 for adjusting the effective torque of spring 76.

The forward shifter body 84 of parallelogram 70 is held parallel to support body 72 by the parallelogram linkage, and shifts transversely inwardly and outwardly relative to frame 12, and in particular, relative to multiple freewheel 52. An outer parallelogram link 86 connects support body 72 and shifter body 84 by means of respective pivot pins 88 and 90; and an inner parallelogram link 92 connects support body 72 and shifter body 84 through respective pivot pins 94 and 96.

Derailleur return spring 98 is best seen in Figure 10, and is a helical spring with its coil located around pivot pin 96, and having respective arms which bear against shifter body 84 and link 92 so as to bias parallelogram 70 toward a flattened, more closed condition, thereby biasing shifter body 84 laterally outwardly relative to frame 12 and freewheel 52. A cable clamp 100 seen in Figures 2, 8 and 10 is mounted on outer parallelogram link 86 for clamping the end of cable 64. Increased tension on cable 64 pulls parallelogram 70 toward a more open, rectangular configuration, thereby moving shifter body 84 inwardly relative to frame 12 and freewheel 52.

A pulley cage 102 is pivotally supported on the inner end of shifter body 84, extending downwardly therefrom. An upper guide or jockey pulley 104 is freely rotatably supported in the upper part of pulley cage 102 adjacent shifter body 84, and a lower tension pulley 106 is freely rotatably mounted in the lower portion of pulley cage 102. Cage 102 consists of outer and inner cage plates 108 and 110, respectively, outer cage plate 108 being mounted on a cage pivot bolt 112 which projects from shifter body 84. Pulley cage 102 is biased clockwise or rearwardly by means of a cage pivot tension spring 114 inside shifter body 84 which works against body 84 and outer cage plate 108.

Chain 50 extends rearwardly from one of the two chain rings of chain ring cluster 48 over one of the six sprockets of multiple freewheel 52, then downwardly and forwardly over the front of guide pulley 104, then downwardly and rearwardly over the rear of tension pulley 106, and then forwardly back to the chain ring. Guide pulley 104 shifts laterally according to lateral movements of shifter body 84 under the influence of rear control cable 64 as directed by rear handgrip shift actuator 66 so as to shift chain 50 downwardly or upwardly from sprocket to sprocket of freewheel 52. As chain 50 shifts from a larger to a smaller sprocket on freewheel 52, more chain becomes available in the overall chain loop, and tension pulley 106 moves rearwardly under the influence of cage pivot tension spring 114 to take up this slack. Conversely, as chain 50 shifts from a smaller to a larger sprocket of freewheel 52, tension pulley 106 gives way forwardly against the force of tension spring 114 to provide the necessary additional chain length for the added circumference of the larger freewheel sprocket.

### Rear Derailleur Cable System

The rear derailleur cable system 62 is constructed to minimize and strictly limit lost motions or "slop" commonly found in bicycle shift cables, and make whatever lost motions that are inevitable as predictable as possible so they can be accurately taken up and compensated by the cam member in handgrip shift actuator 66. Such lost motions commonly occur from cable housing flexure under down-shifting cable tension toward rounding out of the cable housing, looseness of the cable in its housing, cable housing compression, cable stretch, and lost motion in cable adjustment barrels. Cable system 62 is also constructed to minimize friction between the cable and its housing so as to further reduce cable housing flexure, and to make down-shifting easier by substantially reducing the friction vector between housing and cable which opposes cable down-shifting movement, particuarly under the relatively high pulling force on the cable that is required for down-shifting.

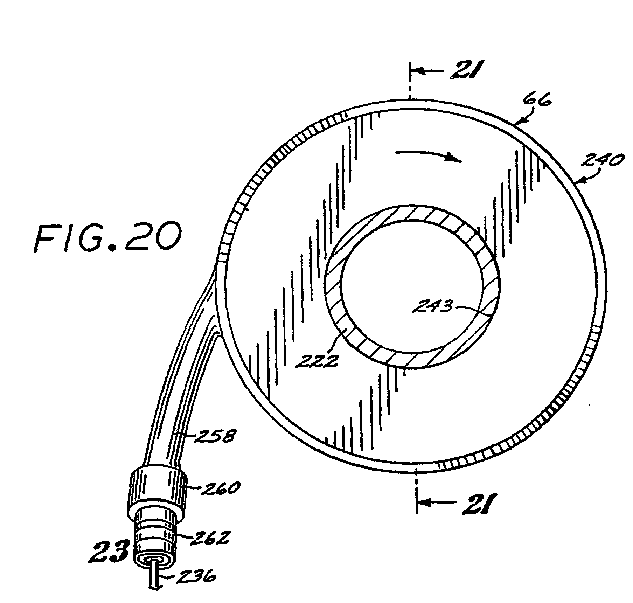

With these factors in mind, the rear cable housing is provided in two relatively short sections, a forward cable housing section 122 which extends to a cable guide tube 258 as seen in Figure 20 and operatively connects with shift actuator 66, and a rearward cable housing section 124 which extends from a rearward location on bottom fork 34 to rear derailleur mechanism 56. Most of the length of rear control cable 64 is thus free of housing, and has only minimal friction against a guide under bottom bracket 22 discussed hereinafter in connection with Figures 3 and 4. The shortness of cable housing sections 122 and 124 greatly reduces cable compression lost motion and makes it very predictable.

Cable compression is further greatly reduced by employing a substantially axially compressionless cable housing or casing described hereinafter in connection with Figures 6 and 7. The construction of such substantially compressionless cable housing also greatly reduces cable housing flexure under cable down-shifting tension, and makes such flexure and consequent lost motion very predictable.

Referring to Figure 1, forward cable housing section 122 ends at a spring-loaded front cable housing adjustment barrel 126 through which cable 64 extends and which is adjustably threadedly engaged in a front bracket 128 that is affixed to the right-hand brazon near the upper end of down tube 18. Rearward cable housing section 124 ends at a rear housing adjustment barrel 130 through which cable 64 passes and which is threadedly adjustably engaged in a rear bracket 132 that is secured to derailleur support body 72. As best seen in Figure 5, a reduced threaded portion 134 of adjustment barrel 130 carries a helical compression spring 136 which resists inadvertent rotation of barrel 130 relative to its bracket 132. There is inevitable clearance between the barrel and bracket threads, spring 136 shifting barrel 130 slightly to the left relative to bracket 132 when cable 64 is under relatively small tension when a shift is not being made. However, during a down-shift when cable 64 is under relatively large tension, barrel 130 will move toward bracket 132 through such thread clearance, which represents lost motion in the cable system. Similar lost motion will occur between front adjustment barrel 126 and its bracket 128. A ferrule 138 is crimped over the end of rearward housing section 124 and is engaged within an axial recess in adjustment barrel 130.

Referring now to Figures 3 and 4, a cable guide bracket 140 is secured underneath bottom bracket 22, and supports a pair of grooved, arcuate cable guides 142 and 144 under which the respective front and rear cables 58 and 64 freely slide. The front derailleur cable system, including cable 58, is the same as the forward portion of rear derailleur cable system 62. Thus, front cable 58 extends upwardly and forwardly along the main down tube 18, passing through an adjustment barrel like barrel 126 which is threaded into a bracket like bracket 128 mounted on the left-hand brazon, front cable 58 then having a cable housing section like section 122 of rear cable system 62 which extends from the adjustment barrel to a cable guide tube 258 as seen in Figures 32 and 34-38, and connects to front handgrip shift actuator 60. Rear cable 64 extends exposed from adjustment barrel 126 rearwardly alongside main down tube 18, under its guide 144, and thence rearwardly along bottom fork member 34 to the rear housing adjustment barrel 130.

Figures 6 and 7 illustrate the substantially axially compressionless cable housing, designated 150, which is employed for both of the cables 58 and 64, but shown with rear cable 64 therein. The core of housing 150 is an annular series of closely packed, primarily axially oriented wires 152 made of a tough metal such as steel. Wires 152 are arranged in a very slow or long helix, as for example a revolution in only about every three inches of length. The annular array of wires 152 is held in its circular configuration between an outer plastic jacket 154 and an inner plastic guide tube or liner 156. Inner guide tube 156 is made of a tough anti-friction plastic material such as a Delrin which, together with the short lengths of cable 150 in cable sections 122 and 124, greatly minimizes cable friction in the housing. Inner guide tube 156 is closely yet freely fitted about cable 64 to minimize lost motion in the curved portions of housing sections 122 and 124.

Applicants have determined that the substantially compressionless-type cable housing 150 not only substantially completely eliminates cable compression as a lost motion factor, but it also substantially minimizes the tendency for conventional cable to round out or give in a "monkey motion," thereby substantially eliminating two heretofore serious sources of lost motion.

### Sources of Lost Motion in Rear Derailleur Mechanism

While the aforesaid cable system preferably employed as a part of the present invention has only minimal and very predictable lost motion, every derailleur system has numerous sources of lost motion which cumulatively add up to a substantial amount of lost motion at cable connection 100, and this cumulative lost motion varies for almost every different derailleur system, over a range of from about 1mm (0.040 inch) to 1.75mm (about .070 inch). For positive index shifting with applicants' handgrip shift actuator 66, a separate shift actuator cam is preferably provided for each type of derailleur mechanism so as to positively take up and account for the cumulative lost motion in each different derailleur mechanism. Mode of operation of a first shovel cam form of such shift actuator for a rear derailleur mechanism is described in detail hereinafter in connection with Figures 19-31.

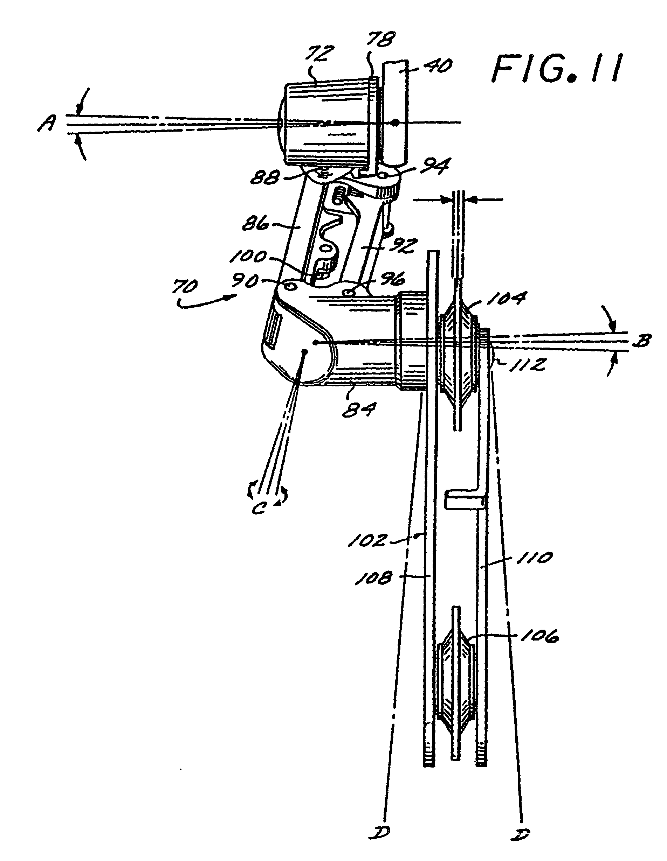

Figure 11 illustrates some of these points of lost motion or slop in conventional derailleur systems. First, there is a wobble type of lost motion of support body 72 on its pivot bolt 74 indicated at A in Figure 11. Support body 72 torques downwardly or upwardly, depending upon whether the chain is being shifted inwardly to a larger freewheel sprocket or outwardly to a smaller freewheel sprocket. Next, there is lost motion at each of the four link pivot pins 88, 90, 94 and 96. When support body 72 torques or twists down as at A, then shifter body 84 twists upwardly, and when support body 72 torques or twists up, then shifter body 84 twists downwardly, these motions being indicated at B in Figure 11. Whenever shifter body 84 twists, the parallelogram links 86 and 92 also twist as indicated at C in Figure 11. Further, there is lost motion between cage pivot bolt 112 and shifter body 84, which translates into lost motion between pulley cage 102 and shifter body 84 as indicated at D in Figure 11. Additionally, there is lateral lost motion of guide pulley 104 on its pivot axis.

### Overshift

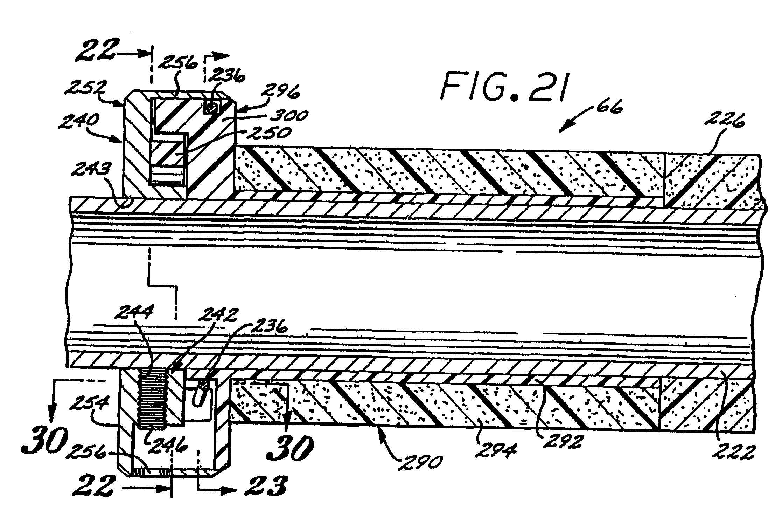

The cam mechanism in shift actuator 66, described hereinafter in detail in connection with Figures 21-29, is not only configured to account and compensate for the cumulative lost motions referred to above, but also for an overshift increment in the down-shift direction to a larger freewheel sprocket. This overshift increment serves several functions. It is the lateral angle at which guide pulley 104 addresses the chain to the next larger freewheel sprocket which causes the larger sprocket teeth to snag the chain. By moving guide pulley 104 inwardly somewhat beyond the next larger sprocket so that the chain in effect angles across the teeth of the larger sprocket, the sprocket teeth more readily snag the chain plates to provide an earlier, more positive shift. The overshift increment also causes the chain to have its final movement during a down-shifting event toward the destination sprocket from the direction of the next larger sprocket, whereby during a down-shifting event the chain makes its final approach to the destination sprocket in the same direction as it would for an up-shifting event. During an up-shifting event, as the chain approaches the smaller destination sprocket, cable tension is relaxed such that the cumulative lost motion has been relaxed or backlashed, and the force vector opposing cable movement to the final destination is small and stable because of low cable force laterally against the cable housing. The same factors hold true for a down-shift to a larger sprocket when overshift is employed so that the final destination is reached in the up-shift direction. Accordingly, both the down-shift and up-shift events to the same freewheel sprocket will result in the same accurate alignment of the chain with the sprocket. Initial alignment which is conveniently calculated for each freewheel sprocket during up-shifting thereby also provides the correct chain positioning for down-shifting to each sprocket.

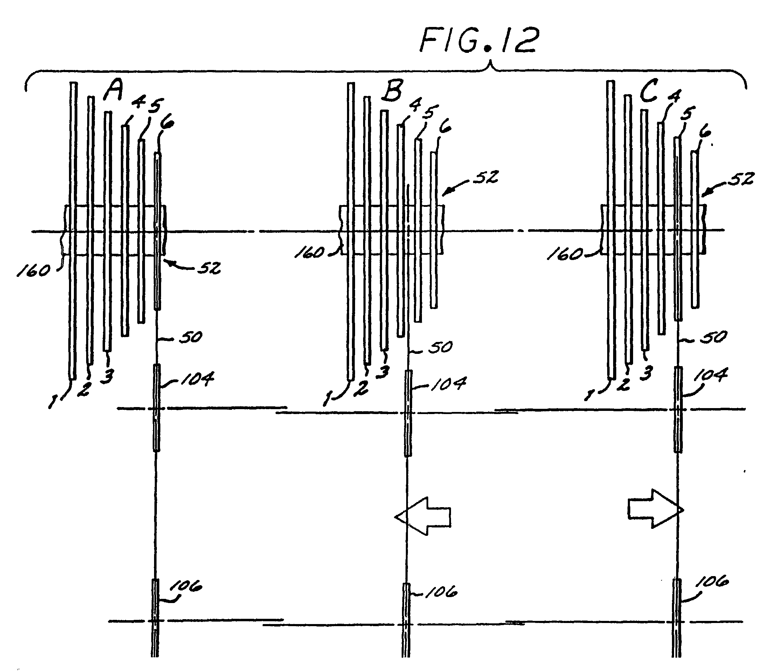

Figure 12 illustrates what is meant by "overshift." Each of Figures 12A, B and C diagrammatically illustrates rear derailleur freewheel 52 and its relationship to guide pulley 104 and chain 50 during a down-shifting event from freewheel sprocket #6, the smallest sprocket, to freewheel sprocket #5, the next smallest sprocket. The freewheel hub which overrides the wheel hub is diagrammatically illustrated as 160. The freewheel sprockets are numbered in their conventional order, from 1-6. In Figure 12A, guide pulley 104 and chain 50 are operatively aligned with the #6 freewheel sprocket. A down-shift is to be made from sprocket #6 to sprocket #5, and Figure 12B illustrates the overshift increment. Guide pulley 104 is moved or overshifted in the down-shifting direction substantially beyond alignment with the destination sprocket #5; moving chain 50 to this overshift position. Guide pulley 104 is then relaxed back to alignment with the destination sprocket #5, being moved under the influence of derailleur return spring 98 shown in Figure 10, carrying chain 50 with it into accurate alignment with the destination sprocket #5 as shown in Figure 12C. The final, aligned location of guide pulley 104 and chain 50 of Figure 12C will be the same as the position of alignment for an up-shift from sprocket #4 to sprocket #5, the destination having been approached from the same direction with the cumulative lost motion released or backlashed, and the friction vector of the cable housing sections against the cable being the same.

### The Front Derailleur Mechanism

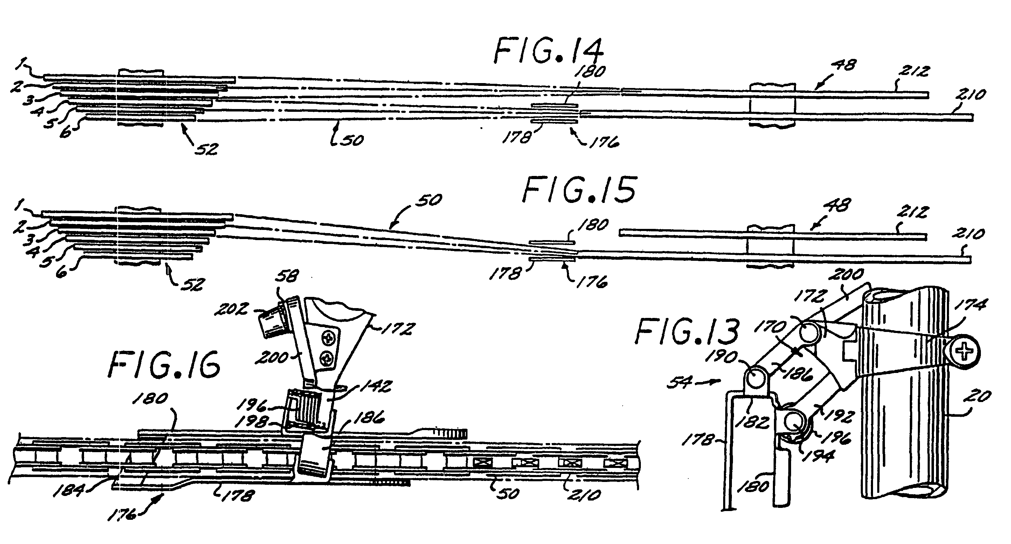

Figures 13 and 16-18 illustrate details of construction of front derailleur mechanism 54 shown generally in Figure 1 The parallelogram is generally designated 170 and is best seen in Figure 13. The fixed member of parallelogram 170 is a support body 172 which is clamped to seat tube 20 by means of a clamp 174. The derailleur cage is generally designated 176, and consists of outer and inner cage plates 178 and 180, respectively, which are connected by an upper bridge member 182 seen in Figure 13, and a lower bridge member 184 seen in Figures 16, 17 and 18. An outer, upper parallelogram link 186 is pivotally connected at its ends to support body 172 and cage 176 by means of respective pivot pins 188 and 190. An inner, lower parallelogram link 192 is also pivotally connected at its ends to support body 172 and cage 176. The cage connection pin is designated 194, but the support body connection pin is masked behind a portion of the support body as viewed.

A helical spring 196 best seen in Figures 13 and 16 is engaged about outer pivot pin 194 for link 192, and bears against link 192 and cage 176 so as to bias parallelogram 170 and hence cage 176 inwardly toward frame member 20 and thus inwardly toward the smaller chain ring. Spring 196 is covered by a spring housing 198.

An actuator arm 200 extends upwardly and inwardly toward frame member 20 as an extension of the upper, outer link 186. Front derailleur cable 58 is attached to actuator arm 200 proximate its free end by means of a cable clamp 202 on actuator arm 200.

Front derailleur mechanism 54 is controlled by front handgrip shift actuator 60 through cable 58. The lost motion factors previously discussed with respect to the rear derailleur system are minimized in the front derailleur system by the simplicity of the mechanism and shortness of the cable. The lost motion factors may nevertheless be accounted for in the front derailleur handgrip shift actuator 60 in the same manner as discussed in detail with respect to the rear derailleur system and associated handgrip shift actuator 66.

Figure 14 diagrammatically illustrates locations of chain 50 when a bicycle rider is riding "parallel." Chain ring cluster 48 of Figures 14-18 has two chain rings, a large chain ring 210 and a small chain ring 212. Rear freewheel 52 is a six-sprocket cluster, including sprockets numbered 1-6. In Figure 14, chain cage 176 is longitudinally aligned with large chain ring 210, and also substantially aligned with freewheel sprocket #5. In norma parallel riding, when the chain is engaged over large chain ring 210, the rear derailleur mechanism will only be actuated to shift chain 50 between the three smallest freewheel sprockets, numbers 6, 5 and 4, and with any of these three freewheel sprockets, chain 50 will remain sufficiently aligned with cage 176 to avoid rasping against either of the outer or inner cage plates 178 and 180. Similarly, with cage 176 aligned with smaller chain ring 212, with normal parallel riding, the rear derailleur will only be actuated to locate the chain on one of the three largest freewheel sprockets, numbers 1, 2 and 3, and chain rasp will be avoided.

Figure 15 illustrates the cross-over riding situation in which chain 50 is engaged on the larger chain ring 210, but where the rear derailleur has been actuated to place the chain over one of the three largest freewheel sprockets, numbers 1, 2 or 3. This will cause chain rasp against inner cage plate 180, unless an undesirably wide chain cage 176 is provided. Such a large chain cage is conventional to accommodate cross-over riding, but can readily lead to derailling. Still referring to Figure 15, if the chain were located over the smaller chain ring 212, and located on one of the three smallest freewheel sprockets 4, 5 or 6, a reverse cross-over situation would occur in which the chain would rasp against outer cage plate 178.

Figure 16 shows the parallel riding situation of Figure 14, wherein chain 50 is engaged over the larger chain ring 210, and the chain is generally centered through cage 176. Figure 17 shows the cross-over situation of Figure 15, with the chain engaged over the larger chain ring 210 at the front, and engaged over one of the three largest freewheel sprockets 1, 2 or 3 at the rear. The chain is seen to be rasping against inner cage plate 180 at the front of chain cage 176. Figure 18 shows chain 50 again properly aligned in chain cage 176 after a fine-tune adjustment has been made with the cam mechanism of front handgrip shift actuator 60, as described in detail hereinafter.

### "Mountain Bike"

Figure 19 illustrates the front end portion of a mountain bike which is generally designated 220, having a widespread handlebar 222 that angles slightly rearwardly. Conventional left and right grips 224 and 226, respectively, are located on the ends of handlebar 222. Front derailleur handgrip shift actuator 60 is engaged over handlebar 222 immediately inboard of left fixed grip 224, and rear derailleur handgrip shift actuator 66 is engaged over handlebar 222 immediately inboard of right fixed grip 226. Shift actuators 60 and 66 are adaptable for placement at any position on the handlebar where there is a straight handlebar section. Preferably, they are placed inboard, or spaced from the end, of the handlebar as shown in Figures 1 and 19, but they are equally adaptable for placement proximate the ends of the handlebar.

The front derailleur cable system is generally designated 228, and includes front derailleur control cable 230 and its housing or casing 232. Front derailleur cable system 228 for mountain bike 220 is preferably the same system as that employed on a bicycle 10 shown in Figure 1, with front cable housing or casing 232 terminating at an adjustment barrel arrangement like that shown in Figure 5, front derailleur control cable 230 extending down alongside main down tube 233 and riding under the bottom bracket as shown in Figures 3 and 4, and with substantially compressionless cable housing like that shown in Figures 6 and 7.

The rear derailleur cable system is generally designated 234, and includes rear derailleur control cable 236, forward cable housing or casing 238, and a rearward cable housing (not shown) like that seen in Figures 1 and 2. Rear derailleur cable system 234 is preferably the same as rear derailleur cable system 62 shown in Figures 1-7 and described in detail above in connection with those Figures.

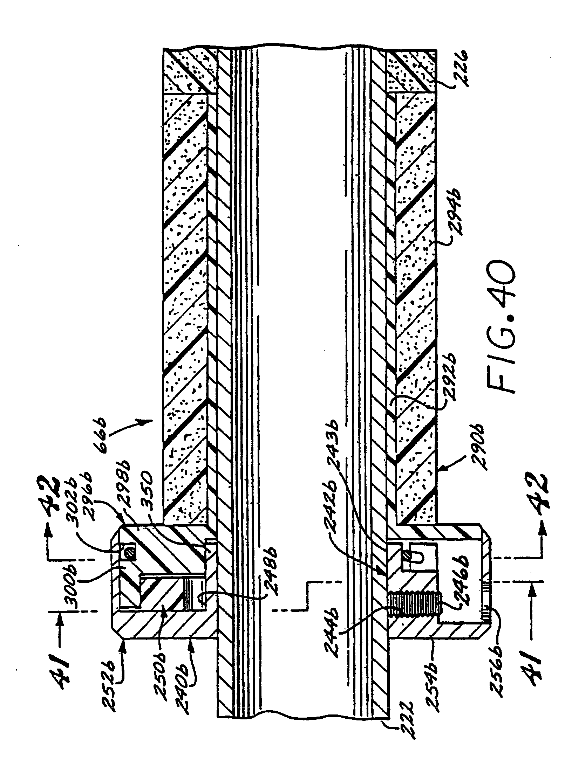

Figures 19-31 illustrate details of structure and operation of a first shovel cam form of rear derailleur handgrip shift actuator 66. In this first shovel cam compensation for the different effects of derailleur return spring 98 (see Figure 10) between down-shifting and up-shifting is provided by a two-stage variable spring rate for the shift actuator detent spring, so that down-shifting and up-shifting events require substantially the same amount of handgrip shift actuator effort. In a second shovel cam form of rear derailleur handgrip shift actuator 66b, shown in Figures 40-43, such compensation for the force of rear derailleur return spring 98 is provided for by different detent notch side slopes for the down-shifting and up-shifting directions, as described hereinafter in detail in connection with Figures 40-43.

### First Form of Rear Shovel Cam Derailleur Handgrip Shift Actuator 66

Figures 19-31 illustrate a first shovel cam form of rear derailleur handgrip shift actuator, generally designated 66, wherein the detent spring is provided with a two-stage variable rate between down-shifting and up-shifting, being provided with a lighter spring rate for down-shifting events which work against the derailleur return spring, and a heavier spring rate for up-shifting events which work with the derailleur return spring. These different spring rates are effected synergistically with a rotational shifting of the detent spring that also provides compensation for lost motions or "slop" in the rear derailleur cable system and rear derailleur mechanism, as well as to provide an overshift increment of movement of the rear derailleur control cable. These different spring rates result in generally the same torqueing effort being required for down-shifting and up-shifting by handgrip shift actuator 66.

### Fixed Inner Portion of Rear Handgrip Shift Actuator 66

Rear derailleur shift actuator 66 includes a generally circular body 240 adapted to be fixedly secured to the right-hand part of handlebar 222 inboard of the right-hand fixed handlebar grip 26. Actuator body 240 includes an inner mandrel portion 242 having an annular central opening 243 which allows it to fit over handlebar 222. A threaded radial bore 244 in mandrel portion 242 of body 240 receives a set screw 246, preferably an allen wrench screw, which locks mandrel 242 fixedly on handlebar 222.

A radially outwardly facing arcuate recess 248 in mandrel 242 is adapted to receive a generally complementary arcuate spring member 250, which is preferably made of a tough, resilient resin such as a Delrin, but which could be made of other suitable resin or spring metal. The features of mandrel 242 and spring member 250 which provide the dual spring rate will be described hereinafter in detail.

Fixed body 240 also includes an outer cowling portion 252 which is integral with and extends radially outwardly from mandrel portion 242 of body 240, and includes a generally flat radial portion 254, terminating at its radial outer edge with a cylindrical flange portion 256 which is axially oriented generally toward the end of handlebar 222.

A cable guide tube 258 extends generally tangentially from the outside of flange 256, its central passage registering with a generally tangential hole through the wall of flange 256 for entry of the rear derailleur control cable 64 into the cavity defined within cowling 252. Cable guide tube 258 curves downwardly and inwardly from the end of handlebar 222 for direction to rear derailleur cable system 62. Cable guide tube 258 terminates at its outer end with an end cup 260. A ferrule 262 is crimped over the end of forward cable housing section 122 of rear control cable 64, ferrule 262 seating in cable guide tube end cup 260.

Referring now to the arcuate recess 248 in the mandrel portion 242 of fixed body 240, it includes a pair of arcuately spaced slip surfaces 264 which terminate at respective generally radially oriented end abutment shoulders 266 and 268 of recess 248. Shoulder 266 may be characterized as the "down-shifting" shoulder, since detent spring 250 seats against it during down-shifting events; and shoulder 268 may be characterized as the "up-shifting" shoulder, since the detent spring seats against it during up-shifting events. A pair of ribs or projections 270 and 272 extend radially outwardly from recess 248 at the ends of slip surfaces 264, opposite respective abutment shoulders 266 and 268. Ribs or projections 270 and 272 are spaced apart from each other, but as a pair, they are offset closer to up-shifting shoulder 268 than down-shifting shoulder 266.

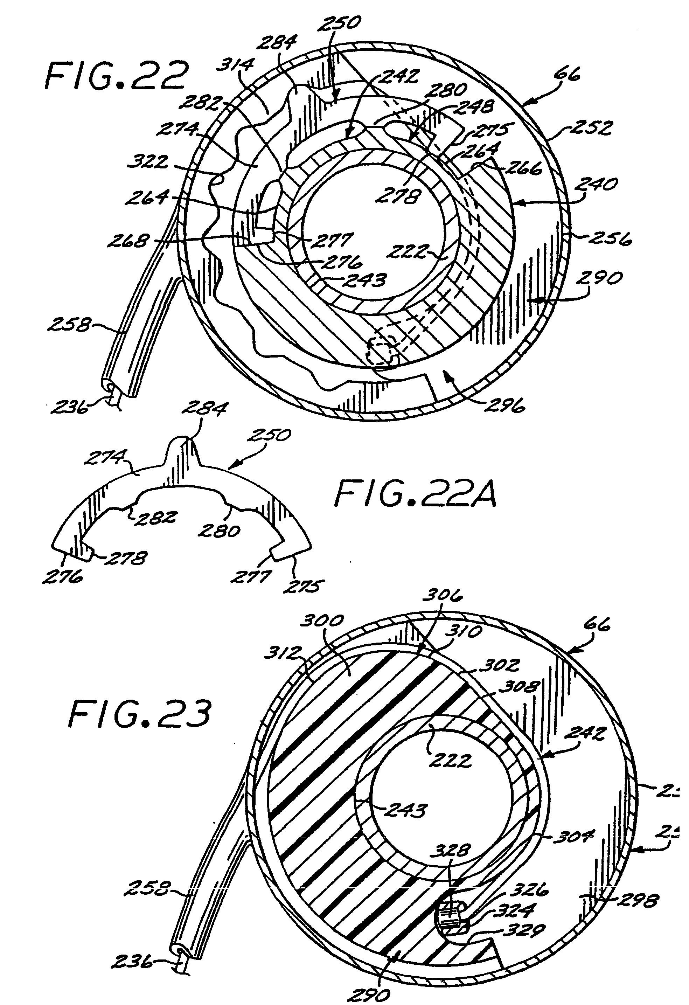

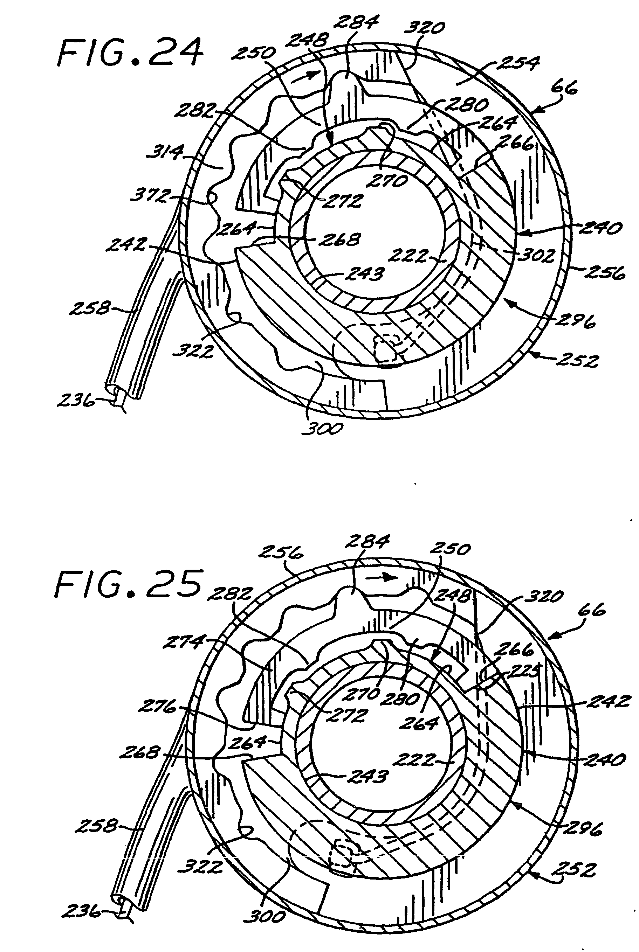

The arcuate spring member 250 for this form of the invention will now be described. Spring member 250 is a leaf spring which has an arcuate body portion 274, with ends thereof 275 and 276 which are adapted to seat against body shoulders 266 and 268 according to whether a down-shifting or up-shifting event is being effected. During a down-shifting event, spring end 275 will abut against end abutment shoulder 266, as seen in Figures 24-26, while during an up-shifting event spring end 276 will abut against abutment shoulder 268 as seen in Figures 22, 28 and 29.

Arcuate detent spring member 250 has two pairs of generally radially inwardly directed feet or ribs. One pair of these feet or ribs is designated 277 and 278, which are outer end feet located proximate respective ends 275 and 276 of acuate body portion 274 of the spring. The other pair of feet or ribs is designated as inner feet or ribs 280 and 282, since they are inwardly spaced from spring ends 275 and 276, and these inner feet or ribs 280 and 282 are spaced apart the same distance as the spacing between body projections or ribs 270 and 272. However, as a pair, inwardly directed spring ribs 280 and 282 are equally spaced from ends 275 and 276 of arcuate spring body portion 274.

A rounded shift indexing projection 284 exends generally radially outwardly from arcuate body portion 274 of spring member 250.

### Outer Handgrip Rotating Portion of Rear Handgrip Shift Actuator 66

The rotating portion of rear handgrip shift actuator 66 is generally designated 290, and is best seen in Figures 19 and 21-29. Handgrip rotating portion 290 includes an elongated cylindrical body 292 rotatably supported on handlebar 222 immediately inboard of the fixed right grip 226, which axially locates body 292 on handlebar 222 in the outboard direction. A foam rubber or neoprene grip 294 is fixedly mounted around rotatable cylindrical body 292 for radially enlarged and comfortable hand actuation of handgrip rotating portion 290.

A cable actuating flange structure generally designated 296 extends generally radially outwardly from the axially inner end of cylindrical body 292 (relative to the end of handlebar 222). Looking in stages axially away from the end of handlebar 222, cable actuating flange 296 has the following portions.

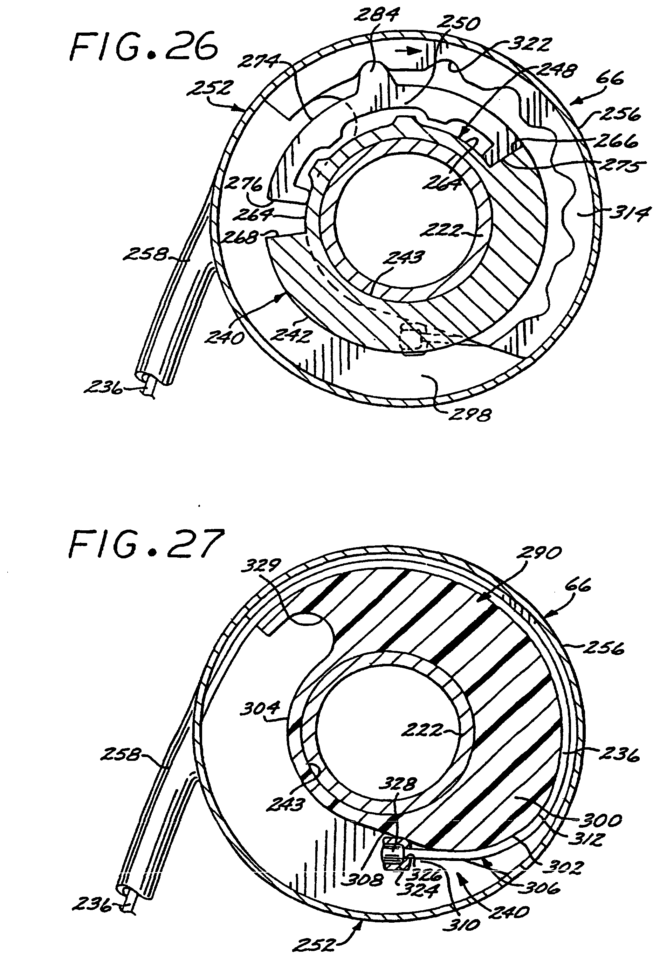

First, a disk portion 298 extending radially outwardly from the inner end of cylindrical body 292. In a prototype of the invention, disk portion 298 was made approximately 1 mm in thickness. Second, a cable actuating section generally designated 300, which projects axially from disk portion 298, and in said prototype of the invention had an approximately 3 mm axial exent from the disk portion 298. Cable actuating section 300 is best seen in the radial or diammetrical sections of Figures 23 and 27, and is also seen in Figure 21. A rotationally oriented cable cam groove 302 in cable actuating section 300 opens generally radially outwardly so as to receive rear derailleur control cable 236 Cable actuating section 300 commences rotationally with a thin cylindrical cable slide section 304 which, working counterclockwise in Figures 23 and 27, transitions into a "shovel cam" generally designated 306. Shovel cam 306 has a transitional entry portion 308 leading from the thin cylindrical slide section 304, a radially progressing cam ramp portion 310, and primary cam lobe portion 312. The surface of shovel cam 306 is contained in groove 302. Cam groove 302 is generally defined between disk portion 298 of cable actuating flange structure 296 and a third component of cable actuating flange structure 296, which is a generally semicircular detent section 314 projecting axially from cable actuating section 300.

Detent section 314 of cable actuating flange structure 296 has an outer cylindrical surface which registers radially with disk portion 298. An axially thin angular cable guide 320 defines the leading portion of cable cam groove 302 on cable actuating section 300, fairing into detent section 314.

Detent section 314 has a series of radially inwardly opening, circularly spaced detent notches 322 within which the rounded indexing projection 284 of spring member 250 is successively received and detented to index shift drive chain 50 on the respective sprockets of rear derailleur multiple freewheel 52. In the rear derailleur handgrip shift actuator 66 illustrated in Figures 19-31, there are seven of these detent notches 322, corresponding to a multiple freewheel 52 having seven sprockets. These detent notches 322 are circularly spaced relative to each other to achieve accurate alignment of drive chain 50 with the respective sprockets of multiple freewheel 52 in the final respective gear-shifted positions of rear handgrip shift actuator 66. Corresponding to the lateral spacing between the various sprockets of multiple freewheel 52, the spacings between detent notches 322 may vary as required for accurate alignment of drive chain 50 with the respective sprockets of multiple freewheel 52.

As seen in full lines in Figures 23, 27, 30 and 31, and in dotted lines in Figures 22, 24-26, 28 and 29, a stationary cupped cable end bracket 324 is supported on the inner support portion 242 of fixed body 240. The end portion of rear control cable 64 extends through a hole 326 in bracket 324, with a cable end bead 328, usually of lead, being seated in cable end bracket 324. Cable end bracket 324 and cable end bead 328 seated therein secure the handgrip end of rear derailleur control cable 236 in a fixed position relative to actuator body 240 and handlebar 222.

As aforesaid, shovel cam 306 includes three portions, a transitional entry portion 308, a cam ramp portion 310, and a cam lobe portion 312. Cam lobe portion 312 has a cupped end 329. In the highest gear position illustrated in Figures 23-26, this cup end 329 engages over fixed cable end bracket 324 and cable end bead 328, this being the most counterclockwise position of handgrip rotating portion 290 as viewed in Figures 22-24. In the lowest gear position illustrated in Figures 26-28, cupped end 329 is rotationally spaced clockwise about 136° from cable end bracket 324 and end bead 328 as seen in Figure 27.

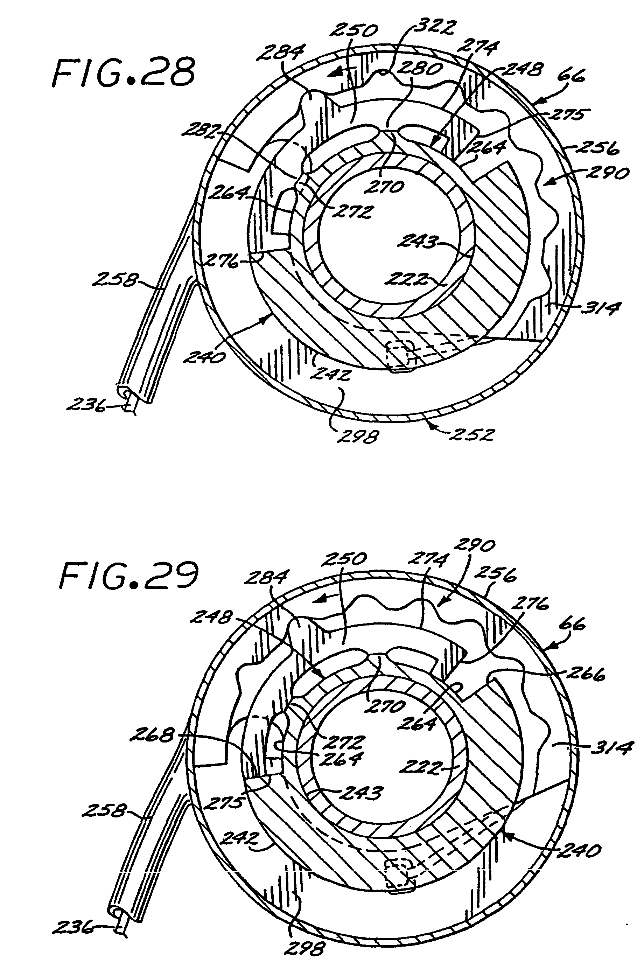

### Mode of Operation of Rear Derailleur Handgrip Shift Actuator 66 of Figures 29-31

Sequential down-shifting events of rear derailleur handgrip shift actuator 66 are illustrated in Figures 24-27, with the full down-shifted position shown in Figures 26 and 27; and up-shifting events are illustrated in Figures 28 and 29, with the full up-shifted position illustrated in Figures 22 and 23.

### Rear Derailleur Down-Shifting Events

Rear derailleur down-shifting events start from the full up-shifted position illustrated in Figures 22 and 23, and progress through Figures 24-27, to the full down-shifted position of Figures 26 and 27. Down-shifting is from the smallest sprocket of rear derailleur freewheel 52 (the highest gear ratio) through the series of freewheel sprockets to the largest (lowest gear) freewheel sprocket of freewheel 52. The mechanism of rear shift actuator 66 is preferably arranged so that actuator 66 is moved overhand toward the rider during down-shift events, and overhand away from the rider during up-shifting events. Thus, as viewed in Figure 19, during down-shifting events, the top of shift actuator 66 is being pulled or rotated toward the bicycle rider. The same is true for Figure 21. For down-shifting events, rear handgrip shift actuator 66 is rotated clockwise in Figures 20 and 22-27, with the full down-shifted position shown in Figures 26 and 27, the down-shifting directional arrows being shown in Figures 24-26.

Referring now to Figures 22 and 23, in which this first form is shown in its full up-shifted position, and therefore in position to start a series of down-shifting events, the parts are in the following locations. (1) Rear control cable 236 is in its most relaxed position, with cam lobe portion 312 of shovel cam 306 in its most counterclockwise position as seen in Figure 23. (2) Indexing projection 284 on arcuate spring member 250 is lodged in the highest gear (most clockwise as seen in Figures 22 and 24) notch of the series 322 of spring detent notches. (3) The end 276 of arcuate spring member 250 (the counterclockwise end as viewed in Figures 22, 24-26, 28 and 29) is located against shoulder 268 of arcuate recess 248 in fixed body 240, as seen in Figure 22. (4) The pair of radially outwardly directed projections 270 and 272 on fixed body 240 is rotationally aligned with the similarly arcuately spaced inner feet 280 and 282 of arcuate spring member 250, to provide the higher spring rate for previous up-shifting events, relative to down-shifting events. (5) Cable end bracket 324 and end bead 328 are received in the cupped end 329 of cable actuating section 300 of rotating handgrip portion 290.

The first step in the down-shifting sequence is best seen in Figures 22 and 24, arcuate spring member 250 having been moved from its up-shifting position of Figure 22 where it abutted against shoulder 268 of fixed body 240 to the down-shifting position of Figure 24 where the other end of spring member 250 abuts against shoulder 266 of fixed body 240. During this first increment of down-shifting movement, spring indexing projection 284 remains seated in the highest gear spring detent 322 so that with rotation (clockwise in Figures 22-24) of handgrip rotating portion 290, spring member 250 is shifted from abutment with fixed shoulder 268 to abutment with fixed shoulder 266, inner feet 280 and 282 of spring member 250 shifting off of the respective projections 270 and 272 so that the spring rate of spring 250 is reduced to the spring rate of the entire length of spring 250 between its outer end feet 277 and 278. This first increment of movement of rotating handgrip portion 290 accomplishes three things. First, shifting of spring 250 to the lower spring rate provides compensation for the increased derailleur return spring force during down-shifting events. Second, it provides handgrip rotating portion 290 a preliminary increment of rotational movement for initial takeup of rear control cable 236 to overcame lost motion in the rear derailleur mechanism and rear derailleur cable system as previously described. Third, it provides an overshift increment of cable movement for positive index shifting, as also previously described.

As down-shifting rotational movement of rotating handgrip portion 290 progresses clockwise as viewed in Figures 22-27, indexing projection 284 of arcuate spring member 250 is received in successive spring detents 322 from the highest gear detent as shown in Figure 24, then through the next highest gear detent as shown in Figure 25, and finally to the lowest gear detent as shown in Figure 26.

Figures 23 and 27 best illustrate how cable-pulling actuation is accomplished during down-shifting rotational movement of handgrip rotating portion 290. Looking first at Figure 23, which represents the fully up-shifted position of handgrip rotating portion 290, cam lobe 312 of shovel cam 306 is in its most counterclockwise location, closest to cable guide tube 258, with a substantial extent of rear control cable 236 bent around the small or minor diameter cylindrical cable guide section 304 of cable cam groove 302. Thus, in Figure 23 cable 236 is let out to its most extended position. As handgrip rotating portion 290 is rotated to pull cable 236 through rear derailleur down-shifting events from the positions of Figures 22 and 23 to the final down-shifted positions of Figures 26 and 27, shovel cam lobe 312 rotates clockwise as seen in Figures 23 and 27 to expand the cable loop around shovel cam 306, progressively moving more and more of cable 23 off of the thin cylindrical cable slide section 304 of cam groove 302 onto the entry, ramp and lobe portions 308, 310 and 312, respectively, of shovel cam 306, thus pulling in cable 236 so as to progressively shift rear derailleur mechanism 56 across multiple freewheel 52.

Shovel cam 306 provides a great deal of flexibility for adaptation to, and hence for retrofitting to, the variety of satisfactory rear derailleur mechanisms which have been on the market for the last few years. The differential between the smaller diameter of the thin cable slide section 304 and the larger diameter of shovel cam lobe portion 312 can be tailored to the amount of cable movement required for any particular rear derailleur mechanism, whether past, present or future. Conventional derailleur mechanisms at this time require approximately .760 inches of cable to be pulled in order to down-shift from the smallest to the largest freewheel sprocket. Testing has indicated that a diameter differential of from approximately 1 inch for cable slide section 304 to approximately 1.6 inches for cam lobe 312 will provide this .760 inches of cable pulling with approximately 136° of rotation of handgrip rotating portion 290, which is within a normal range of shifting rotation, and also within a normal torque range. For an experimental model having a cable slide section 304 diameter of 1 inch and a cam lobe 312 diameter of 1.6 inches, the amount of rotation of handgrip rotating portion 290 can be calculated as pi times (1.6 minus 1, i.e. D-d), which is the 136° referred to above. Thus, there is a considerably greater amount of rotational movement of handgrip rotating portion 290 per increment of cable movement relative to the simple spool actuators noted in the Prior Art section, and hence a considerably greater mechanical advantage over the simple spool actuators, and therefore also the ability to space the rotating detents 322 further apart for more accurate detenting and minimization of wear on the detent walls.

With cable 236 in its released, highest gear position, a substantial extent of the cable within cowling 252 is wrapped around the thin cylindrical section 304 of cable actuating section 300, as seen in Figure 23. According to the mode of operation the loop of cable wire in cam groove 302 is expanded from this highest gear position to a larger diameter during down-shifting events, while the cable end, at end bead 328, remains stationary on fixed body 240. This is the opposite of conventional simple spool rotating actuators in which the cable end is rotated by the actuator, so that there can be no mechanical advantage. Thus, while a desirable, easy-operating rotable grip 290 can have any desired number of degrees of rotation between the highest and lowest gear ratios, as for example a particularly desirable rotational extent of approximately 136°, conventional simple spool shifters are restricted to only about 80° of rotational movement, making pulling much more difficult, detents disadvantageously disposed considerably closer together, and generally requiring derailleur mechanisms to be redesigned for larger amounts of cable movement than the normal approximately .760 inches of movement of cable pulling.

By adjusting the ratio of the larger diameter of cam lobe 312 and smaller diameter of cable slide section 304, the amount of cable movement, and correspondingly the amount of mechanical advantage obtained, can be adjusted to perfectly suit, and retrofit to, any existing rear derailleur mechanism. To the contrary, current simple spool handgrip shift actuators require complete redesigning of the derailleur mechanisms to fit the limited rotational capability of the actuator. The derailleur design must be compromised from optimum to order to do this.

The spiral, curving shape of shovel cam 306 has a "nautilus" configuration which varies as it progresses through the transition front entry portion 308, cam ramp portion 310, and cam lobe portion 312 so as to adapt to variations in cable pull requirements between the successive different sprockets of rear derailleur freewheel 52. Such cable pull variations are primarily the result of increasing derailleur return spring force for successive down-shifting events, and these variations are compensated for by contouring shovel cam 306 so as to provide a progressive decrease of cable pulling extent per degrees of rotation of handgrip rotating portion 290 during a series of cable-pulling down-shifting events.

The first form of rear derailleur handgrip shift actuator 66 illustrated in detail in Figures 20-31 relies primarily upon the two-stage spring rate of the arcuate detent spring member 250 to compensate for the relatively higher force required for down-shifting than up-shifting because of the higher derailleur return spring force during down-shifting. Nevertheless, the amount of pulling effort in down-shifting can be further adjusted, or fine-tuned, for each of the sprockets of rear multiple freewheel 52 by varying the angles of inclination of the sides of detent notches 322. This would be only a relatively small amount of adjustment for the first form of the rear derailleur actuator shown in detail in Figures 20-31, wherein the dual-rate detent spring 250 provides primary compensation for the difference in derailleur spring force between down-shifting and up-shifting. In a second form of rear derailleur handgrip shift actuator 66b shown in Figures 40-43, the primary means of compensation for the difference in rear derailleur return spring force between down-shifting and up-shifting is a difference in the angles of inclination of the opposite sides of the actuator spring detent notches.

It is presently preferred that the progressive height of shovel cam 306 as it progresses into cam lobe portion 312 from ramp portion 310 be sufficient for each of the sprockets of multiple freewheel 52 to cause the rear derailleur mechanism to move the chain a sufficient overshift amount beyond the destination freewheel sprocket in a down-shifting event so that the chain will approach the destination sprocket in the same direction as it would in an up-shifting event, the progressive shovel cam height being sufficient to first release the lost motion backlash in the rear derailleur and cable systems, and then allow some reverse chain movement toward the destination sprocket of freewheel 52. Such chain reversal is an observable phenomenon. In a conventional cable system, cable housing compression and warping are only substantially completely released or backlashed when the relatively higher cable tension friction vector that opposes down-shift cable movement is reversed to the relatively lesser cable friction vector of up-shift cable movement.

Applicants consider the maximum limit of the height of shovel cam lobe 312 for each down-shift event except the final one to sprocket #1 to be such that shovel cam lobe 312 not cause rear derailleur mechanism 56 to move chain 50 sufficiently far laterally inwardly to cause a double shift, i.e., to skip on over the destination sprocket to the next sprocket. For the largest, lowest gear sprocket #1, applicants consider the upper limit for the height of shovel cam lobe 312 to be such that it not cause rear derailleur mechanism 56 to move chain 50 laterally inwardly toward the sufficiently to derail chain 50 off of sprocket #1.

While applicants consider these to be the upper limits for the heights of shovel cam lobe 312 for the respective sprockets of freewheel 52, it is presently preferred that these heights of shovel cam lobe 312 not cause the derailleur mechanism to shift chain 50 laterally during any down-shifting event sufficiently to cause chain rasp against the next freewheel sprocket inboard of the destination sprocket. Nevertheless, for optimum positive index shifting, applicants prefer that each portion of shovel cam lobe 312 relating to a respective sprocket of multiple freewheel 52 be sufficiently high to bring chain 50 as close to the next freewheel sprocket as possible without the chain rasping against the next freewheel sprocket. These maximum and preferred upper limits are observable phenomena. Up-Shifting of the Rear Derailleur by the First Shovel Cam Shown in Figures 21-31

Up-shifting to a smaller freewheel sprocket does not require overshifting for accurate centering of the chain on the destination sprocket, and release of lost motions in the derailleur system and cable system is automatic. Up-shifting is illustrated in Figures 27-29, with the fully down-shifted position shown in Figures 27 and 28, and up-shifting movement shown in Figure 29, the up-shifting actuation being illustrated by the rotation arrows shown in Figures 28 and 29.

In the fully down-shifted position from which up-shifting may be started, indexing projection 284 of detent spring member 250 is located in the most counterclockwise detent 322 as seen in Figures 26 and 28, while shovel cam 306 has cable 236 in its most retracted condition as seen in Figure 27.

Up-shifting movement of handgrip rotation portion 290 is the opposite of down-shifting movement, and overhand away from the rider as viewed in Figure 19, or counterclockwise as viewed in Figures 22-29. The first increment of such counterclockwise rotational movement of handgrip rotating portion 290 causes arcuate spring member 250 to shift counterclockwise relative to fixed body 240, which causes it to shift from its relatively low spring rate position of Figure 26 to its relatively high spring rate position of Figure 28, wherein inner feet 280 and 282 of spring 250 are engaged over ribs or projections 270 and 272 of fixed body 240 so that the handgrip shift actuator operating force is generally the same for up-shifting, which is with derailleur spring force, as for down-shifting, which is against derailleur spring force. This preliminary up-shifting rotation of rotating handgrip portion 290 which moves spring 250 to its higher spring rate position also releases the rear derailleur mechanism and cable system lost motions which may have been left after previous down-shifting. Figure 29 illustrates handgrip rotating portion 290 progressing counterclockwise, in the up-shifting direction, with indexing projection 284 of spring 250 sequentially shifting between spring detents 322 which correspond to the respective freewheel sprockets.

### Front Handgrip Shift Actuator 60

Front handgrip shift actuator 60, which is preferably located immediately inboard of the fixed left handlebar grip 224, is shown in detail in Figures 32-39 with respect to both structure and operation. Front derailleur shift actuator 60 includes a generally circular body 240a similar to rear derailleur shift actuator body 240. Body 240a includes an inner mandrel support portion 242a which has an annular central opening allowing it to fit over handlebar 222. A threaded radial bore 244a in mandrel 242a receives a set screw 246a which both rotationally and axially locks mandrel 242a on handlebar 222.

A radially outwardly facing arcuate recess 248a in mandrel 242a is adapted to receive a generally complementary arcuate leaf spring member 250a, which is preferably made of a tough, resilient resin such as Delrin, but which could be made of other suitable resin or spring metal. In front handgrip shift actuator 60, the configuration of arcuate recess 248a cooperates with arcuate spring member 250a so as to (1) provide positive overshift between successive chain rings in the down-shifting direction from a smaller chain ring to a larger chain ring, and (2) enable the chain to be shifted slightly back and forth relative to the particular chain ring upon which it may be engaged so as to eliminate chain rasp or scraping. This requires that arcuate spring member 250a be positively retained in either of two rotational locations which are selective according to nonshifting rotational increments in both directions of the rotating handgrip member, as described in detail hereinafter.

Fixed body 240a has an outer cowling portion 252a which is integral with and extends radially outwardly from mandrel support portion 242a, and includes a generally flat radial portion 254a, terminating at its radial outer edge with a cylindrical flange portion 256a which is axially oriented generally toward the left end of handlebar 222. A cable guide tube 258a extends generally tangentially from the outside of flange 256a, its central passage registering with a generally tangential hole through the wall of flange 256a for entry of front derailleur control cable 230 into the cavity defined within cowling 252a. Cable guide tube 258a terminates at its outer end in the same manner as rear derailleur cable guide tube 258 as shown in Figure 20.

Arcuate recess 248a differs considerably from the corresponding arcuate recess 248 of rear actuator 66. Recess 248a does have respective down-shift and up-shift end abutment shoulders 266a and 268a. The configuration of recess 248a is distinctive in having a pair of arcuately wide, radially outwardly projecting ribs 330 and 332 which, in part, define a pair of recess end notches 334 and 336. These recess end notches 334 and 336 are fully defined between the recess outer end abutment shoulders 266a and 268a on the one hand, and arcuately outwardly facing respective shoulders 338 and 340 on respective ribs 330 and 332.

Arcuate spring member 250a is constructed to cooperate with this configuration of recess 248a so as to provide both overshift and selective fine-tuning in front derailleur mechanism 54. Spring member 250a has an arcuate body portion 274a which terminates at ends 275a and 276a. A pair of end feet 277a and 278a proximate respective body ends 275a and 276a extend radially inwardly from body portion 274a, and have rounded cam tips. Arcuate spring member 250a is completed with a generally radially outwardly directed indexing projection 284a which is generally arcuately centrally located on body portion 274a.

Outer handgrip rotating portion 290a of front derailleur shift actuator 60 is essentially the same as outer rotating portion 290 of rear derailleur actuator 66, except for the number of its detent notches to accommodate corresponding number of front derailleur chain rings, and the configuration of its "shovel cam" to accommodate the front derailleur shifting requirements. Thus, outer handgrip rotating portion 290a includes an elongated cylindrical body 292a, a foam rubber or neoprene grip 294a, and a cable actuating flange structure 296a which is similar to the corresponding flange structure 296 of the first form of rear derailleur handgrip shift actuator 66 previously described in detail. Thus, cable actuating flange structure 296a for front handgrip shift actuator 60 includes a radially oriented disk portion 298a, and a cable actuating section 300a which is generally like cable actuating section 300 of rear derailleur actuator 66 except that the configuration of the shovel cam corresponding to shovel cam 306 is specifically configured to accommodate the requirements of the front derailleur chain rings. Thus, the front actuator shovel cam has the same general configuration as shovel cam 306 of the rear actuator, with the same general mode of operation and beneficial results as set forth hereinabove.

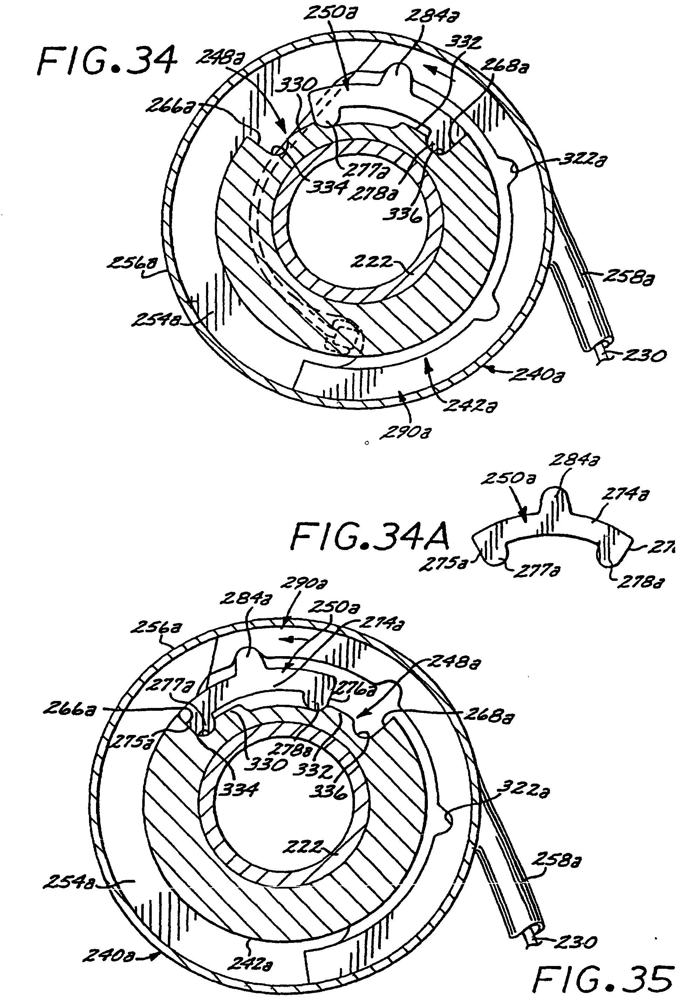

Cable actuating flange structure 296a also includes a generally semicircular detent section 314a which is illustrated in Figures 34-38 as having three generally regularly spaced, radially inwardly directed spring detent notches 322a within which indexing projection 284a of spring member 250a is selectively engaged according to actuation by the rider.

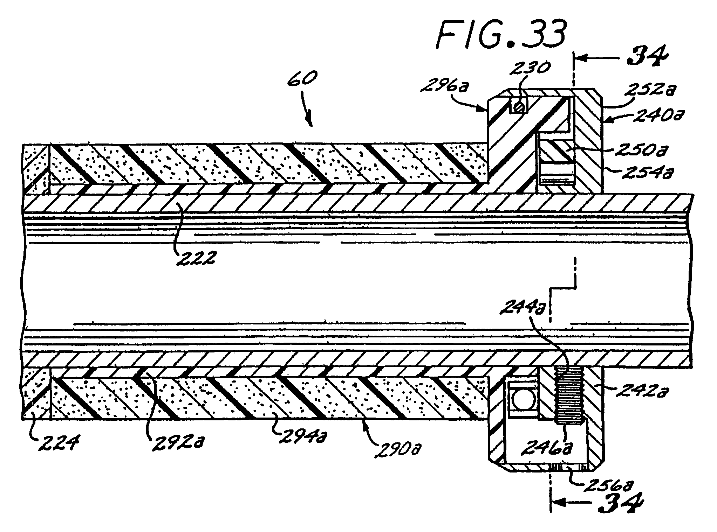

Cable end bracket 324a is seen in Figures 33 and 34, as is cable end bead 328a. These are fixed relative to handlebar 222 in the same manner as cable end bracket 324 and bead 328 in the first form of rear derailleur actuator 66 shown in Figures 19-31.

### Mode of Operation of Front Handgrip Shift Actuator 60

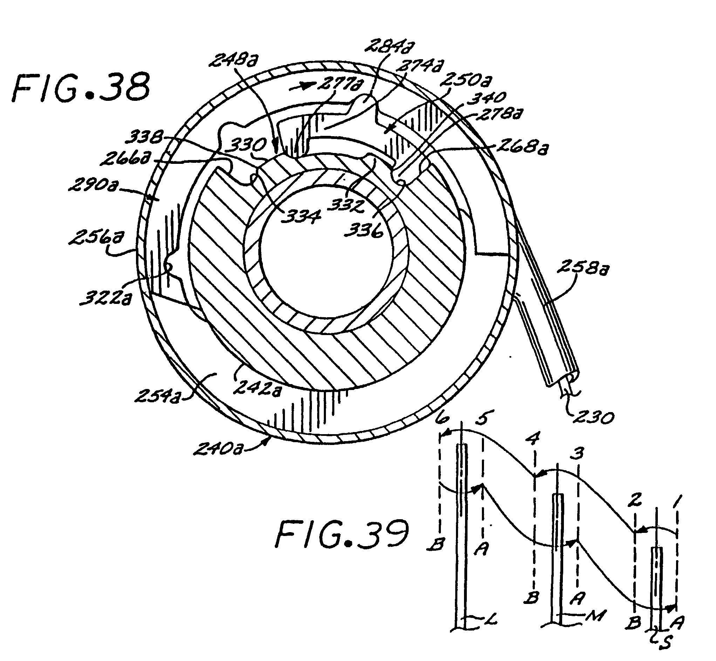

Front handgrip shift actuator 60 has a two-stage mode of operation somewhat similar to the two-stage operation of the first form of rear derailleur handgrip shift actuator 66 previously described in detail, but serving the two principal purposes of taking up overshift, and then allowing the rider lateral chain shifting options to avoid chain rasp regardless of the lateral location of the rear portion of the chain on multiple freewheel 52. To accomplish these purposes, detent spring 250a of front shift actuator 60 has two rotationally specific positions, one being a fully up-shifted, detented position shown in Figures 34 and 38 wherein spring member 250a as viewed in Figures 34-38 is in its most clockwise position relative to front shift actuator body 240a, and the other position of spring member 250a being in a most counterclockwise, detented location relative to fixed body 240a as seen in Figures 35-37 which is the location of spring 250a during down-shifting events.

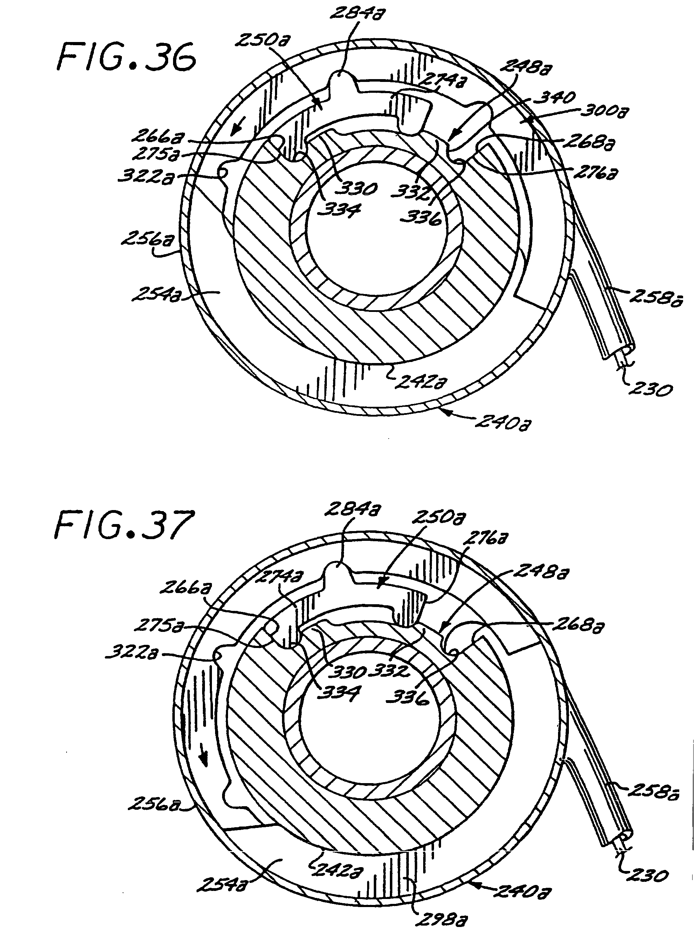

The rotational interlock between indexing projection 284a of spring member 250a and spring detent notches 322a on shift actuator rotator 290a is stronger than the rotational interlock between end feet 277a and 278a of spring 250a within fixed end notches 334 and 336 of fixed body 240a. Accordingly, at the initiation of a down-shifting event for the front derailleur, as illustrated in Figures 34 and 35, handgrip rotating portion 290a will carry spring member 250a from the fully up-shifted position of Figure 34 counterclockwise to the down-shifting position of Figure 35. This prioritized increment of movement of spring 250a will allow rotating handgrip portion 290a to pull front derailleur cable 230 to an overshift location of drive chain 50 relative to the front derailleur destination chain ring to which it is being moved, e.g., from the smallest front derailleur chain ring to the middle front derailleur chain ring of a three-chain ring cluster. The relative locations of the parts in this situation are illustrated in Figure 36, wherein indexing projection 284a of spring 250a is located in middle spring detent 322a of handgrip rotator 290a, and spring 250a is located in its most counterclockwise position.

With chain 50 thus engaged in an overshifted position on the middle front derailleur chain ring, further down-shifting rotation of handgrip rotator 290a (counterclockwise as viewed in Figures 34-37) will move the most clockwise detent 322a of handgrip rotator 290a into engagement with spring indexing projection 284a, as shown in Figure 37. This corresponds to the largest, lowest gear chain ring, still with an overshift component of outward lateral chain location due to the counterclockwise detented position of spring 250a as seen in Figures 35, 36 and 37.

Thus, while the overshifting increments of movement of chain 50 during down-shifting are automatically accommodated by the counterclockwise movement of spring 250a as viewed in Figures 34-37, the lateral chain location can be fine-tuned to avoid chain rasp in any one of the three chain ring locations by rotation of front actuator rotator 290a overhand away from the rider a sufficient amount to shift spring 250a clockwise as seen in Figures 34 and 38, but insufficiently to shift up from a larger chain ring to a next smaller chain ring. The rider thus has two optional fine-tune positions for the chain, as required to eliminate chain rasp according to the lateral location of the rear portion of chain 50 on multiple freewheel 52, the down-shifting location of spring 250a as viewed in Figures 35-37, or the up-shifting position of spring 250a as viewed in Figures 34 and 38.

Up-shifting from larger chain rings to smaller chain rings is illustrated in Figure 38 where the rotational arrow for handgrip rotator 290a is in the clockwise direction, indicating overhand rotation of rotator 290a away from the rider. During such up-shifting, front handgrip shift actuator 60 operates in reverse from down-shifting, its first increment of movement moving detent spring 250a clockwise or to the right as seen in Figure 38 to release any overshift chain positioning that may have remained from down-shifting, and then further movement shifting successive spring detent notches 322a of rotator 290a into detented cooperation with spring indexing projection 284a. Again, as with a series of down-shifting events, such a series of up-shifting events leaves the rider with the option of two detented positions of handgrip rotator 290a so as to avoid chain rasp according to the lateral location of the rear portion of chain 50 on multiple freewheel 52.

Figure 39 diagrammatically illustrates sequences of down-shifting and up-shifting events for a three chain ring front derailleur system. In Figure 39 the upper series of curving arrows represents three down-shifting events, while the lower series of curving arrows represents three up-shifting events. Looking from right to left in Figure 39, at the right-hand side is the smallest of the three front derailleur chain rings; in the middle is the middle or intermediate size chain ring; and at the left side is the large chain ring. These are designated S, M and L, respectively, in Figure 39. Vertical dotted lines bracket each of these three chain rings S, M and L, indicating each of the two chain positions available to the rider for each of the three chain rings S, M and L.

At the top of Figure 39, numbers 1 and 2 indicate the two optional chain positions on opposite sides of the small chain ring, numbers 3 and 4 indicate the two optional chain locations on opposite sides of the middle chain ring, and numbers 5 and 6 indicate the two optional positions on opposite sides of the large chain ring. At the bottom of Figure 39, positions 1 and 2 are also marked A and B, positions 3 and 4 are also marked A and B, and positions 5 and 6 are also marked A and B. A represents the up-shifted location of spring 250a illustrated in Figures 34 and 38, while B illustrates the down-shifted position of spring 250a illustrated in Figures 35-37.

In a down-shifting sequence, chain 50 will start at either position 1 or position 2, with the starting position of spring 250a at either respective position A or B, according to rider adjustment to avoid chain rasp. If the chain is in position 1, and spring 250a in position A, the first increment of movement in a down-shifting event will be from position 1 to position 2, moving the spring from its position A to its position B. The middle upper arrow indicates movement from position 2 to position 4, indicating overshift lateral chain movement from small chain ring S to middle chain ring M, with an overshift increment of movement of the chain beyond middle chain ring M to position 4, which is enabled by shifting of spring 250a to its B position. Further down-shifting to large chain ring L is indicated by the left-hand upper arrow and similarly involves an overshift increment to the position 6, wherein spring 250a is in its position B.

In any of these three chain ring locations, small, middle or large, front shift actuator rotator 290a can be rotationally adjusted to place spring 250a in either of its detented locations A or B to avoid chain rasp, which is generally determined by the sprocket of rear multiple freewheel 52 upon which the chain is located at the time. Thus, chain 50 may optionally be located in either position 1 or 2 for the small chain ring S, position 3 or 4 for the middle chain ring M, or position 5 or 6 for the large chain ring L.

Up-shifting from large chain ring L through middle chain ring M to small chain ring S leaves these same anti-chain rasp options. At the start of a series of up-shifting events, the chain will be in either position 6 or position 5, with detent spring 250a correspondingly in either respective position B or position A. If in position 6/B, the first increment of movement of front derailleur shifter 60 will move the chain to position 5 and detent spring 250a to position A. Continuing up-shifting movement of shifter rotator 290a will shift the chain laterally inwardly from large chain ring L past the position 4/B to the position 3/A for positive shifting of the chain onto middle chain ring M; and further up-shifting rotation of handgrip rotator 290a will then shift the chain past position 2/B to position 1/A for positive shifting of chain 50 onto small chain ring S.

Thus, in both the down-shifting and up-shifting directions, overshift is automatically provided for by detented rotational shifting of spring 250a on mandrel 242a, and in each shifting event the rider is left with the option of selecting two chain positions which are slightly on opposite sides of the respective three chain rings so as to assure the ability to eliminate chain rasp.

### Second Shovel Cam Form of Rear Derailleur Handgrip Shift Actuator 66b

Figures 40-43 illustrate a second shovel cam form of rear derailleur handgrip shift actuator, generally designated 66b, wherein the detent spring has a fixed spring rate for both down-shifting events working against the derailleur return spring and up-shifting events working with the derailleur return spring. In this second form of rear derailleur handgrip shift actuator 66b shown in Figures 40-43, the primary means for compensation of the difference in rear derailleur return spring force between down-shifting and up-shifting events is a difference in the angles of inclination of the opposite sides of the actuator spring detent notches. The actuator spring notches can be angled to suit any prior, present or future rear derailleur mechanism to compensate for the higher derailleur return spring force during down-shifting than during up-shifting, and also to fine-tune the shifting for each of the sprockets of rear multiple freewheel 52. The detent spring in the second form of the invention presently to be described rotationally shifts to different locations between down-shifting and up-shifting in the same manner as the detent spring in the first form derailleur actuator shown in Figures 19-31 so as to provide compensation for lost motions or "slop" in the rear derailleur cable system and rear derailleur mechanism, as well as to provide an overshift increment of movement of the rear derailleur control cable.

Rear derailleur shift actuator 66b of Figures 40-43 is constructed the same and has the same mode of operation as rear derailleur shift actuator 66 shown in Figures 19-31, except only for the configurations of the detent spring member, mandrel arcuate recess for the detent spring member, and the side slopes of the spring detent notches in the handgrip rotator.

Thus, rear derailleur shift actuator 66b includes a generally circular body 240b adapted to be fixedly secured to the right-hand part of handlebar 222 inboard of the right-hand fixed handlebar grip 226. Actuator body 240b includes an inner mandrel portion 242b having an annular central opening 243b which allows it to fit over handlebar 222. A threaded radial bore 244b in mandrel 242b receives a set screw 246b, preferably an allen wrench screw, which locks mandrel 242b fixedly on handlebar 222.

Radially outwardly facing arcuate recess 248b in mandrel 242b receives generally complementary arcuate spring member 250b, which is preferably made of a tough, resilient resin such as a Delrin, but which could be made of other suitable resin or a spring metal material.

Fixed body 240b also includes outer cowling portion 252b which is integral with and extends radially outwardly from mandrel 242b, and includes generally flat radial portion 254b and outer cylindrical flange portion 256b. Cable guide tube 258b is structurally and operationally the same as cable guide tube 258 best shown in Figure 20.

Arcuate recess 248b in mandrel 242b differs from the corresponding arcuate recess 248 in the first form of rear derailleur actuating mechanism 66 in that it has an uninterrupted arcuate slip surface 264b which allows for the constant spring rate of arcuate spring member 250b. Arcuate recess 248b has generally radially oriented end abutment shoulders 266b and 268b.

Referring now specifically to detent spring member 250b, it has an arcuate body portion 274b which is generally complementary to arcuate recess 248b, and which has ends 275b and 276b. Spring member 250b has only one pair of generally radially inwardly directed feet, which are end feet 277b and 278b. Otherwise, the inner surface of spring body 274b is uninterrupted. Rounded indexing projection 284b projects generally radially outwardly from spring body 274b, generally centrally located between ends 275b and 276b of spring body 274b.

### Outer Handgrip Rotating Portion of Rear Handgrip Shift Actuator 66b

The rotating portion of the second form of rear handgrip shift actuator 66b is generally designated 290b, and is the same in both structure and operation as the rotator 290 for the first form of rear handgrip shift actuator 66, with two exceptions. First, its spring detent notches have shallower angles of inclination on their down-shifting sides than on their up-shifting sides so as to compensate for the higher rear derailleur return spring loading in the down-shifting direction. Second, cable slide section 304 of actuator 66 has been replaced by a fixed cable-wrap flange, as described in detail below. Thus, handgrip rotator 290b includes an elongated cylindrical body 292b rotatably supported on handlebar 222 immediately inboard of a fixed right grip 226, which axially locates body 292b on handlebar 222 in the outboard direction. A foam rubber or neoprene grip 294b is fixedly mounted around rotatable cylindrical body 292b for radially enlarged and comfortable hand actuation of rotating portion 290b.

A cable actuating flange structure generally designated 296b extends generally radially outwardly from the axially inner end of cylindrical body 292b (relative to the end of handlebar 222). Cable actuating flange structure 296b includes radially oriented disk portion 298b and outer cable actuating section 300b. Cable actuating section 300b includes a cable cam groove 302b which is preferably the same as cable cam groove 302 of the first form of rear handgrip shift actuator 66, including similarly contoured shovel cam 306b having a transitional entry portion 308b, a cam ramp portion 310b and a cam lobe portion 312b.

In the shift actuator form 66b, inner support mandrel 242b includes a fixed axial flange 350 directed toward the handlebar end and radially immediately adjacent handlebar 222. This fixed axial flange 350 replaces cable slide section 304 of rotating handgrip portion 290 of the first form 66 of rear derailleur actuator. Thus, the also-fixed end portion of cable 236 wraps around fixed flange tube 350 before it enters cable cam groove 302b, which eliminates any rubbing of the cable end portion as was characterisic of the sliding contact between the cable end portion and the cable slide portion 304 of handgrip rotator 290 of the first form of derailleur actuator 66.

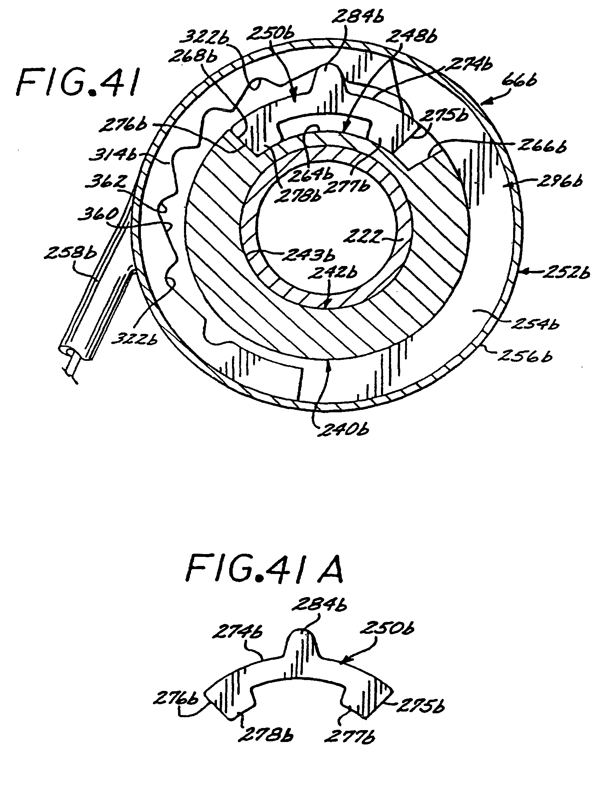

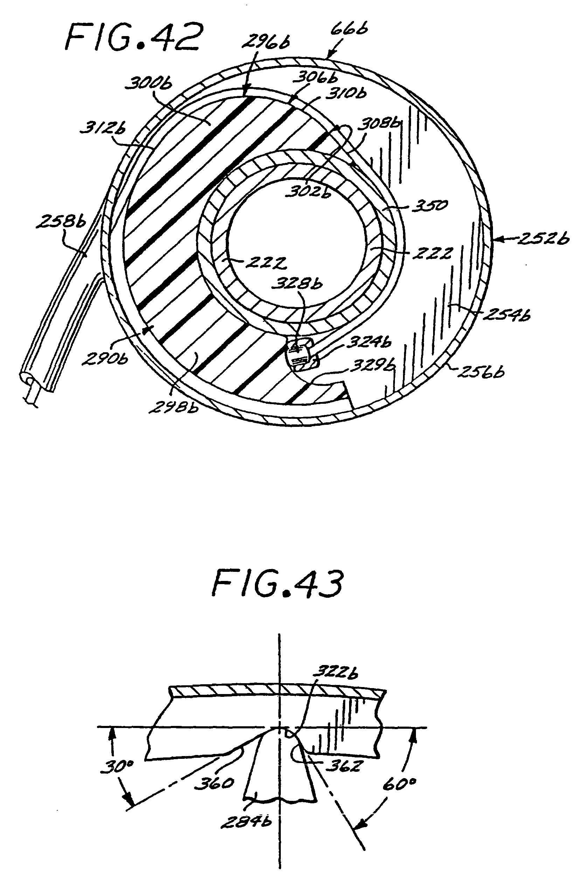

Continuing with cable actuating flange stucture 296b, it includes a generally semi-circular detent section 314b which has a series of spaced, generally radially inwardly opening spring detents 322b, seven of these being shown in Figure 41 to accommodate seven sprockets of a multiple freewheel 52, the rounded spring indexing projection 284b being successively received in these detent notches 322b. Each of spring detent notches 322b has a relatively shallow angle of inclination for addressing rounded spring indexing projection 284b on its cable pulling side 360, as for example approximately 30°, and has a relatively steep angle of inclination for addressing the rounded indexing projection 284b on its cable release side 362, as for example approximately 60°. This difference between the angles of inclination on the cable pulling sides 360 of detent grooves 322b and the cable release sides 362 of spring detents 322b substantially equalizes the difference in the amount of force exerted by the rear derailleur cable return spring between cable pulling and cable releasing for respective down-shifting movements of actuator 66b and up-shifting movements of actuator 66b. As best seen in Figure 43, rounded spring indexing projection 284b has an included angle that is somewhat less than 60° to accommodate an approximately 60° angle of inclination for cable release sides 362 of spring detents 322b. Thus, the cable release side of indexing projection 284b is somewhat less than approximately 30°. If desired, the cable pulling side of rounded indexing projection 284b could have a greater included angle, although somewhat less than 60°.

The cable end within shifter 66b terminates with an end bead 328b seated in a cable end bracket 324b, and these may be the same as end bead 328 and end bracket 324 shown and described with the first form of rear handgrip shift actuator 66; alternatively, the cable end may be brought to the outside of cowling 252 through a hole in cowling disk 254b, with the cable end bead located externally.

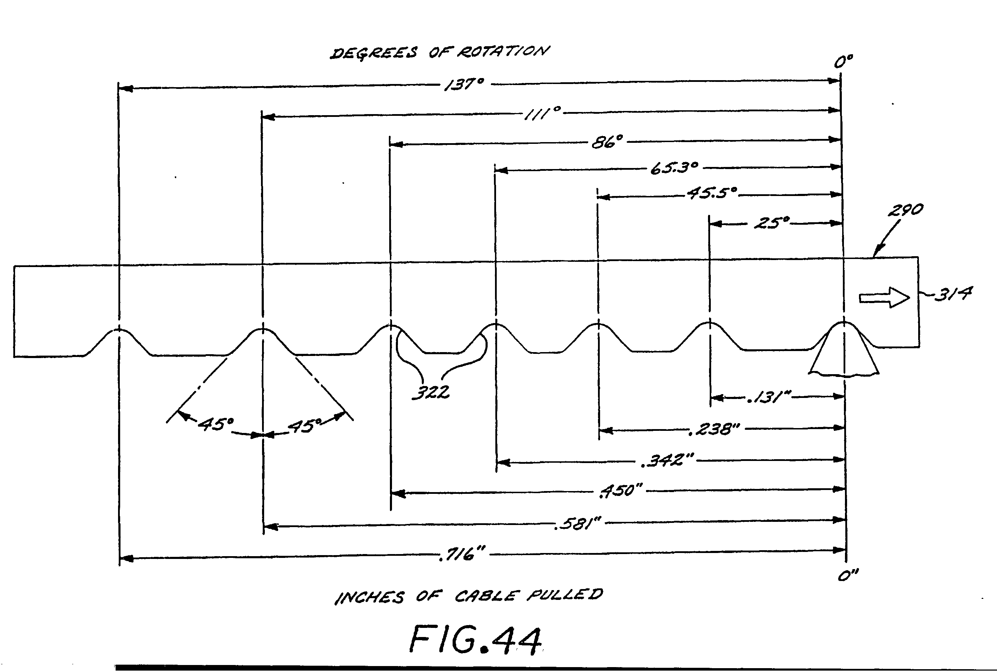

Figure 44 is a diagrammatic illustration of the detent section 314 of rotator 290 for rear handgrip actuator 66, giving representative values for the amount of cable pulled and the number of degrees of rotation of handgrip rotator 290 for the various detents 322. In Figure 44 detent section 314 of handgrip rotator 290 has been laid out flat for clarity and understanding.

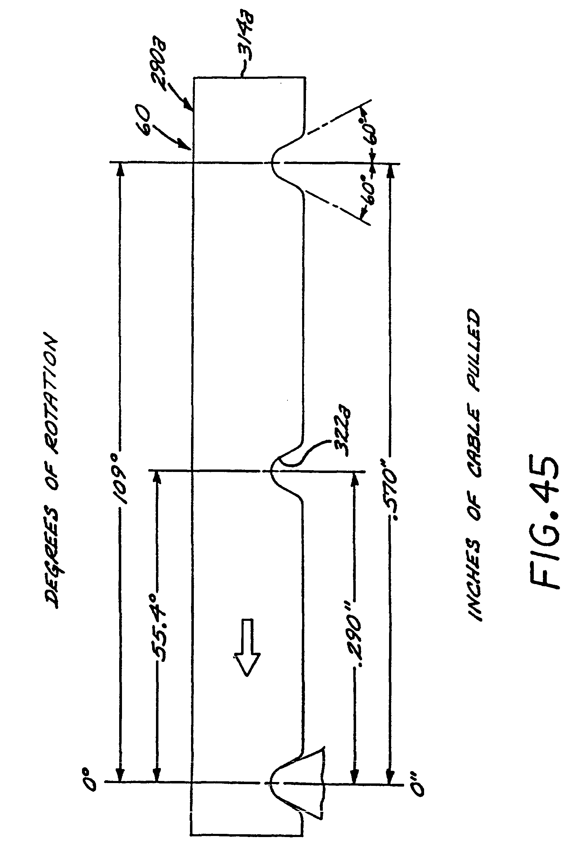

Figure 45 is a view similar to Figure 44 but for detent section 314a of rotator 290a for front derailleur shift actuator 60, also indicating representative amounts of cable pull and degrees of rotation for the various detents 322a.

### Jack Spool Forms of Handgrip Shift Actuator

The following description of the jack spool forms of handgrip shift actuator according to the invention will be prefaced by a brief review of the "shovel cam" forms of the invention so that the differences between the jack spool forms and the shovel cam forms can best be appreciated in the following Detailed Description.

The first shovel cam form of handgrip shift actuator is illustrated in Figures 19-39, and utilizes a cam lobe which directly slideably pulls and releases the derailleur control cable to effect respective down-shifting and up-shifting, the cable having its handgrip shifter end fixedly secured in the shifter body that is stationary relative to the handlebar. The first shovel cam form had a thin cylindrical "slide" section that rotated with the cam lobe and added a small amount of sliding friction to a larger amount of sliding friction between the cam lobe and the cable.

The second shovel cam form illustrated in Figures 40-43 differs from the first shovel cam form in that the slide section of the shovel cam and its small amount of cable friction are eliminated by laying the fixed end portion of the cable around a thin fixed tube.

Both of these shovel cam forms of the invention required that the cable exit the shifter body at a substantial angle relative to the common axis of the handlebar and shift actuator, adding further friction of the actuator cable exit structure to the derailleur shifter cable. Despite these regions of cable friction, which all represent relatively low amounts of friction, the shovel cam forms of shift actuator function excellently, and far better than most prior art bicycle derailleur shifters.

The forms of handgrip shift actuator presently to be described are illustrated in Figures 46-69, and are referred to by applicants as their "jack spool" handgrip shift actuators. As will be appreciated from the following description and accompanying drawings, the jack spool arrangement is intrinsically a very low friction apparatus. It eliminates cable sliding friction in the conversion of handgrip rotary motion to cable translation movement, and enables the cable to exit the shifter body at any desired angle, preferably generally parallel to the handlebar, which substantially eliminates cable exit friction.

Figure 46, like Figure 19, illustrates the front end portion of a "mountain bike" which is generally designated 400, having a widespread handlebar 402 that angles slightly rearwardly. Conventional fixed left and right grips 404 and 406, respectively, are located on the ends of handlebar 402. The front derailleur handgrip shift actuator is generally designated 408, and is engaged over handlebar 402 immediately inboard of left fixed grip 404. The rear derailleur handgrip shift actuator is generally designated 410, and is engaged over handlebar 402 immediately inboard of right fixed grip 406. Front derailleur shift actuator 408 includes a shifter rotator generally designated 412, while rear derailleur shift actuator 410 includes a shifter rotator generally designated 413. The exposed portions of these respective rotators 412 and 413 are preferably covered with foam rubber or foam neoprene for good grip and comfortable shifting.

The front derailleur control cable system which connects the front handgrip shift actuator to the front derailleur mechanism is generally designated 414, and includes front derailleur control cable 415. The rear derailleur control cable system is generally designated 416 and includes rear derailleur control cable 417. Front derailleur cable system 414 is preferably the same system as that employed on a bicycle 10 shown in Figure 1, with front cable housing or casing 418 terminating at an adjustment barrel arrangement like that shown in Figure 5, front derailleur control cable 415 extending down alongside main downtube 420 and riding under the bottom bracket as shown in Figures 3 and 4, and with substantially compressionless cable housing like that shown in Figures 6 and 7.

The rear derailleur controller cable system 416 also includes forward cable housing or casing 419, and a rearward cable housing like that seen in Figures 1 and 2. Rear derailleur control cable system 416 is preferably the same as rear derailleur cable system 62 shown in Figures 1-7 and described in detail above in connection with those figures.

### Front Derailleur Jack Spool Shift Actuator

Figures 47-65 illustrate details of structure and operation of a first "jack spool" form of the invention in connection with front derailleur handgrip shift actuator 408 proximate the left end portion of handlebar 402. These details of structure and operation are generally the same for rear derailleur handgrip shift actuator 410 shown in Figures 66-69, with the exception that the mechanism of front derailleur shift actuator 408 shown in detail in Figures 47-65 has three detents corresponding to the three front derailleur chain rings, while rear derailleur shift actuator 410 of Figures 66-69 has seven detents corresponding to seven rear derailleur freewheel sprockets. Additionally, there can be some fine-tune variations in the detent spacings for the various sprockets, and this is more frequently appropriate for rear derailleur shift actuator 410 than for front derailleur shift actuator 408.

### Cable Pull/Release Drive System for Front Derailleur Shift Actuator 408

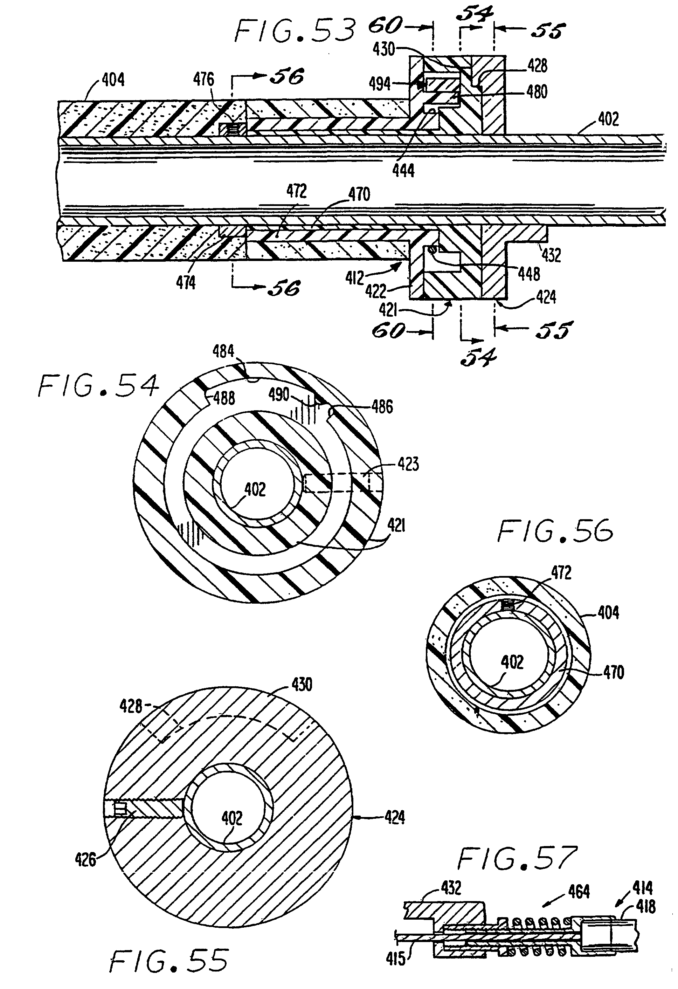

Front derailleur shift actuator 408 includes a generally circular main body 421 which is locked to handlebar 402 by means of a set screw 423. An outboard cover plate 422 for main body 421 is supported on rotor 412 as best seen in Figure 53. A generally circular jack spool support ring 424 is generally flush against main body 421 of the inboard side of main body 421. Jack spool support ring 424 is locked to handlebar 402 by means of a set screw 426. Rotational interlock is provided between body 421 and jack spool support ring 424 by means of an arcuate locator recess 428 in body 421 which receives a complementary arcuate locator projection 430 in support ring 424. Such rotational interlock is important because there is much more relative rotational force between main body 421 and support ring 424 than there is axial force on either or both of body 421 and support ring 424 relative to each other and to handlebar 402.

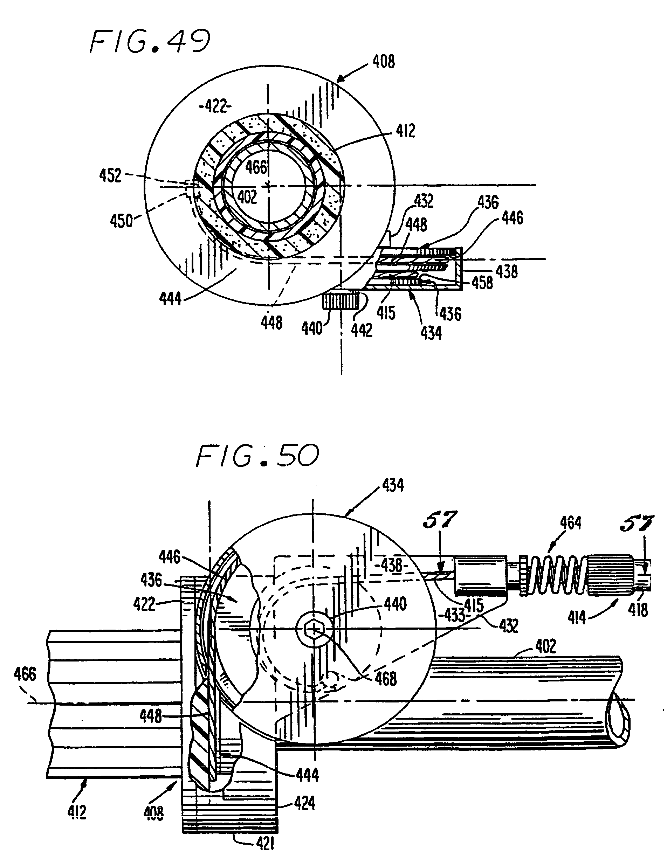

A jack spool support bar 432 is integral with jack spool support ring 424, extending from support ring 424 in the inboard direction generally parallel to handlebar 402, and generally on the opposite peripheral side of handlebar 402 relative to support ring locator projection 430. The jack spool itself is generally designated 436, and is first seen in some detail in Figures 49 and 50. It includes a housing 438. Jack spool 436 is pivotally mounted on generally flat side 433 of support bar 432 by means of a pivot bolt 440 which has a washer 442. Thus, jack spool 436 is substantially parallel to support bar 432 and handlebar 402 which, as will be seen in subsequent views, enables front derailleur actuator cable 415 to emerge tangentially from jack spool 436 substantially parallel to handlebar 402 which is the most desirable anti-friction exit direction for cable 415. The general planar direction of jack spool 436 is at right angles to the general planar directions of main body 421 and support ring 424.

Jack spool 436 may be peripherally positioned at any desired location around handlebar 402, so as to best suit the layout of cable system 414 and the rider. A presently preferred peripheral location of jack spool 436 on handlebar 402 is best visualized in Figure 46. In this location of jack spool 436, relative to front end portion 400 of the bike, it is forward of handlebar 402 with its axis of rotation slightly below handlebar 402, and its planar direction is generally vertically oriented.

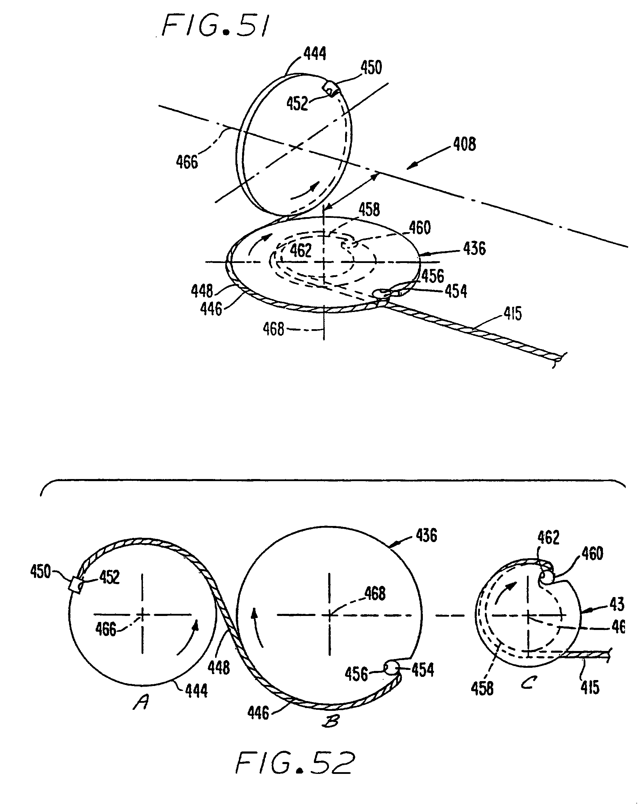

A front derailleur handgrip drive pulley 444 is mounted on the inboard end of front derailleur shifter rotator 412 for rotation with rotator 412. Drive pulley 444 is shown in Figures 49-53 and 60-65. Jack spool 436 has a circular arc input cable groove 446 seen in Figures 49-52 and 58-65. A short jack spool drive cable 448 is connected at one end to actuator rotator drive pulley 444, and at its other end to jack spool 436. Drive cable 448 has an end bead that seats in a notch 452 in handgrip drive pulley 444, as seen in Figures 49, 51, 52 and 60-65. A similar cable end bead 454 on the other end of drive cable 448 seats in a notch 456 in jack spool 436, as seen in Figures 51, 52 and 59.

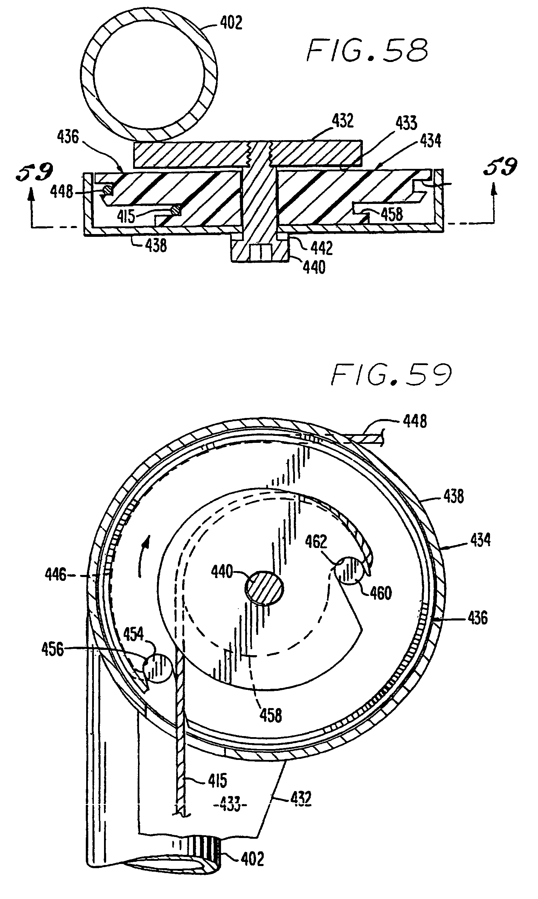

Front derailleur control cable 415 engages in a jack spool output cable groove 458, and has an end bead 460 whic seats in a notch 462 in jack spool 436, as diagrammatically illustrated in Figures 51 and 52, and as shown structurally in Figure 59. Output cable groove 458 has a nautilus cam configuration which provides progressively increasing cable pulling force during down-shifting events so as to compensate for progressively increasing derailleur return spring force, as described in detail hereinafter in the section describing the mode of operation of front derailleur shift actuator 408.

To assist in visualizing the relative orientations of the rotational axes of handgrip rotator drive pulley 444 and jack spool 436, in Figures 49-52 the rotator drive pulley centerline has been designated 466 and the jack spool centerline has been designated 468.

Figure 53 illustrates an outboard cylindrical sleeve portion 470 of fixed main body 421, and an overlapping outboard cylindrical sleeve portion 472 of shifter rotator 412. These sleeve portions 470 and 472, and hence the entire handgrip shift actuator 408, are restrained from outboard movement by an outboard retainer ring 474 engaged around handlebar 402 and coupled to handlebar 402 by means of a set screw 476.

### Detenting System for Front Derailleur Shift Actuator 408

Figures 60-65 illustrate a detenting system for front derailleur handgrip shift actuator 408 which is adapted to accommodate a three-chain ring front derailleur system, for operative location of the chain on each of the three chain rings, for takeup and release of various lost motions in the front derailleur system and its cable system, and for providing takeup and release of chain overshift. Figure 60 illustrates the front derailleur detenting system in its fully up-shifted position with the chain on the smallest of the three chain rings, and with the lost motions and overshift released. This is the most counterclockwise position of front derailleur shifter rotator 412 in the sequence of views in Figures 60-65. A down-shifting event from the relaxed, smallest chain ring position of Figure 60 is illustrated in Figures 61-63, and involves clockwise rotation of front derailleur handgrip shift rotator 412 from the position of Figure 60 to the position of Figure 63. This corresponds to overhand movement of the top of front derailleur shifter rotator 412 toward the rider as viewed in Figure 46, which is the most comfortable and natural rotational mode for down-shifting, particularly in view of the relatively large down-shifting force required from the rider. Up-shifting from the largest chain ring to the smallest chain ring is illustrated in Figures 64 and 65, and involves counterclockwise rotation of shifter rotator 412 as viewed in Figures 64 and 65, with the top portion of rotator 412 moving overhand and away from the rider as viewed in Figure 46.

The front derailleur actuator detenting system includes as a primary component an arcuate detent structure 480 which is integral with rotator 412. Detent structure 480 is seen in detail in the transverse sectional views of Figures 60-65, with a small axial sectional illustration of detent structure 480 being seen in Figure 53. Three spaced, radially outwardly facing detent notches 482 are provided in arcuate detent structure 480. For front derailleur rotator 412, these detent notches 482 are normally regularly or uniformly spaced, but may, if desired, be relatively spaced from each other slightly differently from regular spacing for fine-tune accommodation of various front derailleur mechanisms.

A radially inwardly facing, elongated, arcuate spring recess 484 is provided in fixed main body 421. Arcuate spring recess 484 is radially outwardly spaced from arcuate detent structure 480, and is in general axial registry with detent notches 482. Spring recess 484 has a radially oriented right-hand or clockwise end shoulder 486 as viewed in Figures 60-65, which provides an end stop for the detent spring (described hereinafter) during down-shifting cable pulling. A similar radially oriented opposite end shoulder 488 at the left-hand or counterclockwise end of spring recess 484 as viewed in Figures 60-65 provides a stop for the detent spring during up-shifting. Rounded dimple or nut 490 projects radially inwardly from the bottom of spring recess 484 spaced slightly to the left or counterclockwise of shoulder 486, so that a radially inwardly facing, rounded recess 492 is provided as a part of spring recess 484 between dimple 490 and shoulder 486.

The detent spring is generally designated 494. It is leaf spring that includes an elongated, arcuate spring body 496 which is disposed in arcuate spring recess 484, being generally complementary to spring recess 484. The arcuate outer surface of detent spring body 496 is spaced radially inwardly from the bottom surface of spring recess 484 (i.e., the radially outward surface of spring recess 484) to accommodate radial bending of spring body 496 during the detenting function. This radial spacing between the opposing surfaces of spring recess 484 and spring body 496 is provided by radially outwardly directed, rounded end feet 498 and 500 on detent spring 494, end feet 498 and 500 leaving most of the length of elongated spring body 496 spaced radially inwardly from the bottom surface of spring recess 484, and thus providing the space necessary between spring body 496 and main fixed body 421 to allow for radially outward flexing of spring body 496 during shifting between detent notches 482 in arcuate detent structure 480. Detent spring 494 includes a rounded detenting projection 502 which projects radially inwardly from an intermediate location on elongated spring body 496. Detenting projection 502 is normally biased radially inwardly by spring 494 into a detenting position in one of the three detent notches 482 in structure 480 as seen in each of Figures 60-65, and during shifting rides along the radially outer arcuate surface of detent structure 480 between detent notches 482.

A radially oriented up-shifting stop post 504 is fixedly secured in main body 421, extending radially inwardly from the shell of body 421 into the path of rotation of arcuate detent structure 480 so that stop post 504 is encountered by arcuate detent structure 480 in its fully up-shifted, most counterclockwise rotational position as seen in Figure 60. Thus, up-shifting stop post 504 stops detent structure 480 and shifter rotator 412 in their fully up-shifted positions as seen in Figure 60. A similar down-shifting stop post 506 is fixedly mounted in main body 421, extending inwardly from the shell of body 421 so as to stop arcuate detent structure 480 and shifter rotator 412 in the fully down-shifted, most clockwise position as shown in **Figure 63.**

### Cable Pull/Release Mode of Operation of Front Handgrip Shift Actuator 408

The mode of operation of front derailleur handgrip shift actuator 408 will be considered in three phases: (1) operation of the connection between shifter rotator 412 and jack spool 436 through the short drive cable 448 for takeup and release of front derailleur control cable 415; (2) operation of the detenting system between shifter rotator 412 and fixed main body 421 for location of the bicycle chain relative to the three front derailleur chain rings; and (3) fine-tuning to avoid chain rasp in general, and during crossover riding.

The first phase of operation, which involves the pull and release connection between shifter rotator 412 and jack spool 436, is best illustrated in Figures 49-52, 58 and 59, but is also seen in part in Figures 60-65. Figures 51, 52 and 59 are of particular importance in that they illustrate the nautilus cam shape of jack spool output cable groove 458 which progressively provides increasing torque that compensates for the increasing opposing force of the front derailleur return spring in the down-shifting direction, and conversely provides progressively decreasing torque that compensates for decreasing opposing force of the derailleur return spring in the up-shifting direction.

Referring primarily to Figures 51, 52 and 59, operation of the pull and release drive connection between shifter rotator drive pulley 444 and jack spool 436 will first be considered for the down-shifting direction. Figures 51, 52 and 59 illustrate drive pulley 444 and jack spool 436 in a partially down-shifted position. Further down-shifting rotation of rotator drive pulley 444, which is counterclockwise as viewed in Figures 51 and 52A, pulls short jack spool drive cable 448 which causes jack spool 436 to rotate clockwise in Figures 51 and 52B and C, and in Figure 59. This produces down-shifting takeup translational movement of control cable 415 as indicated in Figures 51, 52C and 59.

Cable release from the partially down-shifted position of Figures 51, 52 and 59 for up-shifting is accomplished by rotations of the parts in the opposite direction from the rotational arrows shown in Figures 51, 52 and 59; drive pulley 444 being rotated clockwise in Figures 51 and 52A, with jack spool 436 being rotated counterclockwise in Figures 51, 52B and C, and in Figure 59.

The nautilus cam shape of jack spool output cable groove 458 (in which front derailleur control cable 415 is guided) is best seen in Figures 51, 52C and 59, and is a smooth, continuous curve from a smallest, highest torque tangential control cable exit radius in the lowest gear/largest chain ring position to a largest, lowest torque tangential control cable exit radius in the highest gear/smallest chain ring position. Thus, clockwise rotation of the nautilus-shaped jack spool output cable groove 458 in Figures 51, 52C and 59 provides a decreasing radius for increasing down-shifting pulling torque on control cable 415, while counterclockwise rotation of the nautilus-shaped output cable groove 458 in Figures 51, 52C and 59 provides an increasing radius for decreasing up-shifting pulling torque on control cable 415.

The nautilus cam configuration of jack spool output cable groove 458 thus substantially fully compensates for and balances out the progressive increase in front derailleur return spring tension during down-shifting from the smallest chain ring to the largest chain ring, and the progressive decrease in front derailleur return spring tension during up-shifting from the largest chain ring to the smallest chain ring.

In terms of the extent of lineal cable movement, front derailleur mechanisms are conventionally set up so that a relatively large amount of lineal cable pull movement is required to down-shift from the smallest chain ring to the intermediate chain ring, and a relatively small amount of lineal cable pull movement is required to down-shift from the intermediate chain ring to the large chain ring, which is just the opposite of the torque requirements to effect such down-shifting. Since the nautilus configuration of jack spool output groove 458 provides much more lineal cable movement between the smallest chain ring and the intermediate chain ring than between the intermediate chain ring and the largest chain ring, the lineal cable movement requirements of the front derailleur mechanism are substantially compensated for by the lineal cable movements provided by the nautilus-shaped jack spool output cable groove 458. This means that the amount of rotational movement of shifter rotator 412 and its drive pulley 444 is approximately the same for the down-shifting increment between the smallest chain ring and the intermediate chain ring as it is for the down-shifting increment between the intermediate chain ring and the largest chain ring (and this while the increasing derailleur return spring tension is fully compensated for by the nautilus configuration of jack spool output cable groove 458). This enables the arcuate spacing between successive detent notches 482 to be generally uniform as seen in Figures 60-65, which is most convenient and natural for bicycle rider input, although such spacing may be varied as desired for fine-tune variations to accommodate variations in specific front derailleur mechanisms. The compensation by the nautilus configuration of jack spool output cable groove 458 for the lineal cable movement requirements of the conventional front derailleur mechanism, while at the same time compensating for the front derailleur return spring tension variations, is a truly synergistic cooperation.

It is presently preferred for simplicity in handgrip shift actuator 408 to provide the nautilus cam shape in jack spool output cable groove 458 as shown and described above. The nautilus cam configuration may alternatively be provided in either shift actuator drive pulley 444 or jack spool input cable groove 446, but this would unnecessarily complicate the device which is kept relatively simple by having the peripheries of shift actuator drive pulley 444 and jack spool input cable groove 446 at a constant spacing regardless of their relative rotational positions for different shifting positions.

### Detenting Phase of Mode of Operation of Front Handgrip Shift Actuator 408

The detenting phase of the mode of operation of front handgrip shift actuator 408 will now be described in detail in connection with Figures 60-65. Arcuate detenting structure 480 is integral with front derailleur shifter rotator 412 so as to rotate therewith. Arcuate detent structure 480 is shown in its fully up-shifted position in Figure 60 corresponding to the smallest of the three chain rings, and a complete down-shifting sequence is illustrated between Figure 60 and Figure 63. Detent structure 480 is shown in its most counterclockwise position in Figure 60, and is shifted clockwise as indicated by the rotational arrows in Figures 60-63 from this fully up-shifted position of Figure 60 to its most clockwise, fully down-shifted position of Figure 63 corresponding to the largest of the three chain rings. During such down-shifting rotational movement of detent structure 480, short jack spool drive cable 448 is pulled by shifter rotator 412 on drive pulley 444 through cable end bead/drive notch connection 450/452 synchronously with the rotational movement of arcuate detent structure 480. Main body 421, within which detent spring 494 is internally recessed, remains fixed for all detenting positions.

In the fully up-shifted, most counterclockwise position of arcuate detent structure 480, detent spring 494 is in its left-hand, counterclockwise position as viewed in Figure 60,: having been brought to this position during previous up-shifting by engagement of spring detenting projection 502 in the most counterclockwise of the three detent recesses 482, as seen in Figure 64. Thus, in the position of Figure 60, the left end of detent spring 494 abuts against end shoulder 488 in body 421, and the right-hand end foot 498 of spring 494 is located on the left-hand or counterclockwise side of body dimple 490. In Figure 60 spring detenting projection 502 is located in the most clockwise of the three detenting notches 482.

### Down-Shifting

The first increment of down-shifting clockwise movement of detent structure 480 is shown between Figure 60 and Figure 61, and is defined and limited by clockwise or right-hand shifting of detenting spring 494 during which spring end foot 498 rides over body dimple 490 into body recess 492, where such shifting of spring 494 is stopped by engagement of the right-hand or clockwise end of spring 494 against body end shoulder 486. Engagement of spring detenting projection 502 in the most clockwise detent notch 482 is prioritized by being stronger or more secure than the more rounded and less deep engagement of spring end foot 498 against body dimple 490. Thus, in the first shifted increment position shown in Figure 61, although spring 494 has shifted to its most clockwise position, detent structure 480 has not rotationally shifted relative to spring 494. This first shifting increment from Figure 60 to Figure 61 pulls jack spool drive cable 448, and hence front derailleur control cable 415, sufficiently for control cable 415 to take up any lost motions or slack in the front derailleur mechanism and its control cable system 414 and, more importantly, pulls control cable 415 to an overshift position. It will be noted that the counterclockwise end of arcuate detent structure 480 abuts against up-shifting stop post 504 in Figure 60, while this first increment of shifting movement spaces the end of detent structure 480 away from up-shifting stop post 504.

The second increment of down-shifting clockwise rotation of arcuate detent structure 480 is shown between Figures 61 and 62, and defines the front derailleur shifting actuation between the small chain ring and the intermediate chain ring. In this second down-shifting increment, the clockwise rotational torque of detent structure 480 is greater than for the first increment of movement between Figures 60 and 61, and is sufficient to cam spring detenting projection 502 radially outwardly from the most clockwise detent notch 482 against the biasing force of spring body 496 such that spring detenting projection 502 then rides along the arcuate outer surface of detent structure 480 until spring detenting projection 502 is snapped into the intermediate detent recess 482 with the chain on the intermediate chain ring. This snap-in engagement between detenting projection 502 and intermediate detent notch 482 provides a positive tactual input to the rider which indicates location of the chain on the intermediate chain ring.

The final down-shifting increment is shown between Figure 62 and Figure 63, and involves further clockwise rotation of shifter rotator 412 and hence of arcuate detent structure 480, which causes spring detenting projection 502 to be cammed radially outwardly out of intermediate detent notch 482 and again onto the arcuate outer peripheral surface of detent structure 480, detenting projection 502 then riding along on the arcuate outer surface of detent structure 480 until spring detenting projection 502 finally snaps into the most counterclockwise of the three detent notches 482 as seen in Figure 63, which is sensed by the rider as indicating that the chain is now located on the j largest, lowest gear ratio chain ring. Engagement of the clockwise end of arcuate detent structure 480 against down-shifting stop post 506 precludes any further clockwise rotation of arcuate detent structure 480 and hence shifter rotator 412.

Although not shown in the front derailleur actuator detenting system illustrated in Figures 60-65, it is to be understood that rider input force may be equalized between down-shifting and up-shifting in the detenting system of Figures 60-65 either by employing a dual detenting spring rate system as illustrated in Figures 22, 24-26, 28 and 29 and described in detail in connection with those figures; or by employing a system with differing down-shifting and up-shifting detent notch side angles as shown in Figures 41-43 and described in detail in connection with those figures.

If during the foregoing down-shifting sequence the rider desires to leave the chain on the intermediate chain ring, when the rider relaxes his or her grip on the shifter rotator 412, the overshift movement of control cable 415 will be released such that the chain will be moved in the up-shifting direction into registry with the intermediate chain ring. If, on the other hand, the down-shifting sequence involves shifting from the small chain ring through the intermediate chain ring to the large chain ring, then the overshift movement of control cable 415 will be carried through this shifting sequence, and when shifter rotator 412 is relaxed by the rider the overshift cable movement will be released to place the chain in accurate registry with the large chain ring. Similarly, a down-shift from the intermediate chain ring to the large chain ring will involve release of the overshift when the rider releases shifter rotator 412.

All aspects of overshifting have previously been described herein in connection with the "shovel cam" forms shown in Figures 19-43, including a general description of overshift, description of initial lost motion takeup prior to overshift, description of overshift movement including associated cam lobe heights, and release of the overshift at the end of a shifting event which returns the chain to sprocket or chain ring alignment. All of such description applies equally as well to all of the jack spool forms of the invention shown in Figures 46-69.

### Up-Shifting

The first up-shifting increment of movement of the parts is shown between Figure 63 and Figure 64, and involves a first counterclockwise increment of rotational movement of arcuate detent structure 480 during which the prioritized relatively strong engagement of spring detenting projection 502 in the most counterclockwise of the three detent notches 482 overcomes the relatively weak engagement of right-hand spring end foot 498 behind body dimple 490, causing spring 494 to be shifted to the left or counterclockwise to the position of Figure 64 in which the left-hand end of spring 494 abuts against body end shoulder 488. This first up-shifting increment from Figure 63 to Figure 64 does not result in any material chain shifting movement from the largest chain ring toward the intermediate chain ring, and any lost motions in the front derailleur mechanism and front cable system remain released or relaxed as they were when shifter rotator 412 was relaxed by the rider at the conclusion of the down-shifting events.

Further counterclockwise shifting rotation of arcuate detent structure 480 to shift the chain from the large chain ring to the intermediate chain ring is shown between Figure 64 and Figure 65, during which spring detenting projection 502 is cammed out of the most counterclockwise detent notch 482 and rides along the arcuate outer periphery of detent structure 480 so as to snap into registry with intermediate detent notch 482 to place the chain into engagement with the intermediate chain ring, with derailleur and cable system lost motions remaining released. This snap-in engagement of detenting projection 502 into the intermediate detent notch 482 is again sensed by the rider.

The final up-shifting counterclockwise increment of rotation of shifter rotator 412 and arcuate detent structure 480 relative to fixed body 421 is shown between Figure 65 and Figure 60. This increment involves camming of spring detenting projection 502 out of intermediate detent notch 482, sliding detenting projection 502 along the arcuate outer peripheral surface of detent spring 494, and then snapping of spring detenting projection 502 into the most clockwise of the three detent notches 482 to complete the full up-shifting event. At the end of this up-shifting event, any lost motions in the front derailleur mechanism and cable system remain released for proper alignment of the chain on the smallest of the three chain rings, and detent structure 480 and shifter rotator 412 are precluded from any further counterclockwise rotational movement by engagement of the counterclockwise end of detent structure 480 against up-shifting stop post 504 that is fixed within body 421.

### Front Derailleur Fine-Tuning to Avoid Chain Rasp

Referring to Figures 60 and 61, detent spring 494 will be seen to have two discrete rotationally specific positions in fixed body 421. In Figure 60, spring 494 is in a fully up-shifted counterclockwise position in body 421, and in Figure 61 spring 494 is in a down-shifting clockwise position in body 421. These two discrete positions are defined by spring end foot 498 being on the counterclockwise or left-hand side of body dimple 490 in Figure 60, and being on the clockwise or right-hand side of dimple 490 in recess 492 in Figure 61. Since engagement of spring detenting projection 502 in any of the three detent notches 482 is prioritized over engagement of spring end foot 498 against either side of body dimple 490, a small amount of rotational movement of shifter rotator 412 in the clockwise direction will move spring 494 from its position of Figure 60 to its position of Figure 61, and a similar small amount of counterclockwise rotation of shifter rotator 412 will move spring 494 counterclockwise from its position of Figure 61 to its position of Figure 60. Such movements of spring 494 in body 421 can be effected by the rider without any shifting of the chain from one chain ring to another because of the prioritized engagement of spring detenting projection 502 in any of the three detent notches 482 over engagement of spring end foot 498 against body dimple 490. These two rotationally specific positions of spring 494 in body 421 are translated through arcuate detent structure 480 and jack spool 436 to control cable 415, providing the rider with two optional lateral positions of the bicycle chain relative to any one of the three chain rings for avoiding chain rasp. These lateral chain shifting options for avoiding chain rasp are available to the rider regardless of the lateral location of the rear portion of the chain on the multiple freewheel, both in "parallel riding" and "cross-over riding," as described above in connection with Figures 14 and 15.

### Rear Handgrip Shift Actuator 410

Figures 66-69 illustrate details of structure and operation of the jack spool form of the invention in connection with rear derailleur handgrip shift actuator 410 located proximate the right end portion of handlebar 402. These details of structure and operation are generally the same for rear derailleur handgrip shift actuator 410 as for front deraileur handgrip shift actuator 408 except that arcuate detent structure 480a, seen in Figure 66, has seven detents 482a corresponding to seven rear derailleur freewheel sprockets, instead of the three detents for front derailleur shift actuator 408.

Rear derailleur shift actuator 410 is shown in elevation in Figure 66, which is the same as Figure 48 for front derailleur handgrip shift actuator 408, except that the parts are reversed since rear derailleur shift actuator 410 is located proximate the right end of handlebar 402, with rear derailleur shifter rotator 413 extending in the outboard direction to the conventional fixed right-hand grip 406. Thus, fixed main body 421a has outboard cover plate 422a which is rotatable as a part of shifter rotator 413, main body 421a being locked to handlebar 402 by means of set screw 423a. Jack spool support ring 424a is also locked to handlebar 402 by means of a set screw 426a. Body 421a and support ring 424a are secured against relative rotation by means of interlocking arcuate locator recess 428a in body 421a and arcuate locator projection 430a in support ring 424a. Jack spool support bar 432a is integral with support ring 424a, extending in the inboard direction, or to the left as viewed in Figure 66, generally parallel to handlebar 402. Outboard movement of body 421a and support ring 424a is further prevented by means of a retainer ring like ring 474 shown in Figure 53.

The jack spool assembly is generally designated 434a, and includes jack spool 436a, jack spool housing 438a, and jack spool pivot bolt 440a which is fixedly supported on support bar 432a.

Referring now particularly to Figure 67, rear derailleur shifter rotator 413 has drive pulley 444a located thereon, while jack spool 436a has input cable groove 446a thereon. Short jack spool drive cable 448a drivingly interconnects shifter rotator 413 with jack spool 436a, being driven on rotator drive pulley 444a and extending into jack spool input cable groove 446a. Drive cable 448a has an input or drive end bead 450a located in drive notch 452a of rotator 413, and, now looking at Figures 68 and 69, an output or driven end bead 454a engaged in a notch 456a in jack spool input cable groove 446a. Jack spool output cable groove 458a for rear derailleur control cable 417 is shown in Figure 67, but is best seen in Figures 68 and 69 which illustrate the nautilus cam shape of jack spool output cable groove 458a which provides decreasing radius and hence increasing torque during down-shifting takeup rotation of shifter rotator 413, and increasing radius and therefore decreasing torque for up-shifting rotation of shifter rotator 413. As seen in Figures 68 and 69, rear derailleur control cable 417 has a cable end bead 460a that is engaged in a notch 462a in jack spool output cable groove 458a. Figure 66 shows cable output structure 464a, including an adjustment barrel, for rear derailleur control cable 417.

Referring again particularly to Figure 67, arcuate detent structure 480a, which is integral with rear derailleur shifter rotator 413, has seven radially outwardly opening spaced detent notches 482a, corresponding to a seven-gear multiple freewheel. Detent notches 482a may be generally regularly spaced around the periphery of arcuate detent structure 480a, but they may be irregularly displaced from one another as required to (1) vary the rate of twist of shifter rotator 413 to compensate for increasing torque in the down-shifting direction and decreasing torque in the up-shifting direction, (2) compensate for irregularities in the rear derailleur mechanism over the range of freewheel sprockets, and (3) compensate for any particular manufacturer's variation in the spacing between the freewheel sprockets.

Radially inwardly directed arcuate recess 484a in fixed body 421a has stop shoulders 486a and 488a at its opposite ends which provide respective down-shifting and up-shifting spring stops, and arcuate recess 484a also includes a radially inwardly directed, rounded dimple 490a adjacent down-shifting end shoulder 486a, with rounded recess 492a defined between dimple 490a and shoulder 486a. The detent spring is generally designated 494a, and is a leaf spring that rides in spring recess 484a. Detent spring 494a includes elongated, arcuate spring body 496a which has rounded, radially outwardly directed end feet 498a and 500a. Rounded detenting projection 502a is integral with spring body 496a and projects radially inwardly for detenting engagement within sequential detent notches 482a during shifting operations.

Figure 67 shows the parts of rear derailleur shift actuator 410 in their fully up-shifted positions, with arcuate detent structure 480a abutted in the up-shifted stop position against up-shifting stop post 504a that is affixed in body 421a. In this fully up-shifted position, detent spring 494a is in its clockwise position within body 421a, with the clockwise end of spring 494a abutting against body shoulder 488a, and spring end foot 498a clockwise or to the right of body dimple 490a. In this position of the parts, spring detenting projection 502a is engaged in the most counterclockwise of the seven detents 482a in detent structure 480a.

The first down-shifting increment of movement of shifter rotator 413, which is counterclockwise as viewed in Figure 67, causes detent structure 480a to shift detent spring 494a counterclockwise or to the left in spring recess 484a so that the counterclockwise end of spring 494a is shifted into abutment with body shoulder 486a, spring end foot 498a riding over body dimple 490a into body end recess 492a. This first counterclockwise increment of movement of rotator 413 and detent structure 480a pulls jack spool drive cable 448a and hence rear derailleur control cable 417 a sufficient amount to take up substantially all of the lost motions or slack in both the rear derailleur mechanism and rear derailleur control cable system 416, and to provide a desired amount of overshift movement of rear derailleur control cable 417.

Continued down-shifting rotation of shifter rotator 413 and arcuate detent structure 480a counterclockwise as viewed in Figure 67 will cause the remaining six open detent notches 482a as viewed in Figure 67 to shift sequentially into registry with spring detenting projection 502a causing the bicycle chain to sequentially shift downwardly from the smallest freewheel sprocket to the largest freewheel sprocket, at which point the counterclockwise end of arcuate detent structure 480a will abut against down-shifting stop post 506a, preventing any further down-shifting movement of shifter rotator 413 or the bicycle chain.

Conversely, from such fully down-shifted position of the parts, the first up-shifting rotational movement of shifter rotator 413 and hence of arcuate detent structure 480a clockwise (contrary to the directional arrow) in Figure 67 will shift detent spring 494a clockwise to the position shown in Figure 67, with the clockwise end of spring 494a in abutment with body stop shoulder 488a and spring end foot 498a on the clockwise side of body dimple 490a. Release of rear derailleur handgrip shift actuator 410 at the end of down-shifting will already have released the lost motions or slack in the rear derailleur mechanism and rear derailleur cable system 414. Continued up-shifting rotation of shifter rotator 413 and hence of arcuate detent structure 480a clockwise as viewed in Figure 67 will progressively release rear derailleur control cable 417 so as to successively up-shift the bicycle chain between the freewheel sprockets until the fully up-shifted position of the parts illustrated in Figure 67 is achieved, with spring detenting projection 502a engaged in the most counterclockwise of the series of detent notches 482a, and detent structure 480a abutted against up-shifting stop post 504a.

Still referring to Figure 67, detent spring 494a will be seen to have two discrete rotationally specific positions in fixed body 421a, the fully up-shifted clockwise position of Figure 67, and a down-shifting counterclockwise position to which spring 494a shifts during the first down-shifting increment of movement of shifter rotator 413 and hence of arcuate detent structure 480a. These two discrete positions are defined by spring end foot 498a being on opposite sides of body dimple 490a. Since engagement of spring detenting projection 502a in any of the seven detent notches 482a is prioritized over engagement of spring end foot 498a against either side of body dimple 490a, a small amount of rotational movement of shifter rotator 413 will move spring 494a between these two positions in body 421a. As was the case for the front derailleur actuator, such movements of spring 494a in body 421a can be effected by the rider without any shifting of the chain from one freewheel sprocket to another because of the prioritized engagement of spring detenting projection 502a in any of the seven detent notches 482a over engagement of spring end foot 498a against body dimple 490a. These two rotationally specific positions of spring 494a in body 421a are translated through arcuate detent structure 480a and jack spool 436a to rear derailleur control cable 417, providing the rider with two optional lateral positions of the bicycle chain relative to any one of the seven freewheel sprockets for avoiding chain rasp. These lateral chain shifting options for avoiding chain rasp will not be as frequently required for the rear freewheel sprockets as for the front chain rings, but may be particularly useful in cross-over riding.

Figures 68 and 69 illustrate down-shifting rotational movement of jack spool 436a which is clockwise as viewed in Figures 68 and 69, corresponding to down-shifting rotational movement of arcuate detent structure 480a as indicated by the directional arrow in Figure 67. The down-shifting rotational movement of shifter rotator 413 will cause pulling movement of jack spool drive cable 448a on jack spool input cable groove 446a through engagement of cable output end bead 454a in notch 456a, causing clockwise down-shifting rotation of jack spool 436a as viewed in Figures 68 and 69. Figure 69 shows jack spool 436a rotationally displaced from its position in Figure 68 as a result of such down-shifting rotation. This down-shifting rotational movement of jack spool 436a results in synchronous clockwise down-shifting rotational movement of jack spool output cable groove 458a, and hence down-shift pulling translational movement of rear derailleur control cable 417 through engagement of its end bead 460a in notch 462a. The initial such pulling movement of control cable 417 will be gauged by the counterclockwise shifting of detent spring 494a from its position of Figure 67 into abutment with body shoulder 486a, with accompanying takeup of lost motions and overshift movement in the rear derailleur mechanism and rear derailleur control cable system 416. Then, further such pulling movement of control cable 417 will cause the actual down-shifting events.

Figure 39 was described in connection with shovel cam front derailleur actuator 60 of Figures 19 and 33-38, Figure 39 diagrammatically illustrating sequences of down-shifting and up-shifting events for a three chain ring front derailleur system. The illustration of Figure 39 and accompanying detailed description are equally applicable to the jack spool forms of front derailleur actuator 408 shown in Figures 46-65.

Accordingly, Figure 39 and its accompanying detailed description are hereby incorporated by reference as a part of the disclosures for the front derailleur jack spool forms of Figures 46-65. Thus, as illustrated in Figure 39 and described in connection therewith, for all jack spool forms of the invention, in both the down-shifting and up-shifting directions, overshift is automatically provided for by detented rotational shifting of a detent spring (494 in the forms shown in Figures 46-65, and in each shifting event the rider is left with the option of selecting two chain positions which are slightly on opposite sides of the respective three chain rings so as to assure the ability to eliminate chain rasp in either of the "parallel riding" or "cross-over riding" situations.

Representative values for the amount of cable pulled and respective number of degrees of rotation for rear derailleur handgrip shifter rotator 290 of Figures 19-30 are illustrated in Figure 44 in a diagram that is layed out flat. The diagram of Figure 44 and the representative values set forth thereon are equally applicable to all rear derailleur jack spool forms of the invention, including jack spool rear derailleur actuator 410 of Figures 66-69.

Figure 45 is a diagrammatic illustration similar to Figure 44, but giving representative values for the amount of cable pulled and respective number of degrees for rotation of front derailleur handgrip rotator 290a. Similar representative values for cable pulled and relative degrees of rotation are applicable to the jack spool forms of front derailleur actuators, including the forms shown in Figures 46-65.

The jack spool "nautilus" cam configuration has heretofore been described for the front derailleur actuator jack spool forms of Figures 46-65, and for the rear derailleur actuator jack spool form of Figures 66-69 as providing progressively increasing torque that compensates for increasing opposing force of the derailleur return spring in the down-shifting direction, and conversely providing progressively decreasing torque that compensates for decreasing opposing force of the derailleur return spring in the up-shifting direction. Also, for front derailleur mechanisms, the jack spool cam configuration has previously been described as providing lineal cable movement compensation for lineal cable movement requirements of front derailleur mechanisms which require a relatively large amount of lineal cable movement to down-shift from the smallest chain ring to the intermediate chain ring, but a relatively small amount of lineal cable movement to down-shift from the intermediate chain ring to the large chain ring. These same basic compensations are applicable in the "shovel cam" arrangements illustrated in Figures 19-43.

Other advantages and features which are described above in detail for the nautilus cam configuration of the shovel cam arrangements are equally applicable to the nautilus configuration of the jack spool forms of the invention. These include (1) the jack spool nautilus cam configuration provides flexibility for adaptation to, and hence for retrofitting to, a variety of satisfactory rear derailleur mechanisms which have been on the market for the last few years, the diametrical (and hence radial) differential between the smaller and larger diameters of the jack spool nautilus cam being adaptable to the amount of cable movement required for any particular rear derailleur mechanism, whether past, present or future; (2) the jack spool nautilus cam configuration enables any desired amount of rotational movement of the handgrip shift actuator for any corresponding desired amount of lineal control cable pull (for example, approximately 136° of shifter rotator movement for approximately 1.6 inches of lineal cable pull); (3) the jack spool nautilus cam configuration allows for any desired number of degrees of greater actuator rotator rotational movement, and correspondingly greater mechanical advantage, than is possible with simple spool-type actuators; and (4) the jack spool nautilus shaped cam provides an ability to space the shifting detents as much farther apart as desired than the restricted detenting inherent in simple spool-type actuators, for accurate detenting and minimization of detent wear.

## Claims

1. A bicycle derailleur rotary handgrip shift actuator (408, 408c, 410) for use in a multiple-gear bicycle (400) having a gear-shifting derailleur actuated by the lengthwise displacement of a control cable (415, 417), the shift actuator (408, 408c, 410) having a rotator (412, 412c, 413) mountable over the outside of the handlebar (402) and selectively rotatable around a first axis (466) in a down-shifting direction and in an opposite, up-shifting direction, wherein the first axis (466) is co-axial with the handlebar(402); the rotator (412, 412c, 413) being positioned to be substantially inboard of an end of the handlebar,
**characterised in that** the actuator (408, 408c, 410) has a jack spool (436, 436a, 436c) rotatable about a second axis (468) angularly offset from the first axis (466), an end (460) of the control cable (415, 417) being secured to the jack spool (436, 436a, 436c), the jack spool (436, 436a, 436c) being rotatable one way in a down-shifting direction in which the jack spool (436, 436a, 436c) pulls the control cable (415, 417) and the opposite way in an up-shifting direction in which the jack spool (436, 436a, 436c) releases the control cable (415, 417);
and **in that** a cable connection (448, 448a) separate from the control cable (415, 417) is provided between the rotator (412, 412c, 413) and the jack spool (436, 436a) such that down-shifting rotation of the rotator (412, 412c, 413) will cause down-shifting rotation of the jack spool (436, 436a), and up-shifting rotation of the rotator (412, 412c, 413) will cause up-shifting rotation of the jack spool (436, 436a, 436c).

2. The shift actuator (408, 410) of Claim 1, wherein the handgrip shift actuator (408, 410) also comprises a mandrel (421, 421a) fixedly secured to the handlebar (402) upon which a detent spring (494, 494a) is supported and around which a preselected one of said rotator (412,412c, 413) and said jack spool (436, 436a, 436c) rotates to form a rotatable portion, the detent spring (494, 494a) having an indexing projection (502, 502a) thereon, the rotatable portion of the shift actuator (408, 410) having a series of detent depressions (482, 482a) thereon which are engageable with the indexing projection (502, 502a) for selectively holding the shift actuator (408, 410) in a desired gear-shifted position.

3. The shift actuator (408, 410) of Claim 2, wherein said bicycle includes a plurality of sprockets (48, 52) for selective engagement to a drive chain (50), the number of detent depressions (482a, 538) corresponding to the number of sprockets (48, 52).

4. The shift actuator (408, 410) of Claim 3, wherein the shift actuator (408, 410) is adaptable for use with a bicycle gear shifting system in which a predetermined tension is placed on the control cable (415, 417), the detent depressions (482, 482a) each having a down-shifting slope (360) and an up-shifting slope (362), each of the down shifting slopes (360) having a gentler angle of inclination than each of the up-shifting slopes (362).

5. The shift actuator (408, 410) of any of Claims 2 through 4 wherein the detent spring (494, 494a) is arranged to be displaceable between predetermined limits (486, 488) to compensate for the rotatable portion (412, 412c, 413) to take up lost motions of the control cable (415, 417) and a control cable system (414, 416) including the control cable (415, 417) when the direction of movement of the rotatable portion (412, 412c, 413) changes from a first direction to a second direction opposite the first direction.

6. The shift actuator (408, 410) of any of Claims 2 through 5 wherein the spring detent (494, 494a) is arranged to be displaceable between predetermined limits (486, 488) to provide an over-shift increment of movement of the control cable (415, 417).

7. The shift actuator (408, 410) of any of Claims 2 through 6, wherein the indexing projection (502, 502a) cooperates with the detent depressions (482, 482a) in a primary detent system (480, 480a, 502, 502a) to locate a bicycle drive chain on corresponding sprockets;
said shift actuator (408, 410) further including a secondary detent system (490, 490a, 498, 498a, 500) wherein the detent spring (494, 494a) has second projection means (498, 498a, 500) cooperative with a least one dimple (490, 490a) in the mandrel, to establish at least two detented positions for the detent spring (494, 494a);
the primary detent system (480, 480a, 502, 502a) being prioritized over the secondary detent system (490, 490a, 498, 498a, 500) so that the rotatable portion (412, 413) will first move the detent spring (494, 494a) relative to the mandrel (421, 421a) before the primary detent system (480, 480a, 502, 502a) allows movement of the rotatable portion relative to the detent spring (494, 494a).

8. The actuator (408, 410) of any of Claims 1 through 7, wherein said second axis (468) is angularly offset from said first axis (466) by 90 degrees.

9. The actuator of Claim 1, further **characterized in that** said actuator includes a gear-specifying detenting means (480, 480a, 534) formed from the interaction of structure (421, 524) fixed relative to the bicycle handlebar (402) and rotatable structure (480, 480a, 530) comprising one of the rotator (412, 412c, 413) and the jack spool (436, 436c).

10. The actuator of Claim 9, wherein said detenting means (480, 480a, 534) comprises a detent projection (502, 502a, 542) and a spring (494, 494a, 544) in one of said fixed and rotatable structures (421, 421a, 480, 480a, 524), and an arcuate array of spaced detent notches (482, 482a, 538) in the other of said structures (480, 480a, 530).

11. The actuator of Claim 2, wherein said detent spring (494, 494a) comprises an elongated leaf spring.

12. The actuator of Claim 1, wherein said control cable (415, 417) is operable to actuate a derailleur (54, 56) with a return spring (98), a cam (458, 458c) on one of said rotator and said jack spool (436, 436c) substantially compensating for increasing force of the derailleur return spring (98) in a down-shifting direction.

13. A bicycle gear shifting system, comprising:
the shift actuator of any of the preceding claims; and
a derailleur (54, 56) operatively associated with a plurality of gears (48, 52) affixed to an axle (38, 44), a drive chain (50) of said bicycle (400) movable by said derailleur (54, 56) from any of said gears (48, 52) to any other one of said gears (48, 52), a control cable (415, 417) having a first end operatively connected to said derailleur (54, 56), displacement of said control cable (415, 417) by a predetermined amount actuating said derailleur (54, 56) to shift between a present one of said gears (48, 52) and a selected other one of said gears (48, 52);

14. The system of Claim 13, and further **characterized in that** said actuator includes a gear-specifying detenting means (480, 480a, 534) formed from the interaction of structure (421, 524) fixed relative to the bicycle handlebar (402) and rotatable structure (480, 480a, 530) comprising a preselected one of the rotator (412, 412c, 413) and the jack spool (436, 436c), said detenting means (480, 480a, 534) arcuately shiftable in one of said structures between a first, up-shifting position and a second, down-shifting position.

15. The system of Claims 13 or 14 wherein said derailleur (54, 56) includes a return spring (98) biasing said control cable (415, 417) toward said derailleur (54, 56), a cam (458, 458c) on one of said rotator and said jack spool (436c) substantially compensating for increasing force of the derailleur return spring (98) in a down-shifting direction.

16. The system of any of Claims 13 through 15, and further comprising a cam on one of said rotator and said jack spool, said cam compensating for lost motions in said derailleur (54, 56) and said control cable (415, 417).

17. The system of Claim 13 or 14, wherein said derailleur (54, 56) includes a return spring (98) biasing said control cable (415, 417) toward said derailleur (54, 56), a cam (458, 458a) on one of said rotator and said jack spool causing the derailleur (54, 56) to overshift by an amount beyond a destination sprocket in an down-shifting event such that the chain will approach the destination sprocket in the same direction as it would in an up-shifting event.

## Patentansprüche

1. Fahrradschaltwerk-Lenkstangendrehstellglied (408, 408c, 410) für den Einsatz in einem Fahrrad mit Mehrgangschaltung (400), welches ein Gangschaltwerk aufweist, das durch das Verschieben eines Schaltseils (415, 417) in Längsrichtung betätigt wird, wobei das Stellglied (408, 408c, 410) ein Drehelement (412, 412c, 413) aufweist, welches um das Äußere der Lenkstange (402) befestigbar und ausgewählt um eine erste Achse (466) in einer Hinunterschaltrichtung und in eine entgegengesetzte Hinaufschaltrichtung drehbar ist, wobei die erste Achse (466) koaxial zur Lenkstange (402) ist; wobei das Drehelement (412, 412c, 413) so angeordnet ist, um sich im Wesentlichen innerhalb eines Endes der Lenkstange zu befinden;
**dadurch gekennzeichnet, dass** das Stellglied (408, 408c, 410) eine Klinkenspule (436, 436a, 436c) aufweist, welche drehbar um eine zweite Achse (468) winkelig zur ersten Achse (466) versetzt ist, wobei ein Ende (460) des Schaltseils (415, 417) an der Klinkenspule (436, 436a, 436c) befestigt ist, wobei die Klinkenspule (436, 436a, 436c) in eine Hinunterschaltrichtung, in der die Klinkenspule (436, 436a, 436c) das Schaltseil (415, 417) zieht, und in entgegengesetzter Richtung in eine Hinaufschaltrichtung drehbar ist, in der die Klinkenspule (436, 436a, 436c) das Schaltseil (415, 417) freigibt;
und dadurch, dass eine Kabelverbindung (448, 448a) getrennt vom Schaltseil (415, 417) zwischen dem Drehelement (412, 412c, 413) und der Klinkenspule (436, 436a) vorgesehen ist, so dass eine Hinunterschaltdrehung des Drehelements (412, 412c, 413) eine Hinunterschaltdrehung der Klinkenspule (436, 436a) und eine Hinaufschaltdrehung des Drehelements (412, 412c, 413) eine Hinaufschaltdrehung der Klinkenspule (436, 436a, 436c) verursacht.

2. Stellglied (408, 410) gemäß Anspruch 1, wobei das Handgriffstellglied (408, 410) auch einen Dorn (421, 421a) umfasst, welcher fest an der Lenkstange (402) befestigt ist, auf dem eine Rastfeder (494, 494a) aufgesetzt ist und um den sich ein vorgewähltes von dem Drehelement (412, 412c, 413) und der Klinkenspule (436, 436a, 436c) dreht, um einen drehbaren Abschnitt auszubilden, wobei die Rastfeder (494, 494a) einen Indizierfortsatz (502, 502a) darauf aufweist, wobei der drehbare Abschnitt des Stellglieds (408, 410) eine Reihe von Rastvertiefungen (482, 482a) auf sich aufweist, welche mit dem Indizierfortsatz (502, 502a) zum ausgewählten Halten des Stellglieds (408, 410) in einer gewünschten Gangschaltstellung in Eingriff bringbar sind.

3. Stellglied (408, 410) gemäß Anspruch 2, wobei das Fahrrad eine Mehrzahl von Ritzeln (48, 52) zum ausgewählten Eingriff in eine Antriebskette (50) umfasst, wobei die Anzahl der Rastvertiefungen (482a, 538) der Anzahl der Ritzel (48, 52) entspricht.

4. Stellglied (408, 410) gemäß Anspruch 3, wobei das Stellglied (408, 410) für den Einsatz mit einem Fahrradgangschaltsystem ausgelegt ist, in welchem eine vorbestimmte Spannung auf das Schaltseil (415, 417) aufgebracht ist, wobei die Rastvertiefungen (482, 482a) jeweils eine Hinunterschaltflanke (360) und eine Hinaufschaltflanke (362) aufweisen, wobei jede der Hinunterschaltflanken (360) einen sanfteren Neigungswinkel besitzt als jede der Hinaufschaltflanken (362).

5. Stellglied (408, 410) gemäß einem der Ansprüche 2 bis 4, wobei die Rastfeder (494, 494a) so angeordnet ist, um zwischen vorbestimmten Grenzen (486, 488) versetzbar zu sein, um als Kompensation für den drehbaren Abschnitt (412, 412c, 413) zu dienen, um ein Spiel des Schaltseils (415, 417) und des Schaltseilsystems (414, 416) umfassend das Schaltseil (415, 417) aufzufangen, wenn sich die Bewegungsrichtung des drehbaren Abschnitts (412, 412c, 413) von einer ersten Richtung in eine zweite Richtung entgegengesetzt der ersten Richtung ändert.

6. Stellglied (408, 410) gemäß einem der Ansprüche 2 bis 5, wobei die Federrasterung (494, 494a) so angeordnet ist, um zwischen vorbestimmten Grenzen (486, 488) versetzbar zu sein, um einen Überschaltungsschritt des Schaltseils (415, 417) bereitzustellen.

7. Stellglied (408, 410) gemäß einem der Ansprüche 2 bis 6, wobei der Indizierfortsatz (502, 502a) mit den Rastvertiefungen (482, 482a) in einem primären Rastensystem (480, 480a, 502, 502a) zusammenarbeitet, um eine Fahrradantriebskette auf entsprechenden Ritzeln anzuordnen;
wobei das Stellglied (408, 410) des Weiteren ein sekundäres Rastensystem (490, 490a, 498, 498a, 500) umfasst, wobei die Rastfeder (494, 494a) ein zweites Fortsatzmittel (498, 498a, 500) aufweist, welches mit wenigstens einer Vertiefung (490, 490a) im Dorn (421, 421a) zusammenwirkt, um wenigstens zwei eingerastete Positionen für die Rastfeder (494, 494a) bereitzustellen;
wobei dem primären Rastensystem (480, 480a, 502, 502a) über dem sekundären Rastensystem (490, 490a, 498, 498a, 500) Priorität eingeräumt ist, so dass der drehbare Abschnitt (412, 413) zuerst die Rastfeder (494, 494a) relativ zum Dorn (421, 421a) bewegt, bevor das primäre Rastensystem (480, 480a, 502, 502a) die Bewegung des drehbaren Abschnitts relativ zur Rastfeder (494, 494a) gestattet.

8. Stellglied (408, 410) gemäß einem der Ansprüche 1 bis 7, wobei die zweite Achse (468) um 90 Grad winkelig zur ersten Achse (466) versetzt ist.

9. Stellglied gemäß Anspruch 1, des Weiteren **gekennzeichnet dadurch, dass** das Stellglied ein die Gänge bestimmendes Rastenmittel (480, 480a, 534) umfasst, welches sich aus dem Zusammenspiel der Struktur (421, 524), welche relativ zur Fahrradlenkstange (402) feststeht, und der drehbaren Struktur (480, 480a, 530) ausbildet, welche eines von dem Drehelement (412, 412c, 413) und der Klinkenspule (436, 436c) umfasst.

10. Stellglied gemäß Anspruch 9, wobei das Rastenmittel (480, 480a, 534) einen Rastfortsatz (502, 502a, 542) und eine Feder (494, 494a, 544) in einer der feststehenden und drehbaren Strukturen (421, 421a, 480, 480a, 524) und eine gekrümmte Reihe von beabstandeten Kerben (482, 482a, 538) in der anderen der Strukturen (480, 480a, 530) umfasst.

11. Stellglied gemäß Anspruch 2, wobei die Rastfeder (494, 494a) eine längliche Blattfeder umfasst.

12. Stellglied gemäß Anspruch 1, wobei das Schaltseil (415, 417) betätigt wird, um ein Schaltwerk (54, 56) mit einer Rückholfeder (98) zu betätigen, wobei ein Nocken (458, 458c) auf einem von dem Drehelement und der Klinkenspule (436, 436c) im Wesentlichen den Kraftanstieg der Schaltwerksrückholfeder (98) in eine Hinunterschaltrichtung kompensiert.

13. Fahrradgangschaltsystem, umfassend:
das Stellglied gemäß einem der vorangehenden Ansprüche; und
ein Schaltwerk (54, 56), welches einsatzbereit einer Mehrzahl von Zahnrädern (48, 52) zugeordnet ist, die auf einer Achse (38, 44) befestigt sind, eine Antriebskette (50) des Fahrrads (400), die durch das Schaltwerk (54, 56) von jedem der Zahnräder (48, 52) auf jedes andere der Zahnräder (48, 52) bewegbar ist, ein Schaltseil (415, 417), das ein erstes Ende mit dem Schaltwerk (54, 56) verbunden aufweist,
wobei die Verschiebung des Schaltseils (415, 417) um einen vorbestimmten Betrag das Schaltwerk (54, 56) betätigt, um zwischen einem eingelegten Gangzahnrad (48, 52) und einem gewählten anderen Gangzahnrad (48, 52) zu schalten.

14. System gemäß Anspruch 13 und des Weiteren **dadurch gekennzeichnet, dass** das Stellglied ein die Gänge bestimmendes Rastenmittel (480, 480a, 534) umfasst, welches sich aus dem Zusammenspiel der Struktur (421, 524), welche relativ zur Fahrradlenkstange (402) feststeht, und der drehbaren Struktur (480, 480a, 530) ausbildet, welche ein vorgewähltes von dem Drehelement (412, 412c, 413) und der Klinkenspule (436, 436c) umfasst, wobei das Rastenmittel (480, 480a, 534) bogenförmig verschiebbar in einer der Strukturen zwischen einer ersten, Hinaufschaltposition und einer zweiten, Hinunterschaltposition ist.

15. System gemäß Anspruch 13 oder 14, wobei das Schaltwerk (54, 56) eine Rückholfeder (98) umfasst, welche das Schaltseil (415, 417) in Richtung zum Schaltwerk (54, 56) vorspannt, wobei ein Nocken (458, 458c) auf einem von dem Drehelement und der Klinkenspule (436c) im Wesentlichen den Kraftanstieg der Schaltwerksrückholfeder (98) in eine Hinunterschaltrichtung kompensiert.

16. System gemäß einem der Ansprüche 13 bis 15 und des Weiteren umfassend einen Nocken auf einem von dem Drehelement und der Klinkenspule, wobei der Nocken ein Spiel im Schaltwerk (54, 56) und im Schaltseil (415, 417) kompensiert.

17. System gemäß Anspruch 13 oder 14, wobei das Schaltwerk (54, 56) eine Rückholfeder (98) umfasst, welche das Schaltseil (415, 417) in Richtung des Schaltwerks (54, 56) vorspannt, wobei ein Nocken (458, 458a) auf einem von dem Drehelement und der Klinkenspule das Schaltwerk (54, 56) veranlasst, einen gewissen Weg über ein Zielritzel in einem Hinunterschaltfall hinauszuschalten, so dass die Kette das Zielritzel aus der gleichen Richtung ansteuert, wie sie dies in einem Hinaufschaltfall tun würde.

## Revendications

1. Dispositif de changement de vitesse à poignée rotative (408, 408c, 410) pour dérailleur de bicyclette pour une utilisation sur une bicyclette à vitesses multiples (400) comprenant un dérailleur de changement de vitesse actionné par déplacement longitudinal d'un câble de commande (415, 417), le dispositif de changement de vitesse (408, 408c, 410) comprenant un élément de rotation (412, 412c, 413) pouvant être monté sur la partie extérieure du guidon (402) et pouvant être tourné de façon sélective autour d'un premier axe (466) dans un sens de passage à un rapport inférieur, et dans un sens opposé, de passage à un rapport supérieur, dans lequel le premier axe (466) est coaxial avec le guidon (402) ; l'élément de rotation (412, 412c, 413) étant positionné de sorte à être sensiblement vers l'intérieur d'une extrémité du guidon ;
**caractérisé en ce que** le dispositif de changement de vitesse (408, 408c, 410) comprend un enrouleur intermédiaire (436, 436a, 436c) pouvant être tourné autour d'un second axe (468) décalé angulairement par rapport au premier axe (466), une extrémité (460) du câble de commande (415, 417) étant fixée à l'enrouleur intermédiaire (436, 436a, 436c), l'enrouleur intermédiaire (436, 436a, 436c) pouvant être tourné dans un premier sens pour passer à un rapport inférieur dans lequel l'enrouleur intermédiaire (436, 436a, 436c) tire le câble de commande (415, 417) et dans un sens opposé pour passer à un rapport supérieur dans lequel l'enrouleur intermédiaire (436, 436a, 436c) relâche le câble de commande (415, 417) ;
et **en ce qu'**un câble de liaison (448, 448a) distinct du câble de commande (415, 417) est prévu entre l'élément de rotation (412, 412c, 413) et l'enrouleur intermédiaire (436, 436a) de sorte que la rotation de l'élément de rotation (412, 412c, 413) pour passage à un rapport inférieur entraîne la rotation de l'enrouleur intermédiaire (436, 436a) pour passage à un rapport inférieur, et que la rotation de l'élément de rotation (412, 412c, 413) pour passage à un rapport supérieur entraîne la rotation de l'enrouleur intermédiaire (436, 436a, 436c) pour passage à un rapport supérieur.

2. Dispositif de changement de vitesse (408, 410) selon la revendication 1, dans lequel le dispositif de changement de vitesse à poignée (408, 410) comprend en outre un mandrin (421, 421a) monté de manière fixe sur le guidon (402), supportant un ressort d'enclenchement (494, 494a) et autour duquel tourne un élément prédéterminé parmi ledit élément de rotation (412, 412c, 413) et ledit enrouleur intermédiaire (436, 436a, 436c) de sorte à former une partie tournante, le ressort d'enclenchement (494, 494a) comprenant une partie saillante d'alignement (502, 502a) sur sa surface, la partie de rotation du dispositif de changement de vitesse (408, 410) comprenant une série de parties concaves d'enclenchement (482, 482a) sur sa surface qui peuvent s'enclencher avec la partie saillante d'alignement (502, 502a) afin de maintenir de façon sélective le dispositif de changement de vitesse (408, 410) dans une position de changement de vitesse souhaitée.

3. Dispositif de changement de vitesse (408, 410) selon la revendication 2, dans lequel ladite bicyclette comprend une pluralité de pignons (48, 52) pour venir en prise sélective avec une chaîne de transmission (50), le nombre de parties concaves d'enclenchement (482a, 538) correspondant au nombre de pignons (48, 52).

4. Dispositif de changement de vitesse (408, 410) selon la revendication 3, dans lequel le dispositif de changement de vitesse (408, 410) peut être adapté pour une utilisation avec un système de changement de vitesse de bicyclette dans lequel une tension prédéfinie est exercée sur le câble de commande (415, 417), les parties concaves d'enclenchement (482, 482a) présentant chacune une rampe (360) pour passage au rapport inférieur et une rampe (362) pour passage au rapport supérieur, chacune des rampes (360) pour passage au rapport inférieur ayant un angle d'inclinaison plus faible que chacune des rampes (362) pour passage au rapport supérieur.

5. Dispositif de changement de vitesse (408, 410) selon l'une quelconque des revendications 2 à 4, dans lequel le ressort d'enclenchement (494, 494a) est prévu de sorte à pouvoir être déplacé entre des limites prédéfinies (486, 488) assurant une compensation pour la partie tournante (412, 412c, 413) afin de rattraper des mouvements morts du câble de commande (415, 417), et un système à câble de commande (414, 416), y compris le câble de commande (415, 417) lorsque le sens de déplacement de la partie tournante (412, 412c, 413) passe d'un premier sens à un second sens opposé au premier sens.

6. Dispositif de changement de vitesse (408, 410) selon l'une quelconque des revendications 2 à 5, dans lequel le ressort d'enclenchement (494, 494a) est prévu de sorte à pouvoir être déplacé entre des limites prédéfinies (486, 488) pour permettre une incrémentation de surcourse du mouvement du câble de commande (415, 417).

7. Dispositif de changement de vitesse (408, 410) selon l'une quelconque des revendications 2 à 6, dans lequel la partie saillante d'alignement (502, 502a) coopère avec les parties concaves d'enclenchement (482, 482a) dans un système d'enclenchement primaire (480, 480a, 502, 502a) pour placer une chaîne de transmission de bicyclette sur les pignons correspondants ;
ledit dispositif de changement de vitesse (408, 410) comprenant en outre un système d'enclenchement secondaire (490, 490a, 498, 498a, 500) dans lequel le ressort d'enclenchement (494, 494a) comporte une deuxième partie saillante (498, 498a, 500) coopérant avec au moins une encoche (490, 490a) dans le mandrin (421, 421a) afin de créer au moins deux positions enclenchées pour le ressort d'enclenchement (494, 494a) ;
le système d'enclenchement primaire (480, 480a, 502, 502a) étant prioritaire sur le système d'enclenchement secondaire (490, 490a, 498, 498a, 500) de sorte que la partie tournante (412, 413) déplace d'abord le ressort d'enclenchement (494, 494a) par rapport au mandrin (421, 421a) avant que le système d'enclenchement primaire (480, 480a, 502, 502a) n'autorise le mouvement de la partie tournante par rapport au ressort d'enclenchement (494, 494a).

8. Dispositif de changement de vitesse (408, 410) selon l'une quelconque des revendications 1 à 7, dans lequel ledit second axe (468) est décalé angulairement par rapport audit premier axe (466) de 90 degrés.

9. Dispositif de changement de vitesse selon la revendication 1, **caractérisé en ce que** ledit dispositif de changement de vitesse comprend des moyens d'enclenchement de choix de rapport de vitesse (480, 480a, 534) obtenus par l'interaction de la structure (421, 524) fixe par rapport au guidon (402) de la bicyclette et de la structure tournante (480, 480a, 530) comprenant un élément parmi ledit élément de rotation (412, 412c, 413) et ledit l'enrouleur intermédiaire (436, 436c).

10. Dispositif de changement de vitesse selon la revendication 9, dans lequel lesdits moyens d'enclenchement (480, 480a, 534) comprennent une partie saillante d'alignement (502, 502a, 542) et un ressort (494, 494a, 544) dans l'une desdites structures fixe et tournante (421, 421a, 480, 480a, 524), et une série arquée d'encoches d'enclenchement espacées (482, 482a, 538) dans l'autre desdites structures (480, 480a, 530).

11. Dispositif de changement de vitesse selon la revendication 2, dans lequel ledit ressort d'enclenchement (494, 494a) est constitué par un ressort à lames allongées.

12. Dispositif de changement de vitesse selon la revendication 1, dans lequel ledit câble de commande (415, 417) peut être utilisé pour actionner un dérailleur (54, 56) comportant un ressort de rappel (98), une came (458, 458c) sur un élément parmi ledit élément de rotation et ledit enrouleur intermédiaire (436, 436c) compensant sensiblement la force croissante du ressort de rappel (98) du dérailleur dans un sens de passage à un rapport inférieur.

13. Système de changement de vitesse pour bicyclette, comprenant :
le dispositif de changement de vitesse selon l'une quelconque des revendications précédentes ; et
un dérailleur (54, 56) associé fonctionnellement à une pluralité de pignons (48, 52) fixés sur un axe (38, 44), une chaîne de transmission (50) de ladite bicyclette (400) pouvant être déplacée par ledit dérailleur (54, 56) depuis l'un quelconque desdits pignons (48, 52) vers un quelconque autre desdits pignons (48, 52), un câble de commande (415, 417) dont une première extrémité est reliée fonctionnellement audit dérailleur (54, 56), le déplacement dudit câble de commande (415, 417) d'une valeur prédéfinie actionnant ledit dérailleur (54, 56) pour passer du pignon courant parmi lesdits pignons (48, 52) vers un autre pignon sélectionné parmi lesdits pignons (48, 52).

14. Système selon la revendication 13, et **caractérisé en outre en ce que** ledit dispositif de changement de vitesse comprend des moyens d'enclenchement de choix de rapport de vitesse (480, 480a, 534) obtenus par l'interaction de la structure (421, 524) fixe par rapport au guidon (402) de la bicyclette et de la structure tournante (480, 480a, 530) comprenant un élément présélectionné parmi l'élément de rotation (412, 412c, 413) et l'enrouleur intermédiaire (436, 436c), lesdits moyens d'enclenchement (480, 480a, 534) pouvant être déplacés sur une courbe dans une desdites structures entre une première position de passage à un rapport supérieur et une seconde position de passage à un rapport inférieur.

15. Système selon les revendications 13 ou 14, dans lequel ledit dérailleur (54, 56) comprend un ressort de rappel (98) rappelant ledit câble de commande (415, 417) vers ledit dérailleur (54, 56), une came (458, 458c) sur un élément parmi ledit élément de rotation et ledit enrouleur intermédiaire (436c) afin de compenser sensiblement la force croissante exercée par le ressort de rappel (98) du dérailleur dans un sens de passage à un rapport inférieur.

16. Système selon l'une quelconque des revendications 13 à 15, et comprenant en outre une came sur un élément parmi ledit élément de rotation et ledit enrouleur intermédiaire, ladite came assurant un rattrapage des mouvements morts dans ledit dérailleur (54, 56) et ledit câble de commande (415, 417).

17. Système les revendications 13 ou 14, dans lequel ledit dérailleur (54, 56) comprend un ressort de rappel (98) rappelant ledit câble de commande (415, 417) vers ledit dérailleur (54, 56), une came (458, 458a) sur un élément parmi ledit élément de rotation et ledit enrouleur intermédiaire et entraînant la surcourse du dérailleur (54, 56) d'une certaine valeur au-delà d'un pignon de destination dans le cas d'un passage à un rapport inférieur de telle sorte que la chaîne se rapproche du pignon de destination selon un sens identique à celui suivi dans le cas d'un passage à un rapport supérieur.
